(19) Europäisches Patentamt
European Patent Office
Office européen des brevets

(11) EP 2 603 533 B1

(12) **EUROPÄISCHE PATENTSCHRIFT**

(45) Veröffentlichungstag und Bekanntmachung des Hinweises auf die Patenterteilung:
**25.01.2017 Patentblatt 2017/04**

(21) Anmeldenummer: **11743052.0**

(22) Anmeldetag: **05.08.2011**

(51) Int Cl.:
***C08C 19/02*** $^{(2006.01)}$ ***C08C 19/08*** $^{(2006.01)}$
***C08K 3/00*** $^{(2006.01)}$ ***C08K 5/14*** $^{(2006.01)}$
***C08L 15/00*** $^{(2006.01)}$

(86) Internationale Anmeldenummer:
**PCT/EP2011/063570**

(87) Internationale Veröffentlichungsnummer:
**WO 2012/019978 (16.02.2012 Gazette 2012/07)**

(54) **TEILHYDRIERTE NITRILKAUTSCHUKE**

PARTIALLY HYDROGENATED NITRILE RUBBERS

CAOUTCHOUCS NITRILES PARTIELLEMENT HYDROGÉNÉS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.08.2010 EP 10172314**

(43) Veröffentlichungstag der Anmeldung:
**19.06.2013 Patentblatt 2013/25**

(73) Patentinhaber: **ARLANXEO Deutschland GmbH**
**41540 Dormagen (DE)**

(72) Erfinder:
- **OBRECHT, Werner**
  **47477 Moers (DE)**
- **MUELLER, Julia Maria**
  **89134 Blaustein (DE)**
- **SCHNEIDER, Martin**
  **80939 München (DE)**
- **NUYKEN, Oskar**
  **81927 München (DE)**

(74) Vertreter: **Bohrn, Ulrich Thomas et al**
**LANXESS Deutschland GmbH**
**LEX-IPR**
**Kennedyplatz 1**
**50569 Köln (DE)**

(56) Entgegenhaltungen:
**EP-A1- 1 426 383**
**WO-A1-02/057350**
**WO-A1-2004/035669**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 603 533 B1

## Beschreibung

Die vorliegende Erfindung betrifft neue teilhydrierte Nitrilkautschuke, die sich durch ein spezielles Verhältnis von Viskosität und Molekulargewicht auszeichnen, darauf basierende vulkanisierbare Mischungen und Vulkanisate sowie die dazugehörigen Herstellungsverfahren. Metathese-Reaktionen werden umfangreich im Rahmen verschiedenster chemischer Umsetzungen eingesetzt, z.B. in Ringschlussmetathesen (RCM), Kreuzmetathesen (CM), Ringöffnungsmetathesen (ROM), ringöffnende Metathesepolymerisationen (ROMP), acyclische Dien Metathese-Polymerisationen (ADMET), Selbstmetathese, Umsetzung von Alkenen mit Alkinen (enin-Reaktionen), Polymerisation von Alkinen und Olefinierung von Carbonylen (WO-A-97/06185 und Platinum Metals Rev., 2005, 49(3), 123-137). Anwendung finden Metathese-Reaktionen z.B. zur Olefin-Synthese, zur ringöffnenden Polymerisation von Norbornenderivaten, zur Depolymerisation ungesättigter Polymere und zur Synthese von Telechelen.

Der Metatheseabbau von Polybutadien wird nach WO 2006/127483 zur Herstellung von funktionalisiertem Polybutadien mit Molmassen von 7.500 bis 100.000 g/mol in Gegenwart eines funktionalisierten acyclischen Diens durchgeführt. Hierfür wird Polybutadien vor dem Metatheseabbau teilweise hydriert wird, so dass weniger als 0,5 mol%, vorzugsweise weniger als 0,25 mol% vinylischer Doppelbindungen im Polymer verbleiben. Das für den Metatheseabbau eingesetzte acyclische Dien weist eine oder zwei funktionelle Gruppen, insbesondere Alkoxysilangruppen auf und wird in Mengen von 0,0001 bis 1 mol% bezogen auf 1 Mol Doppelbindungen eingesetzt.

Um Nitrilkautschuke ("NBR") mit guter Verarbeitbarkeit zu erhalten, hat es sich bewährt, die Nitrilkautschuke einem Metatheseabbau zu unterwerfen, durch den eine Verringerung des Molekulargewichts erfolgt. Dieser Metatheseabbau ist z.B. aus WO-A-02/100905, WO-A-02/100941 und WO-A-03/002613 bekannt. Häufig werden dabei niedermolekulare 1-Olefine zugesetzt. Die Metathesereaktion wird zweckmäßigerweise im gleichen Lösungsmittel wie die Hydrierreaktion durchgeführt, damit man den abgebauten Nitrilkautschuk nach Beendigung der Metathese nicht aus dem Lösungsmittel isolieren muss, bevor man ihn der nachfolgenden Hydrierung unterwirft. Für die Katalyse der Metathese-Abbaureaktion verwendet man Metathesekatalysatoren, die gegenüber polaren Gruppen, insbesondere gegenüber Nitrilgruppen, tolerant sind.

In der WO-A-02/100905 und der WO-A-02/100941 wird ein Verfahren beschrieben, welches den Abbau von Nitrilkautschuk-Ausgangspolymeren durch Metathese und eine anschließende Hydrierung zu hydrierten Nitrilkautschuken ("HNBR") mit niedrigerer Mooney-Viskosität umfasst. Hierbei wird ein Nitrilkautschuk zunächst in Gegenwart eines niedermolekularen Olefins, das in der Literatur häufig auch als "Co-Olefin" bezeichnet wird, und spezieller Komplexkatalysatoren auf Osmium-, Ruthenium-, Molybdän- oder Wolfram-Basis umgesetzt und in einem 2. Schritt hydriert. Erhältlich sind auf diesem Weg HNBR mit einem Gewichtsmittel des Molekulargewichts ($M_w$) im Bereich von 30.000 - 250.000, einer Mooney-Viskosität (ML 1+4 bei 100 °C) im Bereich von 3 - 50 Mooney Einheiten und einem Polydispersitätsindex PDI von kleiner 2.5.

In den vergangenen Jahren wurden verschiedene Katalysator-Strukturen bzw. Katalysatorklassen mit prinzipieller Eignung zur Metathese beschrieben, die aber nicht zwangsläufig auch für die Metathese von Nitrilkautschuk geeignet sind.

Metathesekatalysatoren sind unter anderem aus der WO-A-96/04289 und WO-A-97/06185 bekannt. Sie besitzen die folgende prinzipielle Struktur:

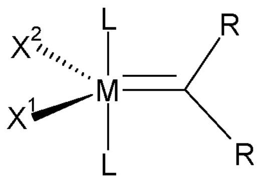

worin M Osmium oder Ruthenium bedeutet, R für gleiche oder verschiedene organische Reste mit großer struktureller Variationsbreite steht, $X^1$ und $X^2$ anionische Liganden bedeuten und L neutrale Elektronen-Donoren darstellt. Unter dem Begriff "anionische Liganden" werden in der Literatur für derartige Metathese-Katalysatoren immer solche Liganden verstanden, die, wenn man sie als vom Metall-Zentrum entfernt betrachtet, bei geschlossener Elektronenschale negativ geladen sind.

Besonders hervorzuheben ist der nachfolgend dargestellte Katalysator Bis(tricyclohexylphosphin) benzylidenrutheniumdichlorid (der sogenannte "Grubbs (I)" Katalysator).

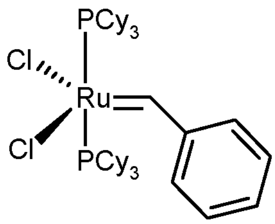

**Grubbs (I) Katalysator**

Katalysatoren auf Ruthenium- und Osmium-Basis, die sich für den Metatheseabbau von NBR eignen, sind in EP-A-1 760 093, EP-A-1 826 220, EP 2 028 194 und EP-A-2 027 920 beschrieben.

Zur Steigerung der Aktivität der beim Metatheseabbau von Nitrilkautschuk eingesetzten Katalysatoren sind im Stand der Technik unterschiedlichste Zusätze bekannt: EP-A-1 825 913 beschreibt eine Aktivitätssteigerung durch Zugabe verschiedener Salze, EP-A-1 894 946 durch Zusatz von Phosphanen, EP-A-2 027 919 durch Zusatz von Erdalkalihalogeniden, EP-A-2030988 durch Zusatz von Übergangsmetallalkoxiden, EP-A-2 145 681 durch Zusatz von $BF_3$-Addukten und EP-A-2 145 680 durch Zusatz von Borsäureestern.

Allen zuvor genannten Verfahren zum Metatheseabbau von Nitrilkautschuk ist gemeinsam, dass nicht hydrierter Nitrilkautschuk vorzugsweise unter Verwendung von 1-Olefinen als sogenannten Co-Olefinen mit Metathesekatalysatoren behandelt wird, wobei das Molekulargewicht des Nitrilkautschuks reduziert und die Breite der Molmassenverteilung enger wird (erkennbar an geringeren Werten des Polydispersitätsindexes PDI= Mw/Mn, wobei Mw das Gewichtsmittel des Molekulargewichts und Mn das Zahlenmittel des Molekulargewichts darstellt). Die durch Hydrierung dieser metathetisch abgebauten Nitrilkautschuke erhaltenen hydrierten Nitrilkautschuke weisen in Kautschukmischungen eine verbesserte Verarbeitbarkeit z.B. eine verbesserte Formfüllung beim Spritzgießen auf. Nach einer peroxidischen Vernetzung derartiger Kautschukmischungen werden allerdings im Vergleich zu hydrierten Nitrilkautschuken, die ohne Metatheseabbaus hergestellt wurden, Vulkanisate mit niedrigerer Shore-A Härte, niedrigerem Modulniveau bei unterschiedlichen Dehnungen sowie niedrigeren Reißfestigkeiten erhalten (R. Parg, C. Wrana, D. Achten, Vortrag beim Kautschuk-Herbst-Kolloquium in Hannover, November 2004 "Therban® Advanced Technology - The new low molecular weight NBR"; J. Ismeier, Vortrag bei der DKG-Tagung der Bezirksgruppe Süd- und Südwestdeutschland am 02.06.2005 "Therban® AT - Ein neues Polymer für Dichtungen im Motorraum"). Bisher ist kein Verfahren bekannt, das die Herstellung von hydriertem Nitrilkautschuk mit verbessertem Verarbeitungsverhalten ohne gleichzeitig verschlechterte mechanische Eigenschaften ermöglicht.

Aus WO-A-00/71554 ist eine Gruppe von Katalysatoren bekannt, die in der Fachwelt als "Grubbs (II) Katalysatoren" bezeichnet werden. Aus der EP-A-1 426 383 ist es bekannt, einen solchen "Grubbs(II) Katalysator" wie z.B. den nachfolgenden Katalysator 1,3-Bis (2,4,6-trimethylphenyl)-2-imidazolidinyliden) (tricyclohexylphosphin)-ruthenium(phenyl-methylen)dichlorid für die Metathese von Nitrilkautschuk ohne Zusatz eines Co-Olefins einzusetzen.

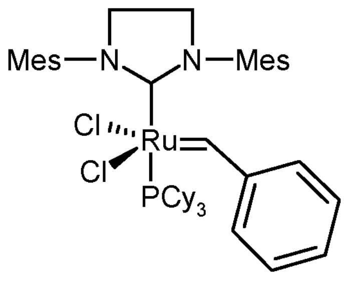

**Grubbs (II) Katalysator**

Nach anschließender Hydrierung, die bevorzugt im gleichen Lösungsmittel wie die Metathese durchgeführt wird, weist der hydrierte Nitrilkautschuk niedrigere Molekulargewichte und eine engere Molekulargewichtsverteilung (PDI) auf als bei Verwendung von Katalysatoren des Grubbs-(I)-Typs sowie reduzierte Mischungsviskositäten und daher eine bessere Verarbeitbarkeit auf. Allerdings zeigen auch die durch peroxidische Vernetzung hergestellten Vulkanisate auf Basis dieser hydrierten Nitrilkautschuke ein reduziertes Modulniveau und niedrigere Reißfestigkeiten verglichen mit Vulkanisaten auf Basis höhermolekularerer hydrierter Nitrilkautschuke.

Bisher sind keine Maßnahmen bekannt geworden, die eine Verbesserung der Verarbeitbarkeit von hydriertem

Nitrilkautschuk, in Form einer reduzierten Moneyviskosität des hydriertem Nitrilkautschuks als solchem bzw. der ihn enthaltenden Kautschukmischungen, ermöglichen, ohne dass dies mit Einbußen in den Vulkanisateigenschaften (Shore A Härte, Spannungswerte bei unterschiedlichen Dehnungen, Bruchfestigkeit, Reißdehnung, Abrieb und Heat-build-up bei dynamischer Beasnpruchung) verbunden ist.

**Die Aufgabe der vorliegenden Erfindung** bestand darin, hydrierte Nitrilkautschuke bereitzustellen, die sich gut und leicht mit anderen Bestandteilen vermischen und verarbeiten lassen und trotzdem nach peroxidischer Vulkanisation zu Vulkanisaten führen, die ein hohes Niveau der mechanischen und dynamischen Eigenschaften, insbesondere bzgl. der Shore A Härte, der Spannungswerte bei unterschiedlichen Dehnungen, der Bruchfestigkeit, Reißdehnung, des DIN-Abriebs und des Heat-build-up aufweisen.

Diese Aufgabe wurde gelöst durch erstmalige Bereitstellung teilhydrierter Nitrilkautschuke, die sich durch ein spezielles Verhältnis von Lösungsviskosität zum Gewichtsmittel des Molekulargewichts auszeichnen.

**Gegenstand der Erfindung** sind teilhydrierte Nitrilkautschuke mit Hydriergraden im Bereich von 50 bis 97%, die einen Quotienten aus Lösungsviskosität (LV) dividiert durch das Gewichtsmittel des Molekulargewichts (Mw) im Bereich von $4*10^{-3}$ bis $50*10^{-3}$ Pa*s*mol/kg aufweisen.

Die erfindungsgemäßen teilhydrierten Nitrilkautschuke besitzen bevorzugt einen Hydriergrad im Bereich von 52,5 bis 96,5%, besonders bevorzugt 55 bis 96%, ganz besonders bevorzugt 57,7 bis 95.5 und insbesondere 60 bis 95 %, und weisen einen Quotienten aus Lösungsviskosität (LV) dividiert durch das Gewichtsmittel des Molekulargewichts (Mw) im Bereich von $5*10^{-3}$ bis $45*10^{-3}$ Pa*s*mol/kg, besonders bevorzugt $5*10^{-3}$ bis $40*10^{-3}$ Pa*s*mol/kg, ganz besonders bevorzugt von $6*10^{-3}$ bis $35*10^{-3}$ Pa*s*mol/kg und insbesondere $6,5*10^{-3}$ bis $30*10^{-3}$ Pa*s*mol/kg auf.

Bereitgestellt werden teilhydrierte Nitrilkautschuke mit Hydriergraden im Bereich von 50 bis 97%, die einen Quotienten aus Lösungsviskosität (LV) dividiert durch das Gewichtsmittel des Molekulargewichts (Mw) im Bereich von $4*10^{-3}$ bis $30*10^{-3}$ Pa*s*mol/kg aufweisen, bevorzugt $5*10^{-3}$ bis $30*10^{-3}$ Pa*s*mol/kg.

Die erfindungsgemäßen teilhydrierten Nitrilkautschuke weisen eine vorteilhaft geringe Lösungsviskosität auf und zeigen im unvulkanisierten Zustand sowohl in Form der Rohkautschuke als auch in Form hieraus hergestellter Kautschukmischungen ein signifikant verbessertes Vearbeitungsverhalten, ohne dass Einbußen in den mechanischen und dynamischen Vulkanisateigenschaften (Shore-A Härte, Spannungen bei unterschiedlichen Dehnungen, Zugfestigkeit, Bruchdehnung DIN-Abrieb und Heat-build-up) beobachtet werden.

**Gegenstand der Erfindung** ist daher ferner ein Verfahren zur Herstellung der erfindungsgemäßen teilhydrierten Nitrilkautschuke, welches dadurch gekennzeichnet ist, dass teilhydrierte Nitril-kautschuke mit Hydriergraden im Bereich von 50 bis 97% in Gegenwart eines Komplexkatalysators auf Basis eines Metalls der 6. oder 8. Nebengruppe des Periodensystems, der mindestens einen carbenartig an das Metall gebundenen Liganden aufweist, einer Metathese-Reaktion unterzogen werden, wobei während der Metathese-Reaktion des teilhydrierten Nitrilkautschuks $C_2$-$C_{16}$-Olefine maximal in einer Menge von in Summe 2 phr zugegeben sind.

In einer Ausführungsform der Erfindung wird ein Verfahren zur Herstellung teilhydrierter Nitrilkautschuke mit einem Hydriergrad im Bereich von 50 bis 97%, die einen Quotienten aus Lösungsviskosität (LV) dividiert durch das Gewichtsmittel des Molekulargewichts (Mw) im Bereich von $4*10^{-3}$ bis $30*10^{-3}$ Pa*s*mol/kg aufweisen, bereitgestellt, welches dadurch gekennzeichnet ist, dass teilhydrierte Nitril-kautschuke mit Hydriergraden im Bereich von 50 bis 97% in Gegenwart eines Komplexkatalysators auf Basis eines Metalls der 6. oder 8. Nebengruppe des Periodensystems, der mindestens einen carbenartig an das Metall gebundenen Liganden aufweist, einer Metathese-Reaktion unterzogen werden, wobei die Metathesee im wesentlichen frei von $C_2$-$C_{16}$-Olefinen erfolgt.

**Gegenstand der Erfindung** sind ferner vulkanisierbare Mischungen enthaltend die erfindungsgemäßen teilhydrierten Nitrilkautschuke und mindestens einen peroxidischen Vernetzer sowie optional mindestens einen Füllstoff und optional ein oder mehrere weitere Additive sowie die Herstellung dieser vulkanisierbaren Mischungen.

**Gegenstand der Erfindung** ist darüber hinaus ein Verfahren zur Herstellung von Vulkanisaten, indem man die erfindungsgemäßen vulkanisierbaren Mischungen einer erhöhten Temperatur aussetzt und vernetzt.

**Weiterer Gegenstand der Erfindung** sind die dabei erhaltenen Vulkanisate.

Im Rahmen dieser Anmeldung wird unter "im wesentlichen frei von $C_2$-$C_{16}$-Olefinen" verstanden, dass während der Metathese Reaktion des teilhydrierten Nitrilkautschuks $C_2$-$C_{16}$-Olefine maximal in einer Menge von in Summe 2 phr zugegen sind, d.h. 2 Gew.-Teile bezogen auf 100 Gew.-Teile des teilhydrierten Nitrilkautschuks. Bevorzugt sind bei der Metathese-Reaktion derartige $C_2$-$C_{16}$-Olefine, die geradkettige und verzweigte umfassen, insbesondere Ethylen, Propylen, Isobuten, Styrol, 1-Hexen oder 1-Octen, maximal in einer Menge von in Summe maximal 1,5 phr, besonders bevorzugt maximal 1,0 phr, ganz besonders bevorzugt maximal 0,5 phr und insbesondere maximal 0,25 phr zugegen.

Im Rahmen dieser Anmeldung können alle zuvor und im Folgenden genannten, allgemeinen oder in Vorzugsbereichen genannten Definitionen von Resten, Parametern oder Erläuterungen untereinander, also auch zwischen den jeweiligen Bereichen und Vorzugsbereichen in beliebiger Weise kombiniert werden.

Der im Rahmen dieser Anmeldung im Zusammenhang mit den verschiedenen Typen von Metathese-Katalysatoren oder sonstigen Verbindungen mit allgemeinen Formeln verwendete Begriff "substituiert" bedeutet, dass ein Wasserstoff-Atom an dem angegebenen Rest oder Atom durch eine der jeweils genannten Gruppen ersetzt ist, mit der

Maßgabe, dass die Wertigkeit des angegebenen Atoms nicht überschritten wird und die Substitution zu einer stabilen Verbindung führt.

Im Rahmen dieser Anmeldung wird unter einem "teilhydrierten Nitrilkautschuk mit einem Hydriergrad von x %" verstanden, dass in diesem Nitrilkautschuk x% der C=C Doppelbindungen, die ursprünglich in den einpolymerisierten Dien-Monomeren des Nitrilkautschuks vorlagen, hydriert sind. Dieser Hydriergrad wird IR spektroskopisch gemäß Kautschuke + Gummi Kunststoffe, Vol. 42 (1989) No. 2, 107-110 **(Part 1)** sowie Kautschuke + Gummi Kunststoffe, Vol 42 (1989) No. 3,194-197 **(Part 2)** bestimmt.

**Eingesetzter teilhydrierter Nitrilkautschuk:**

Im erfindungsgemäßen Herstellverfahren werden teilhydrierte Nitrilkautschuke mit Hydriergraden im Bereich von 50 bis 97%, bevorzugt 52,5 bis 96,5%, besonders bevorzugt 55 bis 96%, ganz besonders bevorzugt 57,7 bis 95.5 und insbesondere 60 bis 95 % eingesetzt.

Diese teilhydrierten Nitrilkautschuke enthalten Wiederholungseinheiten, die sich von mindestens einem konjugierten Dien und mindestens einem α,β-ungesättigten Nitril ableiten, wobei die C=C Doppelbindungen der einpolymerisierten Dien-Wiederholungseinheiten zu mindestens 50% bis zu maximal 97 %, bevorzugt zu mindestens 52,5 bis zu 96,6 %, besonders bevorzugt zu mindestens 55 bis zu 96 %, ganz besonders bevorzugt zu mindestens 57,5 % bis zu 96,5 % und insbesondere zu mindestens 60 bis zu 95% hydriert sind.

Im erfindungsgemäßen Verfahren können ferner teilhydrierte Nitrilkautschuke eingesetzt werden, die den zuvor genannten Bedingungen genügen und zusätzlich Wiederholungseinheiten enthalten, die sich von einem oder mehreren weiteren copolymerisierbaren Termonomeren ableiten.

Das **konjugierte Dien** kann von jeder Natur sein. Bevorzugt werden ($C_4$-$C_6$) konjugierte Diene eingesetzt. Besonders bevorzugt sind 1,3-Butadien, Isopren, 2,3-Dimethylbutadien, Piperylen oder Gemische daraus. Insbesondere bevorzugt sind 1,3-Butadien und Isopren oder Gemische daraus. Ganz besonders bevorzugt ist 1,3-Butadien.

Als **α,β-ungesättigtes Nitril** kann jedes bekannte α,β-ungesättigte Nitril eingesetzt werden, bevorzugt sind ($C_3$-$C_5$)-α,β-ungesättigte Nitrile wie Acrylnitril, Methacrylnitril, Ethacrylnitril oder Mischungen davon. Besonders bevorzugt ist Acrylnitril.

Als weitere copolymerisierbare Termonomere können beispielsweise **aromatische Vinylmonomere,** bevorzugt Styrol, α-Methylstyrol und Vinylpyridin, **fluorhaltige Vinylmonomere,** bevorzugt Fluorethylvinylether, Fluorpropylvinylether, o-Fluormethylstyrol, Vinylpentafluorbenzoat, Difluoroethylen und Tetrafluoroethylen, oder auch **copolymerisierbare Antiageing Monomere,** bevorzugt N-(4-anilinophenyl) acrylamid, N-(4-anilinophenyl)methacrylamid, N-(4-anilinphenyl) cinnamid, N-(4-anilinophenyl) crotonamid, N-phenyl-4-(3-vinyl-benzyl oxy)anilin und N-phenyl-4-(4-vinylbenzyloxy) anilin eingesetzt werden sowie **nicht-konjugierte** Diene, wie 4-Cyanocyclohexen und 4-Vinylcyclohexen, oder auch **Alkine**, wie 1- oder 2-Butin.

Als weitere copolymerisierbare Termonomere können auch ein oder mehrere carboxygruppenhaltige, copolymerisierbare Termonomere eingesetzt werden, z.B. α,β-ungesättigte Monocarbonsäuren, deren Ester, deren Amide, α,β-ungesättigte Dicarbonsäuren, deren Mono- oder -Diester oder deren entsprechenden Anhydride oder Amide.

Als **α,β-ungesättigte Monocarbonsäuren** können bevorzugt Acrylsäure und Methacrylsäure eingesetzt werden. Einsetzbar sind auch **Ester der α,β-ungesättigten Monocarbonsäuren,** bevorzugt deren Alkylester, Alkoxyalkyl- oder Hydroxyalkylester.

Bevorzugt sind **$C_1$-$C_{18}$ Alkylester der α,β-ungesättigten Monocarbonsäuren,** besonders bevorzugt $C_1$-$C_{18}$ Alkylester der Acryl- oder Methacrylsäure, insbesondere bevorzugt Methyl (meth)acrylat, Ethyl(meth)acrylat, Propyl(meth)acrylat, n-Butyl(meth)acrylat, t-Butyl(meth)acrylat, Hexyl(meth)acrylat, 2-Ethyhexyl(meth)acrylat, Octyl(meth)acrylat, n-Dodecyl(meth)acrylat, 2-Propylheptylacrylat und Lauryl(meth)acrylat. Insbesondere wird n-Butylacrylat eingesetzt.

Bevorzugt sind auch **$C_2$-$C_{12}$-Alkoxyalkylester von α,β-ungesättigten Monocarbonsäuren,** besonders bevorzugt **$C_2$-$C_{12}$**-Alkoxyalkylester der Acryl- oder Methacrylsäure, insbesondere Methoxymethyl(meth)acrylat, Methoxyethyl(meth)acrylat, Ethoxyethyl(meth)acrylat und Methoxyethyl(meth)acrylat. Insbesondere wird Methoxyethylacrylat eingesetzt.

Bevorzugt sind auch **$C_1$-$C_{12}$-Hydroxyalkylester der α,β-ungesättigten Monocarbonsäuren,** besonders bevorzugt $C_1$-$C_{12}$-Hydroxyalkylester der Acryl- oder Methacrylsäure, inbesondere 2-Hydroxyethyl(meth)acrylat, 3-Hydroxypropyl-(meth)acrylat und Hydroxy(butyl(meth)acrylat.

Als sonstige Ester der α,β-ungesättigten Monocarbonsäuren werden ferner z.B. Polyethylenglykol (meth)acrylat, Polypropylenglykol(meth)acrylat, Glycidyl(meth)acrylat, Epoxy(meth)acrylat, N-(2-Hydroxyethyl)acrylamide, N-(2-Hydroxymethyl)acrylamide und Urethan(meth)acrylat eingesetzt.

Einsetzbar sind auch Mischungen von Alkylestern, wie z.B. den vorgenannten, mit Alkoxyalkylestern, z.B. den vorgenannten.

Einsetzbar sind auch **Cyanoalkylacrylate** und **Cyanoalkylmethacrylate,** in denen die Zahl der C-Atome in

der Cyanoalkylgruppe 2-12 beträgt, vorzugsweise α-Cyanoethylacrylat, β-Cyanoethylacrylat und Cyanobutylmethacrylat.

Einsetzbar sind auch **Fluor-substituierte Benzylgruppenhaltige Acrylate** oder **Methacrylate,** vorzugsweise Fluorobenzylacrylat, und Fluorobenzylmethacrylat. Einsetzbar sind auch **Fluoroalkylgruppen haltige Acrylate und -Methacrylate,** vorzugsweise Trifluoroethylacrylat und Tetrafluoropropylmethacrylat. Einsetzbar sind auch **Aminogruppenhaltige α,β-ungesättigte Carbonsäureester** wie Dimethylaminomethylacrylat und **Diethylaminoethylacrylat.**

Als copolymerisierbare Monomere können α,β-**ungesättigte Dicarbonsäuren,** bevorzugt Maleinsäure, Fumarsäure, Crotonsäure, Itaconsäure, Citraconsäure und Mesaconsäure, eingesetzt werden.

Eingesetzt werden können auch α,β-**ungesättigte Dicarbonsäureanhydride,** bevorzugt Maleinsäureanhydrid, Itaconsäureanhydrid, Citraconsäureanhydrid und Mesaconsäureanhydrid.

Eingesetzt werden können ferner **Mono- oder Diester** von α,β**-ungesättigten Dicarbonsäuren.** Bei diesen α,β-ungesättigten Dicarbonsäuremono- oder diestern kann es sich z.B. um **Alkyl-,** bevorzugt $C_1$-$C_{10}$-Alkyl, insbesondere Ethyl-, n-Propyl-, iso-Propyl, n-Butyl-, tert.-Butyl, n-Pentyl- oder n-Hexyl-, **Alkoxyalkyl-,** bevorzugt $C_2$-$C_{12}$ Alkoxyalkyl-, besonders bevorzugt $C_3$-$C_8$-Alkoxyalkyl, **Hydroxyalkyl,** bevorzugt $C_1$-$C_{12}$ Hydroxyalkyl-, besonders bevorzugt $C_2$-$C_8$-Hydroxyalkyl, **Cycloalkyl-,** bevorzugt $C_5$-$C_{12}$-Cycloalkyl-, besonders bevorzugt $C_6$-$C_{12}$-Cycloalkyl, **Alkylcycloalkyl-,** bevorzugt $C_6$-$C_{12}$-Alkylcycloalkyl-, besonders bevorzugt $C_7$-$C_{10}$-Alkylcycloalkyl, oder **Arylester,** bevorzugt $C_6$-$C_{14}$-Aryl-Mono- oder -Diester handeln, wobei es sich im Fall der Diester jeweils auch um gleiche oder gemischte Ester handeln kann.

Beispiele von α,β**-ungesättigten Dicarbonsäuremonoestern** umfassen

- Maleinsäuremonoalkylester, bevorzugt Monomethylmaleat, Monoethylmaleat, Monopropyl maleat und Mono-n-butylmaleat;
- Maleinsäuremonocycloalkylester, bevorzugt Monocyclopentylmaleat, Monocyclohexyl maleat und Monocycloheptylmaleat;
- Maleinsäuremonoalkylcycloalkylester, bevorzugt Monomethylcyclopentylmaleat und Monoethylcyclohexylmaleat;
- Maleinsäuremonoarylester, bevorzugt Monophenylmaleat;
- Maleinsäuremonobenzylester, bevorzugt Monobenzylmaleat;
- Fumarsäuremonoalkylester, bevorzugt Monomethylfumarat, Monoethylfumarat, Monopropyl fumarat und Mono-n-butyl fumarat;
- Fumarsäuremonocycloalkylester, bevorzugt Monocyclopentylfumarat, Monocyclohexyl fumarat und Monocycloheptylfumarat;
- Fumarsäuremonoalkylcycloalkylester, bevorzugt Monomethylcyclopentylfumarat und Monoethylcyclohexylfumarat;
- Fumarsäuremonoarylester, bevorzugt Monophenylfumarat;
- Fumarsäuremonobenzylester, bevorzugt Monobenzylfumarat;
- Citraconsäuremonoalkylester, bevorzugt Monomethylcitraconat, Monoethylcitraconat, Monopropylcitraconat und Mono-n-butyl citraconat;
- Citraconsäuremonocycloalkylester, bevorzugt Monocyclopentylcitraconat, Monocyclohexyl citraconat und Monocycloheptylcitraconat;
- Citraconsäuremonoalkylcycloalkylester, bevorzugt Monomethylcyclopentylcitraconat und Monoethylcyclohexylcitraconat;
- Citraconsäuremonoarylester, bevorzugt Monophenylcitraconat;
- Citraconsäuremonobenzylester, bevorzgut Monobenzylcitraconat;
- Itaconsäuremonoalkylester, bevorzugt Monomethylitaconat, Monoethylitaconat, Monopropyl itaconat und Mono-n-butylitaconat;
- Itaconsäuremonocycloalkylester, bevorzugt Monocyclopentylitaconat, Monocyclohexyl itaconat und Monocycloheptylitaconat;
- Itaconsäuremonoalkylcycloalkylester, bevorzugt Monomethylcyclopentylitaconat und Monoethylcyclohexylitaconat;
- Itaconsäuremonoarylester, bevorzugt Monophenylitaconat;
- Itaconsäuremonobenzylester, bevorzugt Monobenzylitaconat.
- Mesaconsäuremonoalkylester, bevorzugt Mesaconsäuremonoethylester;

Als α,β-**ungesättigte Dicarbonsäurediester** können die analogen Diester basierend auf den zuvor genannten Monoestergruppen eingesetzt werden, wobei es sich bei den Estergruppen auch um chemisch verschiedene handeln kann.

Die Anteile an Wiederholungseinheiten im teilhydrierten NBR Polymeren, die auf das konjugierte Dien und das

$\alpha,\beta$-ungesättigte Nitril zurückgehen, können in weiten Bereichen variieren. Der Anteil des oder der Summe der konjugierten Diene liegt üblicherweise im Bereich von 40 bis 90 Gew.-%, bevorzugt im Bereich von 50 bis 85 Gew. %, bezogen auf das Gesamtpolymer. Der Anteil des oder der Summe der $\alpha,\beta$-ungesättigten Nitrile liegt üblicherweise bei 10 bis 60 Gew.-%, bevorzugt bei 15 bis 50 Gew.-%, bezogen auf das Gesamtpolymer. Die Anteile der Monomere summieren sich jeweils zu 100 Gew.-% auf. Die zusätzlichen Termonomere können je nach Art des/der Termonomere in Mengen von 0 bis 40 Gew.%, bezogen auf das Gesamtpolymer, vorliegen. In diesem Fall werden entsprechende Anteile des oder der konjugierten Diene und/oder des oder der $\alpha,\beta$-ungesättigten Nitrile durch die Anteile der zusätzlichen Monomere ersetzt, wobei sich die Anteile aller Monomere jeweils zu 100 Gew.-% aufsummieren.

Die erfindungsgemäß eingesetzten teilhydrierten Nitrilkautschuke besitzen eine Mooney-Viskosität (ML 1+4 bei 100°C) im Bereich von 10 bis 120 Mooneyeinheiten, bevorzugt von 20 bis 100 Mooneyeinheiten. Die Bestimmung der Mooney-Viskosität erfolgt gemäß ASTM Norm D 1646.

Es können z.B. teilhydrierte Nitrilkautschuke mit einer Mooney-Viskosität (ML 1+4 bei 100°C) im Bereich von 30 bis 70, bevorzugt von 30 bis 50 eingesetzt werden, die dann typischerweise ein Gewichtsmittel des Molekulargewichts Mw im Bereich von 150.000 bis 500.000, bevorzugt im Bereich von 180.000 bis 400.000, und eine Polydispersität PDI = Mw/Mn, wobei Mw das Gewichtsmittel und Mn das Zahlenmittel des Molekulargewichts darstellt, im Bereich von 2,0 bis 6,0, bevorzugt im Bereich von 2,0 - 4,0 besitzen.

Derartige teilhydrierte Nitrilkautschuke sind dem Fachmann hinreichend bekannt und entweder käuflich erhältlich, z.B. unter der Marke Therban® der Lanxess Deutschland GmbH oder aber nach dem Fachmann geläufigen Methoden herstellbar. Die Herstellung von teilhydrierten Nitrilkautschuken erfolgt üblicherweise durch Emulsionspolymerisation gefolgt von einer Hydrierung und ist dem Fachmann aus einer Vielzahl von Literaturstellen und Patenten bekannt.

Die Teilhydrierung entsprechender Nitrilkautschuke kann unter Einsatz homogener oder heterogener Hydrierkatalysatoren erfolgen. Die eingesetzten Katalysatoren basieren üblicherweise auf Rhodium, Ruthenium oder Titan, es können aber auch Platin, Iridium, Palladium, Rhenium, Ruthenium, Osmium, Kobalt oder Kupfer entweder als Metall, oder aber bevorzugt in Form von Metallverbindungen eingesetzt werden (siehe z.B.US-A-3,700,637, DE-A-25 39 132, EP-A- 0 134 023, DE-OS- 35 41 689, DE-OS- 35 40 918, EP-A-0 298 386, DE-OS- 35 29 252, DE-OS- 34 33 392, US-A-4,464,515 und US-A-4,503,196).

Geeignete Katalysatoren und Lösungsmittel für eine Hydrierung in homogener Phase werden im Folgenden beschrieben und sind auch aus DE-A-25 39 132 und der EP-A-0 471 250 bekannt Die selektive Hydrierung kann z.B. in Gegenwart eines Rhodium- oder Ruthenium-haltigen Katalysators erreicht werden. Einsetzbar ist beispielsweise ein Katalysator der allgemeinen Formel

$$(R^1{}_mB)_l\ M\ X_n,$$

worin M Ruthenium oder Rhodium ist, $R^1$ gleich oder verschieden sind und eine $C_1$-$C_8$ Alkylgruppe, eine $C_4$-$C_8$ Cycloalkylgruppe, eine $C_6$-$C_{15}$ Aryl-Gruppe oder eine $C_7$-$C_{15}$ Aralkylgruppe darstellen. B ist Phosphor, Arsen, Schwefel oder eine Sulfoxid-Gruppe S=O, X ist Wasserstoff oder ein Anion, vorzugsweise Halogen und besonders bevorzugt Chlor oder Brom, 1 ist 2,3 oder 4, m ist 2 oder 3 und n ist 1,2 oder 3, bevorzugt 1 oder 3. Bevorzugte Katalysatoren sind Tris(triphenylphosphin)-rhodium(I)-chlorid, Tris(triphenylphosphin)-rhodium(III)-chlorid und Tris(dimethylsulfoxid)-rhodium(III)-chlorid sowie Tetrakis(triphenylphosphin)-rhodium-hydrid der Formel $(C_6H_5)_3P)_4RhH$ und die entsprechenden Verbindungen, in denen das Triphenylphosphin ganz oder teilweise durch Tricyclohexylphosphin ersetzt wurde. Der Katalysator kann in kleinen Mengen benutzt werden. Eine Menge im Bereich von 0,01-1 Gew.%, bevorzugt im Bereich von 0,03-0,5 Gew.% und besonders bevorzugt im Bereich von 0,1-0,3 Gew.% bezogen auf das Gewicht des Polymers sind geeignet.

Üblicherweise ist es sinnvoll, den Katalysator zusammen mit einem Co-Katalysator zu verwenden, der ein Ligand der Formel $R^l{}_mB$ ist, wobei $R^l$, m und B die zuvor für den Katalysator genannten Bedeutungen besitzen. Bevorzugt ist m gleich 3, B gleich Phosphor und die Reste $R^l$ können gleich oder verschieden sein. Bevorzugt handelt es sich um Co-Katalysatoren mit Trialkyl, Tricycloalkyl, Triaryl, Triaralkyl, Diaryl-monoalkyl, Diaryl-monocycloalkyl, Dialkyl-monoaryl, Dialkylmonocycloalkyl, Dicycloalkyl-monoaryl oder Dicycloalkyl-monoaryl-Resten.

Beispiele von Co-Katalysatoren finden sich beispielsweise in US-A-4,631,315**.** Bevorzugter Co-Katalysator ist Triphenylphosphin. Der Co-Katalysator wird bevorzugt in Mengen in einem Bereich von 0,3-5 Gew.%, bevorzugt im Bereich von 0,5-4 Gew.% eingesetzt, bezogen auf das Gewicht des zu hydrierenden Nitrilkautschuks. Bevorzugt liegt ferner das Gewichtsverhältnis des Rhodium-haltigen Katalysators zum Co-Katalysator im Bereich von 1:3 bis 1:55, besonders bevorzugt im Bereich von 1:5 bis 1:45. Bezogen auf 100 Gewichtsteile des zu hydrierenden Nitrilkautschuks werden geeigneterweise 0,1 bis 33 Gewichtsteile des Co-Katalyators, bevorzugt 0,5 bis 20 und ganz besonders bevorzugt 1 bis 5 Gewichtsteile, insbesondere mehr als 2 aber weniger als 5 Gewichtsteile Co-Katalysator bezogen auf 100 Gewichtsteile des zu hydrierenden Nitrilkautschuks eingesetzt.

Die praktische Durchführung dieser Hydrierung ist dem Fachmann aus US-A-6,683,136 bekannt. Sie erfolgt üblicherweise, indem man den zu hydrierenden Nitrilkautschuk in einem Lösungsmittel wie Toluol oder Monochlorbenzol

bei einer Temperatur im Bereich von 100 bis 150 °C und einem Druck im Bereich von 50 bis 150 bar für 2 bis 10 h mit Wasserstoff beaufschlagt.

Bei Einsatz heterogener Katalysatoren handelt es sich üblicherweise um geträgerte Katalysatoren auf der Basis von Palladium, die z. B. auf Kohle, Kieselsäure, Calciumcarbonat oder Bariumsulfat geträgert sind.

**Metathese-Katalysatoren:**

Bei den erfindungsgemäß einzusetzenden Metathese-Katalysatoren handelt es sich bewährterweise um Komplexkatalysatoren auf Basis von Molybdän, Osmium oder Ruthenium. Diese Komplexkatalysatoren besitzen das gemeinsame Strukturmerkmal, dass sie mindestens einen Liganden aufweisen, der carbenartig an das Metall gebunden ist. In einer bevorzugten Ausführungsform weist der Komplexkatalysator zwei Carben-Liganden auf, d.h. zwei Liganden, die carbenartig an das Zentralmetall des Komplexes gebunden sind.

Eingesetzt werden kann beispielsweise ein **Katalysator der allgemeinen Formel (A),**

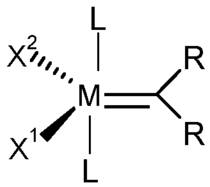

(A)

worin

M — Osmium oder Ruthenium bedeutet,

$X^1$ und $X^2$ — gleich oder verschieden sind und zwei Liganden, bevorzugt anionische Liganden, darstellen,

L — gleiche oder verschiedene Liganden, bevorzugt neutrale Elektronen-Donoren darstellen,

R — gleich oder verschieden sind und Wasserstoff, Alkyl, bevorzugt $C_1$-$C_{30}$-Alkyl, Cycloalkyl, bevorzugt $C_3$-$C_{20}$-Cycloalkyl, Alkenyl, bevorzugt $C_2$-$C_{20}$-Alkenyl, Alkinyl, bevorzugt $C_2$-$C_{20}$-Alkinyl, Aryl, bevorzugt $C_6$-$C_{24}$-Aryl, Carboxylat, bevorzugt $C_1$-$C_{20}$-Carboxylat, Alkoxy, bevorzugt $C_1$-$C_{20}$-Alkoxy, Alkenyloxy, bevorzugt $C_2$-$C_{20}$-Alkenyloxy, Alkinyloxy, bevorzugt $C_2$-$C_{20}$-Alkinyloxy, Aryloxy, bevorzugt $C_6$-$C_{24}$-Aryloxy, Alkoxycarbonyl, bevorzugt $C_2$-$C_{20}$-Alkoxycarbonyl, Alkylamino, bevorzugt $C_1$-$C_{30}$-Alkylamino, Alkylthio, bevorzugt $C_1$-$C_{30}$-Alkylthio, Arylthio, bevorzugt $C_6$-$C_{24}$-Arylthio, Alkylsulfonyl, bevorzugt $C_1$-$C_{20}$-Alkylsulfonyl, oder Alkylsulfinyl, bevorzugt $C_1$-$C_{20}$-Alkylsulfinyl darstellen, wobei diese Reste alle jeweils optional durch ein oder mehrere Alkyl-, Halogen-, Alkoxy-, Aryl- oder Heteroaryl-Reste substituiert sein können, oder alternativ beide Reste R unter Einbindung des gemeinsamen C-Atoms, an das sie gebunden sind, zu einer cyclischen Gruppe verbrückt sind, die aliphatischer oder aromatischer Natur sein kann, gegebenenfalls substituiert ist und ein oder mehrere Heteroatome enthalten kann.

In einer Ausführungsform der erfindungsgemäß einzusetzenden Katalysatoren der allgemeinen Formel (A) ist der eine Rest R Wasserstoff und der andere Rest R bedeutet $C_1$-$C_{20}$-Alkyl, $C_3$-$C_{10}$-Cycloalkyl, $C_2$-$C_{20}$-Alkenyl, $C_2$-$C_{20}$-Alkinyl, $C_6$-$C_{24}$-Aryl, $C_1$-$C_{20}$-Carboxylat, $C_1$-$C_{20}$-Alkoxy, $C_2$-$C_{20}$-Alkenyloxy, $C_2$-$C_{20}$-Alkinyloxy, $C_6$-$C_{24}$-Aryloxy, $C_2$-$C_{20}$-Alkoxycarbonyl, $C_1$-$C_{30}$-Alkylamino, $C_1$-$C_{30}$-Alkylthio, $C_6$-$C_{24}$-Arylthio, $C_1$-$C_{20}$-Alkylsulfonyl oder $C_1$-$C_{20}$-Alkylsulfinyl, wobei diese Reste alle jeweils durch ein oder mehrere Alkyl-, Halogen-, Alkoxy-, Aryl- oder Heteroaryl-Reste substituiert sein können.

In den Katalysatoren der allgemeinen Formel (A) sind **$X^1$ und $X^2$** gleich oder verschieden und stellen zwei Liganden, bevorzugt anionische Liganden, dar. $X^1$ und $X^2$ können z.B. Wasserstoff, Halogen, Pseudohalogen, geradkettige oder verzweigte $C_1$-$C_{30}$-Alkyl, $C_6$-$C_{24}$-Aryl, $C_1$-$C_{20}$-Alkoxy, $C_6$-$C_{24}$-Aryloxy, $C_3$-$C_{20}$-Alkyldiketonat, $C_6$-$C_{24}$-Aryldiketonat, $C_1$-$C_{20}$-Carboxylat, $C_1$-$C_{20}$-Alkylsulfonat, $C_6$-$C_{24}$-Arylsulfonat, $C_1$-$C_{20}$-Alkylthiol, $C_6$-$C_{24}$-Arylthiol, $C_1$-$C_{20}$-Alkylsulfonyl oder $C_1$-$C_{20}$-Alkylsulfinyl-Reste bedeuten.

Die vorgenannten Reste $X^1$ und $X^2$ können ferner durch ein oder mehrere weitere Reste substituiert sein, beispielsweise durch Halogen, bevorzugt Fluor, $C_1$-$C_{10}$-Alkyl, $C_1$-$C_{10}$-Alkoxy oder $C_6$-$C_{24}$-Aryl, wobei auch diese Reste gegebenenfalls wiederum durch ein oder mehrere Substituenten substituiert sein können, die aus der Gruppe umfassend Halogen, bevorzugt Fluor, $C_1$-$C_5$-Alkyl, $C_1$-$C_5$-Alkoxy und Phenyl ausgewählt sind. In einer bevorzugten Ausführungsform sind $X^1$ und $X^2$ gleich oder verschieden und bedeuten Halogen, insbesondere Fluor, Chlor, Brom oder Jod, Benzoat, $C_1$-$C_5$-Carboxylat, $C_1$-$C_5$-Alkyl, Phenoxy, $C_1$-$C_5$-Alkoxy, $C_1$-$C_5$-Alkylthiol, $C_6$-$C_{24}$-Arylthiol, $C_6$-$C_{24}$-Aryl oder $C_1$-$C_5$-Alkylsulfonat. In einer besonders bevorzugten Ausführungsform sind $X^1$ und $X^2$ identisch und bedeuten Halogen, insbesondere Chlor, $CF_3COO$, $CH_3COO$, $CFH_2COO$, $(CH_3)_3CO$, $(CF_3)_2(CH_3)CO$, $(CF_3)(CH_3)_2CO$, PhO (Phenoxy), MeO (Methoxy), EtO (Ethoxy), Tosylat ($p$-$CH_3$-$C_6H_4$-$SO_3$), Mesylat (2,4,6-Trimethylphenyl) oder $CF_3SO_3$ (Trifluormethansul-

fonat).

In der allgemeinen Formel (A) sind L gleiche oder verschiedene Liganden und sind bevorzugt neutrale Elektronen-Donoren. Die beiden Liganden L können beispielsweise unabhängig voneinander einen Phosphin-, sulfonierten Phosphin-, Phosphat-, Phosphinit-, Phosphonit-, Arsin-, Stibin-, Ether-, Amin-, Amid-, Sulfoxid-, Carboxyl-, Nitrosyl-, Pyridin-, Thioether- oder einen Imidazolidin ("Im")-Liganden darstellen.

Bevorzugt bedeuten die beiden Liganden L unabhängig voneinander einen $C_6$-$C_{24}$-Aryl-, $C_1$-$C_{10}$-Alkyl- oder $C_3$-$C_{20}$-Cycloalkyl-Phosphin-Liganden, einen sulfonierten $C_6$-$C_{24}$-Aryl- oder sulfonierten $C_1$-$C_{10}$-Alkyl-Phosphin-Liganden, einen $C_6$-$C_{24}$-Aryl- oder $C_1$-$C_{10}$-Alkyl-Phosphinit-Liganden, einen $C_6$-$C_{24}$-Aryl- oder $C_1$-$C_{10}$-Alkylphosphonit-Liganden, einen $C_6$-$C_{24}$-Aryl- oder $C_1$-$C_{10}$-Alkylphosphit-Liganden, einen $C_6$-$C_{24}$-Aryl- oder $C_1$-$C_{10}$-Alkylarsin-Liganden, einen $C_6$-$C_{24}$-Aryl-oder $C_1$-$C_{10}$-Alkylamin-Liganden, einen Pyridin-Liganden, einen $C_6$-$C_{24}$-Aryl- oder $C_1$-$C_{10}$-Alkyl-Sulfoxid-Liganden, einen $C_6$-$C_{24}$-Aryl- oder $C_1$-$C_{10}$-Alkyl-Ether-Liganden oder einen $C_6$-$C_{24}$-Aryl-oder $C_1$-$C_{10}$-Alkylamid-Liganden, die alle jeweils durch eine Phenylgruppe substituiert sein können, die wiederum optional durch einen Halogen-, $C_1$-$C_5$-Alkyl- oder $C_1$-$C_5$-Alkoxy-Rest substituiert ist.

Die Bezeichnung "Phosphin" schließt z.B. $PPh_3$, $P(p\text{-}Tol)_3$, $P(o\text{-}Tol)_3$, $PPh(CH_3)_2$, $P(CF_3)_3$, $P(p\text{-}FC_6H_4)_3$, $P(p\text{-}CF_3C_6H_4)_3$, $P(C_6H_4\text{-}SO_3Na)_3$, $P(CH_2C_6H_4\text{-}SO_3Na)_3$, P(iso-Propyl)$_3$, $P(CHCH_3(CH_2CH_3))_3$, P(Cyclopentyl)$_3$, P(Cyclohexyl)$_3$, P(Neopentyl)$_3$ und P(Neophenyl)$_3$ ein. Die Bezeichnung "Phosphinit" schließt beispielsweise Triphenylphosphinit, Tricyclohexylphosphinit, Triisopropylphosphinit und Methyldiphenylphosphinit ein. Die Bezeichnung "Phosphit" schließt beispielsweise Triphenylphosphit, Tricyclohexylphosphit, Tri-tert.-Butylphosphit, Triisopropylphosphit und Methyldiphenylphosphit ein. Die Bezeichnung "Stibin" schließt beispielsweise Triphenylstibin, Tricyclohexylstibin und Trimethylstiben ein. Die Bezeichnung "Sulfonat" schließt z.B. Trifluoromethansulfonat, Tosylat und Mesylat ein. Die Bezeichnung "Sulfoxid" schließt beispielsweise $(CH_3)_2S(=O)$ und $(C_6H_5)_2S=O$ ein. Die Bezeichnung "Thioether" schließt beispielsweise $CH_3SCH_3$, $C_6H_5SCH_3$, $CH_3OCH_2CH_2SCH_3$ und Tetrahydrothiophen ein. Die Bezeichnung "Pyridin" soll im Rahmen dieser Anmeldung als Oberbegriff sämtliche stickstoffhaltigen Liganden einschließen wie sie z.B. von Grubbs in der WO-A-03/011455 genannten werden. Beispiele hierfür sind: Pyridin, Picoline ($\alpha$-, $\beta$-, und $\gamma$-Picolin), Lutidine (2,3-, 2,4-, 2,5-, 2,6-, 3,4- und 3,5-Lutidin), Collidin (2,4,6-Trimethylpyridin), Trifluormethylpyridin, Phenylpyridin, 4-(Dimethylamino)pyridin, Chlorpyridine, Brompyridine, Nitropyridine, Chinolin, Pyrimidin, Pyrrol, Imidazol und Phenylimidazol.

Handelt es sich bei einem oder beiden der Liganden L um einen Imidazolidinrest (Im), so weist dieser üblicherweise eine Struktur der allgemeinen Formeln (IIa) oder (IIb) auf,

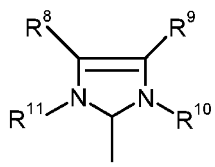

(IIa)

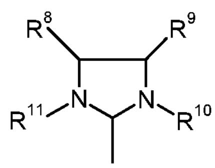

(IIb)

worin

$R^8$, $R^9$, $R^{10}$, $R^{11}$ gleich oder verschieden sind und Wasserstoff, geradkettiges oder verzweigtes $C_1$-$C_{30}$-Alkyl, $C_3$-$C_{20}$-Cycloalkyl, $C_2$-$C_{20}$-Alkenyl, $C_2$-$C_{20}$-Alkinyl, $C_6$-$C_{24}$-Aryl, $C_1$-$C_{20}$-Carboxylat, $C_1$-$C_{20}$-Alkoxy, $C_2$-$C_{20}$-Alkenyloxy, $C_2$-$C_{20}$-Alkinyloxy, $C_6$-$C_{20}$-Aryloxy, $C_2$-$C_{20}$-Alkoxycarbonyl, $C_1$-$C_{20}$-Alkylthio, $C_6$-$C_{20}$-Arylthio, $C_1$-$C_{20}$-Alkylsulfonyl, $C_1$-$C_{20}$-Alkylsulfonat, $C_6$-$C_{20}$-Arylsulfonat oder $C_1$-$C_{20}$-Alkylsulfinyl bedeuten.

Zur Klarstellung ist festzustellen, dass von der oben gewählten und auch im Folgenden verwendeten Bezeichnung des "Imidazolidinrestes (Im)" sowohl Imidazolin-Liganden der allgemeinen Formel (IIa) als auch Imidazolidin-Liganden der allgemeinen Formel (IIb) umfasst sind. Gleichermaßen sind von dieser Bezeichnung des "Imidazolidinrestes (Im)" sowohl Imidazolin-Liganden der allgemeinen Formel (IIIb), (IIId) und (IIIf) als auch Imidazolidin-Liganden der allgemeinen Formeln (IIIa), (IIIc) und (IIIe) umfasst.

Optional sind einer oder mehrere der Reste $R^8$, $R^9$, $R^{10}$, $R^{11}$ unabhängig voneinander durch einen oder mehrere Substituenten, vorzugsweise geradkettiges oder verzweigtes $C_1$-$C_{10}$-Alkyl, $C_3$-$C_8$-Cycloalkyl, $C_1$-$C_{10}$-Alkoxy oder $C_6$-$C_{24}$-Aryl substituiert, wobei diese vorgenannten Substituenten wiederum durch ein oder mehrere Reste, vorzugsweise ausgewählt aus der Gruppe Halogen, insbesondere Chlor oder Brom, $C_1$-$C_5$-Alkyl, $C_1$-$C_5$-Alkoxy und Phenyl substituiert sein können.

Nur zur Klarstellung sei hinzugefügt, dass die in den allgemeinen Formeln (IIa) und (IIb) im Rahmen dieser Anmeldung dargestellten Strukturen des Imidazolidinrests mit den in der Literatur für diesen Imidazolidinrest (Im) häufig auch zu findenden Strukturen (IIa') und (IIb'), die den Carben-Charakter des Imidazolidinrests hervorheben, gleichbedeutend sind. Dies gilt entsprechend auch für die zugehörigen bevorzugten, nachfolgend noch dargestellten Strukturen (IIIa)-(IIIf).

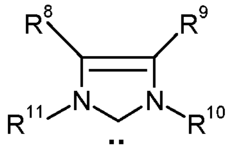

(IIa´)

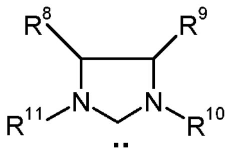

(IIb´)

In einer bevorzugten Ausführungsform der Katalysatoren der Formel (A) bedeuten $R^8$ und $R^9$ unabhängig voneinander Wasserstoff, $C_6$-$C_{24}$-Aryl, besonders bevorzugt Phenyl, gerad-kettiges oder verzweigtes $C_1$-$C_{10}$-Alkyl, besonders bevorzugt Propyl oder Butyl, oder bilden zusammen unter Einschluss der Kohlenstoffatome, an die sie gebunden sind, einen Cycloalkyl- oder Aryl-Rest, wobei alle vorgenannten Reste gegebenenfalls wiederum durch ein oder mehrere weitere Reste substituiert sein können, ausgewählt aus der Gruppe umfassend geradkettiges oder verzweigtes $C_1$-$C_{10}$-Alkyl, $C_1$-$C_{10}$-Alkoxy, $C_6$-$C_{24}$-Aryl und eine funktionelle Gruppe ausgewählt aus der Gruppe von Hydroxy, Thiol, Thioether, Keton, Aldehyd, Ester, Ether, Amin, Imin, Amid, Nitro, Carbonsäure, Disulfid, Carbonat, Isocyanat, Carbodiimid, Carboalkoxy, Carbamat und Halogen.

In einer bevorzugten Ausführungsform der Katalysatoren der allgemeinen Formel (A) sind ferner die Reste $R^{10}$ und $R^{11}$ gleich oder verschieden und bedeuten geradkettiges oder verzweigtes $C_1$-$C_{10}$-Alkyl, besonders bevorzugt i-Propyl oder Neopentyl, $C_3$-$C_{10}$-Cycloalkyl, bevorzugt Adamantyl, $C_6$-$C_{24}$-Aryl, besonders bevorzugt Phenyl, $C_1$-$C_{10}$-Alkylsulfonat, besonders bevorzugt Methansulfonat, $C_6$-$C_{10}$-Arylsulfonat, besonders bevorzugt p-Toluolsulfonat.

Gegebenenfalls sind die vorgenannten Reste als Bedeutungen von $R^{10}$ und $R^{11}$ substituiert durch einen oder mehrere weitere Reste ausgewählt aus der Gruppe umfassend geradkettiges oder verzweigtes $C_1$-$C_5$-Alkyl, insbesondere Methyl, $C_1$-$C_5$-Alkoxy, Aryl und eine funktionelle Gruppe ausgewählt aus der Gruppe von Hydroxy, Thiol, Thioether, Keton, Aldehyd, Ester, Ether, Amin, Imin, Amid, Nitro, Carbonsäure, Disulfid, Carbonat, Isocyanat, Carbodiimid, Carboalkoxy, Carbamat und Halogen.

Insbesondere können die Reste $R^{10}$ und $R^{11}$ gleich oder verschieden sein und bedeuten i-Propyl, Neopentyl, Adamantyl, Mesityl oder 2,6-Diisopropylphenyl.

Besonders bevorzugte Imidazolidinreste (Im) haben die nachfolgenden Strukturen (IIIa) bis (IIIf), wobei Ph jeweils für einen Phenyl-Rest, Bu für einen Butyl-Rest und Mes jeweils für 2,4,6-Trimethylphenyl-Rest steht oder Mes alternativ in allen Fällen für 2,6-Diisopropylphenyl steht.

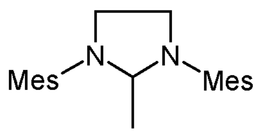

(IIIa)

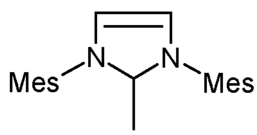

(IIIb)

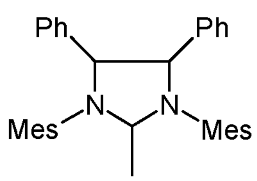

(IIIc)

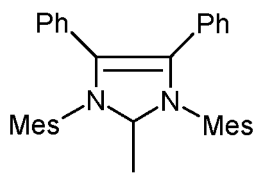

(IIId)

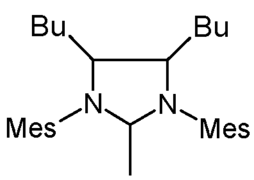

(IIIe)

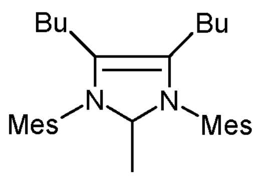

(IIIf)

Verschiedenste Vertreter der Katalysatoren der Formel (A) sind prinzipiell bekannt, so z.B. aus der WO-A-96/04289 und der WO-A-97/06185.

Alternativ zu den bevorzugten Im-Resten steht einer oder beide Liganden L in der allgemeinen Formel (A) bevorzugt auch für gleiche oder verschiedene Trialkylphosphin-Liganden, worin mindestens eine der Alkylgruppen eine sekundäre Alkylgruppe oder ein Cycloalkylgruppe darstellt, bevorzugt iso-Propyl, iso-Butyl, sec-Butyl, Neopentyl, Cyclopentyl oder Cyclohexyl.

Besonders bevorzugt stehen in der allgemeinen Formel (A) einer oder beide Liganden L für einen Trialkylphosphin-Liganden, worin mindestens eine der Alkylgruppen eine sekundäre Alkylgruppe oder ein Cycloalkylgruppe darstellt, bevorzugt iso-Propyl, iso-Butyl, sec-Butyl, Neopentyl, Cyclopentyl oder Cyclohexyl.

Besonders bevorzugt sind Katalysatoren, die unter die allgemeine Formel (A) fallen, und die Strukturen (IV) (Grubbs (I)-Katalysator) und (V) (Grubbs (II)-Katalysator), wobei Cy für Cyclohexyl steht, besitzen.

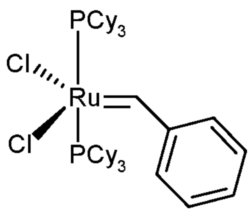

(IV)

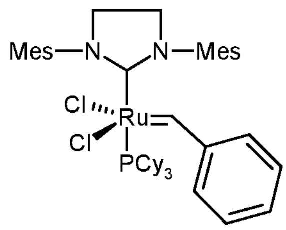

(V)

In einer weiteren Ausführungsform wird ein **Katalysator der allgemeinen Formel (A1)** eingesetzt, worin

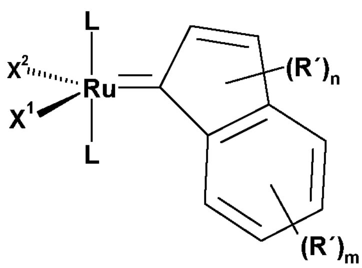

**(A1)**

| | |
|---|---|
| $X^1$, $X^2$ und L | die gleichen allgemeinen, bevorzugten und besonders bevorzugten Bedeutungen haben können wie in der allgemeinen Formel (A), |
| n | gleich 0, 1 oder 2 ist, |
| m | gleich 0, 1, 2, 3 oder 4 ist und |
| R' | gleich oder verschieden sind und Alkyl-, Cycloalkyl-, Alkenyl-, Alkinyl-, Aryl-, Alkoxy-, Alkenyloxy-, Alkinyloxy-, Aryloxy-, Alkoxycarbonyl-, Alkylamino-, Alkylthio-, Arylthio-, Alkylsulfonyl- oder Alkylsulfinyl-Reste bedeuten, die alle jeweils durch ein oder mehrere Alkyl-, Halogen-, Alkoxy-, Aryl- oder Heteroaryl-Reste substituiert sein können. |

Als bevorzugter Katalysator, der unter die allgemeine Formel (A1) fällt, kann der mit folgender Formel (VI) eingesetzt werden, wobei Mes für 2,4,6-Trimethylphenyl und Ph für Phenyl steht.

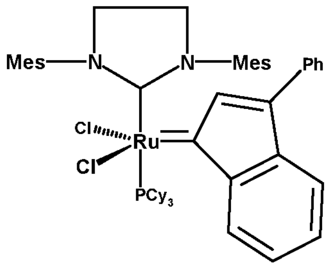

(VI)

Dieser in der Literatur auch als "Nolan-Katalysator" bezeichnete Katalysator ist z.B. aus WO-A-2004/112951 bekannt.

Bewährt hat sich auch der Einsatz eines **Katalysator der allgemeinen Formel (B),**

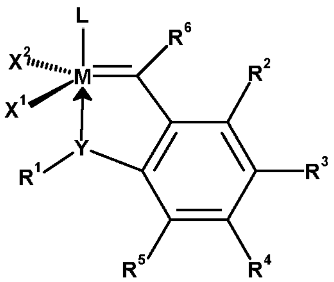

(B)

worin

| | |
|---|---|
| M | Ruthenium oder Osmium bedeutet, |
| $X^1$ und $X^2$ | gleiche oder verschiedene Liganden, bevorzugt anionische Liganden sind, |
| Y | Sauerstoff (O), Schwefel (S), einen Rest N-$R^1$ oder einen Rest P-$R^1$ bedeutet, wobei $R^1$ die nachfolgend genannten Bedeutungen besitzt, |
| $R^1$ | einen Alkyl-, Cycloalkyl-, Alkenyl-, Alkinyl-, Aryl-, Alkoxy-, Alkenyloxy-, Alkinyloxy-, Aryloxy-, Alkoxycarbonyl-, Alkylamino-, Alkylthio-, Arylthio-, Alkylsulfonyl- oder Alkylsulfinyl-Rest darstellt, die alle jeweils optional durch ein oder mehrere Alkyl-, Halogen-, Alkoxy-, Aryl- oder Heteroaryl-Reste substituiert sein können, |
| $R^2$, $R^3$, $R^4$ und $R^5$ | gleich oder verschieden sind und Wasserstoff, organische oder anorganische Reste darstellen, |
| $R^6$ | H, einen Alkyl-, Alkenyl-, Alkinyl- oder einen Aryl-Rest bedeutet und |
| L | ein Ligand ist, der die gleichen Bedeutungen besitzt wie für die Formel (A) genannt. |

Die Katalysatoren der allgemeinen Formel (B) sind prinzipiell bekannt. Vertreter dieser Verbindungsklasse sind die Katalysatoren, die von Hoveyda et al. in US 2002/0107138 A1 und Angew. Chem. Int. Ed. 2003, 42, 4592 beschrieben sind, und die Katalysatoren, die von Grela in WO-A-2004/035596**,** Eur. J. Org. Chem 2003, 963-966 und Angew. Chem. Int. Ed. 2002, 41, 4038 sowie in J. Org. Chem. 2004, 69, 6894-96 und Chem. Eur. J 2004, 10, 777-784 beschrieben werden. Die Katalysatoren sind käuflich erhältlich bzw. gemäß den angegebenen Literaturstellen herstellbar.

In den Katalysatoren der allgemeinen Formel (B) steht L für einen Liganden, der üblicherweise eine Elektronen-Donor-Funktion besitzt und die gleichen allgemeinen, bevorzugten und besonders bevorzugten Bedeutungen annehmen kann wie L in der allgemeinen Formel (A).

Darüber hinaus gilt, dass L in der allgemeinen Formel (B) bevorzugt einen $P(R^7)_3$ Rest, wobei $R^7$ unabhängig voneinander $C_1$-$C_6$ Alkyl, $C_3$-$C_8$-Cycloalkyl oder Aryl bedeuten, oder aber einen gegebenenfalls substituierten Imidazolidinrest ("Im") darstellt.

**$C_1$-$C_6$-Alkyl** steht beispielsweise für Methyl, Ethyl, n-Propyl, iso-Propyl, n-Butyl, sec.-Butyl, tert.-Butyl, n-Pentyl, 1-Methylbutyl, 2-Methylbutyl, 3-Methylbutyl, neo-Pentyl, 1-Ethylpropyl und n-Hexyl.

**$C_3$-$C_8$-Cycloalkyl** umfasst Cyclopropyl, Cyclobutyl, Cylopentyl, Cyclohexyl, Cycloheptyl und Cyclooctyl.

**Aryl** umfasst einen aromatischen Rest mit 6 bis 24 Gerüstkohlenstoffatomen. Als bevorzugte mono-, bi- oder tricyclische carbocyclische aromatische Reste mit 6 bis 10 Gerüstkohlenstoffatomen seien beispielsweise Phenyl, Biphenyl, Naphthyl, Phenanthrenyl oder Anthracenyl genannt.

Der Imidazolidinrest (**Im**) weist eine Struktur der bereits dargestellten allgemeinen Formeln (IIa) oder (IIb) auf,

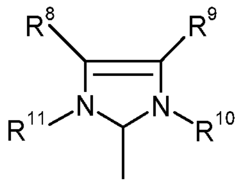

(IIa)

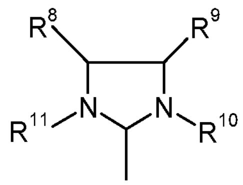

(IIb)

worin

$R^8$, $R^9$, $R^{10}$, $R^{11}$ gleich oder verschieden sind und Wasserstoff, geradkettiges oder verzweigtes $C_1$-$C_{30}$-Alkyl, $C_3$-$C_{20}$-Cycloalkyl, $C_2$-$C_{20}$-Alkenyl, $C_2$-$C_{20}$-Alkinyl, $C_6$-$C_{24}$-Aryl, $C_1$-$C_{20}$-Carboxylat, $C_1$-$C_{20}$-Alkoxy, $C_2$-$C_{20}$-Alkenyloxy, $C_2$-$C_{20}$-Alkinyloxy, $C_6$-$C_{20}$-Aryloxy, $C_2$-$C_{20}$-Alkoxycarbonyl, $C_1$-$C_{20}$-Alkylthio, $C_6$-$C_{20}$-Arylthio, $C_1$-$C_{20}$-Alkylsulfonyl, $C_1$-$C_{20}$-Alkylsulfonat, $C_6$-$C_{20}$-Arylsulfonat oder $C_1$-$C_{20}$-Alkylsulfinyl bedeuten.

Gegebenenfalls kann einer oder mehrere der Reste $R^8$-$R^{11}$ unabhängig voneinander durch einen oder mehrere Substituenten, vorzugsweise geradkettiges oder verzweigtes $C_1$-$C_{10}$-Alkyl, $C_3$-$C_8$-Cycloalkyl, $C_1$-$C_{10}$-Alkoxy oder $C_6$-$C_{24}$-Aryl substituiert sein, wobei die vorgenannten Substituenten wiederum durch ein oder mehrere Reste, vorzugsweise ausgewählt aus der Gruppe Halogen, insbesondere Chlor oder Brom, $C_1$-$C_5$-Alkyl, $C_1$-$C_5$-Alkoxy und Phenyl substituiert sein können.

Bewährt hat es sich insbesondere, Katalysatoren der allgemeinen Formel (B) einzusetzen, worin $R^8$ und $R^9$ unabhängig voneinander Wasserstoff, $C_6$-$C_{24}$-Aryl, besonders bevorzugt Phenyl, geradkettiges oder verzweigtes $C_1$-$C_{10}$-Alkyl, besonders bevorzugt Propyl oder Butyl, bedeuten oder zusammen unter Einschluss der Kohlenstoffatome, an die sie gebunden sind, einen Cycloalkyl- oder Aryl-Rest bilden, wobei alle vorgenannten Reste gegebenenfalls wiederum durch ein oder mehrere weitere Reste substituiert sein können, ausgewählt aus der Gruppe umfassend geradkettiges oder verzweigtes $C_1$-$C_{10}$-Alkyl, $C_1$-$C_{10}$-Alkoxy, $C_6$-$C_{24}$-Aryl und eine funktionelle Gruppe ausgewählt aus der Gruppe von Hydroxy, Thiol, Thioether, Keton, Aldehyd, Ester, Ether, Amin, Imin, Amid, Nitro, Carbonsäure, Disulfid, Carbonat, Isocyanat, Carbodiimid, Carboalkoxy, Carbamat und Halogen.

In einer weiteren bevorzugten Ausführungsform wird ein Katalysator der Formel (B) eingesetzt, worin die Reste $R^{10}$ und $R^{11}$ gleich oder verschieden sind und geradkettiges oder verzweigtes $C_1$-$C_{10}$-Alkyl, besonders bevorzugt i-Propyl oder Neopentyl, $C_3$-$C_{10}$-Cycloalkyl, bevorzugt Adamantyl, $C_6$-$C_{24}$-Aryl, besonders bevorzugt Phenyl, $C_1$-$C_{10}$-Alkylsulfonat, besonders bevorzugt Methansulfonat, oder $C_6$-$C_{10}$-Arylsulfonat, besonders bevorzugt p-Toluolsulfonat bedeuten.

Gegebenenfalls sind die vorgenannten Reste als Bedeutungen von $R^{10}$ und $R^{11}$ substituiert durch einen oder mehrere weitere Reste ausgewählt aus der Gruppe umfassend geradkettiges oder verzweigtes $C_1$-$C_5$-Alkyl, insbesondere Methyl, $C_1$-$C_5$-Alkoxy, Aryl und eine funktionelle Gruppe ausgewählt aus der Gruppe von Hydroxy, Thiol, Thioether, Keton, Aldehyd, Ester, Ether, Amin, Imin, Amid, Nitro, Carbonsäure, Disulfid, Carbonat, Isocyanat, Carbodiimid, Carboalkoxy, Carbamat und Halogen.

Insbesondere können die Reste $R^{10}$ und $R^{11}$ gleich oder verschieden sein und bedeuten i-Propyl, Neopentyl, Adamantyl oder Mesityl.

Besonders bevorzugte Imidazolidinreste (Im) haben die bereits zuvor genannten Strukturen (IIIa-IIIf), wobei Mes jeweils für 2,4,6-Trimethylphenyl steht.

In den Katalysatoren der allgemeinen Formel (B) sind $X^1$ und $X^2$ gleich oder verschieden und können beispielsweise Wasserstoff, Halogen, Pseudohalogen, geradkettige oder verzweigte $C_1$-$C_{30}$-Alkyl, $C_6$-$C_{24}$-Aryl, $C_1$-$C_{20}$-Alkoxy, $C_6$-$C_{24}$-Aryloxy, $C_3$-$C_{20}$-Alkyldiketonat, $C_6$-$C_{24}$-Aryldiketonat, $C_1$-$C_{20}$-Carboxylat, $C_1$-$C_{20}$-Alkylsulfonat, $C_6$-$C_{24}$-Arylsulfonat, $C_1$-$C_{20}$-Alkylthiol, $C_6$-$C_{24}$-Arylthiol, $C_1$-$C_{20}$-Alkylsulfonyl oder $C_1$-$C_{20}$-Alkylsulfinyl bedeuten.

Die vorgenannten Reste $X^1$ und $X^2$ können ferner durch ein oder mehrere weitere Reste substituiert sein, beispielsweise durch Halogen, bevorzugt Fluor, $C_1$-$C_{10}$-Alkyl, $C_1$-$C_{10}$-Alkoxy oder $C_6$-$C_{24}$-Aryl-Reste, wobei auch die letzteren Reste gegebenenfalls wiederum durch ein oder mehrere Substituenten substituiert sein können, die aus der Gruppe umfassend Halogen, bevorzugt Fluor, $C_1$-$C_5$-Alkyl, $C_1$-$C_5$-Alkoxy und Phenyl ausgewählt sind.

In einer bevorzugten Ausführungsform sind $X^1$ und $X^2$ gleich oder verschieden und bedeuten Halogen, insbesondere Fluor, Chlor, Brom oder Jod, Benzoat, $C_1$-$C_5$-Carboxylat, $C_1$-$C_5$-Alkyl, Phenoxy, $C_1$-$C_5$-Alkoxy, $C_1$-$C_5$-Alkylthiol, $C_6$-$C_{24}$-Arylthiol, $C_6$-$C_{24}$-Aryl oder $C_1$-$C_5$-Alkylsulfonat.

In einer besonders bevorzugten Ausführungsform sind $X^1$ und $X^2$ identisch und bedeuten Halogen, insbesondere Chlor, $CF_3COO$, $CH_3COO$, $CFH_2COO$, $(CH_3)_3CO$, $(CF_3)_2(CH_3)CO$, $(CF_3)(CH_3)_2CO$, PhO (Phenoxy), MeO (Methoxy), EtO (Ethoxy), Tosylat ($p$-$CH_3$-$C_6H_4$-$SO_3$), Mesylat (2,4,6-Trimethylphenyl) oder $CF_3SO_3$ (Trifluormethansulfonat).

In der allgemeinen Formel (B) bedeutet der Rest $R^1$ einen Alkyl-, Cycloalkyl-, Alkenyl-, Alkinyl-, Aryl-, Alkoxy-, Alkenyloxy-, Alkinyloxy-, Aryloxy-, Alkoxycarbonyl-, Alkylamino-, Alkylthio-, Arylthio-, Alkylsulfonyl- oder Alkylsulfinyl-Rest, die alle jeweils optional durch ein oder mehrere Alkyl-, Halogen-, Alkoxy-, Aryl- oder Heteroaryl-Reste substituiert sein können.

Üblicherweise bedeutet der Rest $R^1$ einen $C_1$-$C_{30}$-Alkyl, $C_3$-$C_{20}$-Cylcoalkyl, $C_2$-$C_{20}$-Alkenyl, $C_2$-$C_{20}$-Alkin$_Y$1, $C_6$-$C_{24}$-Aryl, $C_1$-$C_{20}$-Alkoxy, $C_2$-$C_{20}$-Alkenyloxy, $C_2$-$C_{20}$-Alkinyloxy, $C_6$-$C_{24}$-Aryloxy, $C_2$-$C_{20}$-Alkoxycarbonyl, $C_1$-$C_{20}$-Alkylamino-, $C_1$-$C_{20}$-Alkylthlo, $C_6$-$C_{24}$-Arylthio, $C_1$-$C_{20}$-Alkylsulfonyl oder $C_1$-$C_{20}$-Alkylsulfinyl Rest, die alle jeweils optional durch ein oder mehrere Alkyl-, Halogen-, Alkoxy-, Aryl- oder Heteroaryl-Reste substituiert sein können.

Bevorzugt steht $R^1$ für einen $C_3$-$C_{20}$-Cylcoalkyl-Rest, einen $C_6$-$C_{24}$-Aryl-Rest oder einen geradkettigen oder verzweigten $C_1$-$C_{30}$-Alkyl-Rest, wobei letztere gegebenenfalls durch ein oder mehrere Doppel- oder Dreifachbindungen oder auch ein oder mehrere Heteroatome, bevorzugt Sauerstoff oder Stickstoff, unterbrochen sein kann. Besonders bevorzugt steht $R^1$ für einen geradkettigen oder verzweigten $C_1$-$C_{12}$-Alkyl-Rest.

Der $C_3$-$C_{20}$-Cycloalkyl-Rest umfasst beispielsweise Cyclopropyl, Cyclobutyl, Cylopentyl, Cyclohexyl, Cycloheptyl und Cyclooctyl.

Bei dem $C_1$-$C_{12}$-Alkyl-Rest kann es sich beispielsweise um Methyl, Ethyl, n-Propyl, iso-Propyl, n-Butyl, sec.-Butyl, tert.-Butyl, n-Pentyl, 1-Methylbutyl, 2-Methylbutyl, 3-Methylbutyl, neo-Pentyl, 1-Ethylpropyl, n-Hexyl, n-Heptyl, n-Octyl, n-Decyl oder n-Dodecyl handeln. Insbesondere steht $R^1$ für Methyl oder Isopropyl.

Der $C_6$-$C_{24}$-Aryl-Rest steht für einen aromatischen Rest mit 6 bis 24 Gerüstkohlenstoffatomen. Als bevorzugte mono-, bi- oder tricyclische carbocyclische aromatische Reste mit 6 bis 10 Gerüstkohlenstoffatomen seien beispielsweise Phenyl, Biphenyl, Naphthyl, Phenanthrenyl oder Anthracenyl genannt.

In der allgemeinen Formel (B) sind die Reste $R^2$, $R^3$, $R^4$ und $R^5$ gleich oder verschieden und können Wasserstoff, organische oder anorganische Reste darstellen.

In einer geeigneten Ausführungsform sind $R^2$, $R^3$, $R^4$, $R^5$ gleich oder verschieden und bedeuten Wasserstoff, Halogen, Nitro, $CF_3$, Alkyl-, Cycloalkyl-, Alkenyl-, Alkinyl-, Aryl-, Alkoxy-, Alkenyloxy-, Alkinyloxy-, Aryloxy-, Alkoxycarbonyl-, Alkylamino-, Alkylthio-, Arylthio, Alkylsulfonyl- oder Alkylsulfinyl-Reste darstellen, die alle jeweils optional durch ein oder mehrere Alkyl-, Alkoxy-, Halogen-, Aryl- oder Heteroaryl-Reste substituiert sein können.

Üblicherweise sind $R^2$, $R^3$, $R^4$, $R^5$ gleich oder verschieden und bedeuten Wasserstoff, Halogen, bevorzugt Chlor oder Brom, Nitro, $CF_3$, $C_1$-$C_{30}$-Alkyl, $C_3$-$C_{20}$-Cylcoalkyl, $C_2$-$C_{20}$-Alkenyl, $C_2$-$C_{20}$-Alkinyl, $C_6$-$C_{24}$-Aryl, $C_1$-$C_{20}$-Alkoxy, $C_2$-$C_{20}$-Alkenyloxy, $C_2$-$C_{20}$-Alkinyloxy, $C_6$-$C_{24}$-Aryloxy, $C_2$-$C_{20}$-Alkoxycarbonyl, $C_1$-$C_{20}$-Alkylamino-, $C_1$-$C_{20}$-Alkylthio, $C_6$-$C_{24}$-Arylthio, $C_1$-$C_{20}$-Alkylsulfonyl oder $C_1$-$C_{20}$-Alkylsulfinyl Reste, die alle jeweils optional durch ein oder mehrere $C_1$-$C_{30}$-Alkyl-, $C_1$-$C_{20}$-Alkoxy-, Halogen-, $C_6$-$C_{24}$-Aryl- oder Heteroaryl-Reste substituiert sein können.

In einer besonders bewährten Ausführungsform sind $R^2$, $R^3$, $R^4$, $R^5$ sind gleich oder verschieden und stehen für Nitro, geradkettige oder verzweigte $C_1$-$C_{30}$-Alkyl-, $C_5$-$C_{20}$-Cylcoalkyl-, geradkettige oder verzweigte $C_1$-$C_{20}$-Alkoxy-Reste oder $C_6$-$C_{24}$-Aryl-Reste, bevorzugt Phenyl oder Naphthyl. Die $C_1$-$C_{30}$-Alkyl-Reste sowie $C_1$-$C_{20}$-Alkoxy-Reste können optional durch ein oder mehrere Doppel- oder Dreifachbindungen oder auch ein oder mehrere Heteroatome, bevorzugt Sauerstoff oder Stickstoff, unterbrochen sein.

Ferner können auch zwei oder mehr der Reste $R^2$, $R^3$, $R^4$ oder $R^5$ über aliphatische oder aromatische Strukturen verbrückt sein. $R^3$ und $R^4$ können beispielsweise unter Einbeziehung der Kohlenstoff-Atome, an die sie im Phenylring der Formel (B) gebunden sind, einen ankondensierten Phenylring bilden, so dass insgesamt eine Naphthylstruktur resultiert.

In der allgemeinen Formel (B) bedeutet der **Rest $R^6$** Wasserstoff, einen Alkyl-, Alkenyl-, Alkinyl-oder einen Aryl-Rest. Bevorzugt bedeutet $R^6$ H, einen $C_1$-$C_{30}$-Alkyl, einen $C_2$-$C_{20}$-Alkenyl-, einen $C_2$-$C_{20}$-Alkinyl oder einen $C_6$-$C_{24}$-Aryl-Rest. Besonders bevorzugt ist $R^6$ Wasserstoff.

Ferner geeignet sind **Katalysatoren gemäß der allgemeinen Formel (B1),**

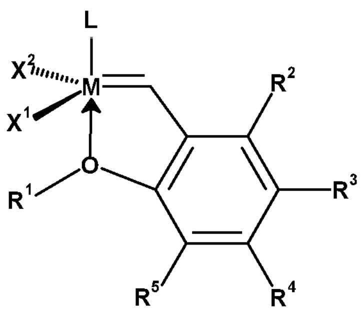

**(B 1)**

worin

M, L, $X^1$, $X^2$, $R^1$, $R^2$, $R^3$, $R^4$ und $R^5$ die für die allgemeine Formel (B) genannten allgemeinen, bevorzugten und besonders

bevorzugten Bedeutungen besitzen können.

Die Katalysatoren der allgemeinen Formel (B1) sind z.B. aus US 2002/0107138 A1 prinzipiell bekannt und können nach dort angegebenen Herstellverfahren erhalten werden.

Besonders bevorzugt sind Katalysatoren der allgemeinen Formel (B1), wobei

| | |
|---|---|
| M | Ruthenium darstellt, |
| $X^1$ und $X^2$ | gleichzeitig Halogen, insbesondere gleichzeitig Chlor bedeuten, |
| $R^1$ | für einen geradkettigen oder verzweigten $C_1$-$C_{12}$ Alkylrest steht, |
| $R^2$, $R^3$, $R^4$, $R^5$ | die für die allgemeine Formel (B) genannten allgemeinen und bevorzugten Bedeutungen besitzen und |
| L | die für die allgemeine Formel (B) genannten allgemeinen und bevorzugten Bedeutungen besitzt. |

Insbesondere bevorzugt sind Katalysatoren der allgemeinen Formel (B1), wobei

| | |
|---|---|
| M | Ruthenium darstellt, |
| $X^1$ und $X^2$ | gleichzeitig Chlor bedeuten, |
| $R^1$ | für einen Isopropyl-Rest steht, |
| $R^2$, $R^3$, $R^4$, $R^5$ | alle Wasserstoff bedeuten und |
| L | einen gegebenenfalls substituierten Imidazolidin-Rest der Formeln (IIa) oder (IIb) darstellt, |

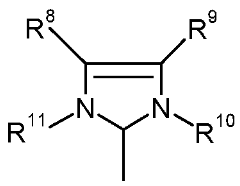

(IIa)

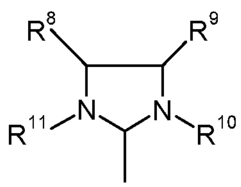

(IIb)

worin

| | |
|---|---|
| $R^8$, $R^9$, $R^{10}$, $R^{11}$ | gleich oder verschieden sind und Wasserstoff, geradkettiges oder verzweigtes $C_1$-$C_{30}$-Alkyl, $C_3$-$C_{20}$-Cylcoalkyl, $C_2$-$C_{20}$-Alkenyl, $C_2$-$C_{20}$-Alkinyl, $C_6$-$C_{24}$-Aryl, $C_1$-$C_{20}$-Carboxylat, $C_1$-$C_{20}$-Alkoxy, $C_2$-$C_{20}$-Alkenyloxy, $C_2$-$C_{20}$-Alkinyloxy, $C_6$-$C_{24}$-Aryloxy, $C_2$-$C_{20}$-Alkoxycarbonyl, $C_1$-$C_{20}$-Alkylthio, $C_6$-$C_{24}$-Arylthio, $C_1$-$C_{20}$-Alkylsulfonyl, $C_1$-$C_{20}$-Alkylsulfonat, $C_6$-$C_{24}$-Arylsulfonat oder $C_1$-$C_{20}$-Alkylsulfinyl bedeuten, wobei die vorgenannten Reste jeweils durch einen oder mehrere Substituenten, vorzugsweise geradkettiges oder verzweigtes $C_1$-$C_{10}$-Alkyl, $C_3$-$C_8$-Cycloalkyl, $C_1$-$C_{10}$-Alkoxy oder $C_6$-$C_{24}$-Aryl substituiert sein können, wobei auch diese vorgenannten Substituenten wiederum durch ein oder mehrere Reste, vorzugsweise ausgewählt aus der Gruppe Halogen, insbesondere Chlor oder Brom, $C_1$-$C_5$-Alkyl, $C_1$-$C_5$-Alkoxy und Phenyl substituiert sein können. |

Ganz besonders bevorzugt ist ein Katalysator, der unter die allgemeine Strukturformel (B1) fällt und die Formel (VII) besitzt, wobei Mes jeweils für 2,4,6-Trimethylphenyl steht.

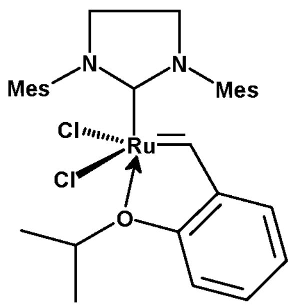

(VII)

Dieser Katalysator (VII) wird in der Literatur auch als "Hoveyda-Katalysator" bezeichnet.

Weiterhin geeignete Katalysatoren sind solche, die unter die allgemeine Strukturformel (B1) fallen und eine der folgenden Formeln (VIII), (IX), (X), (XI), (XII), (XIII), (XIV) und (XV) besitzen, wobei Mes jeweils 2,4,6-Trimethylphenyl bedeutet.

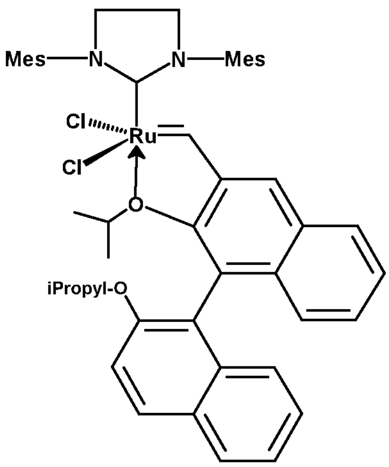

(VIII)

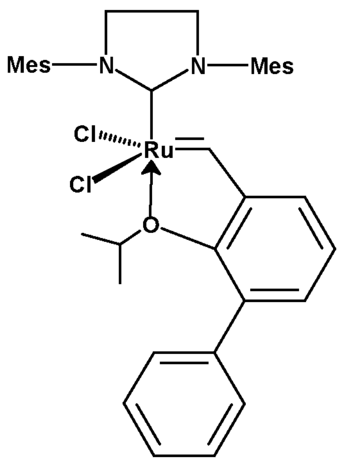

(IX)

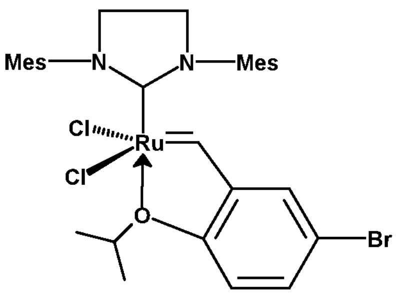

(X)

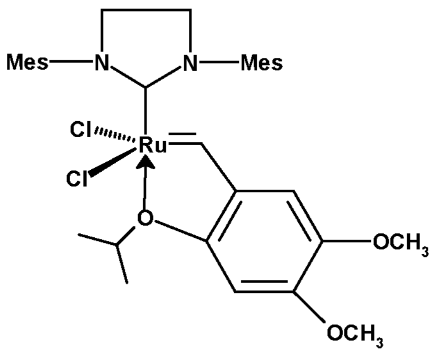

(XI)

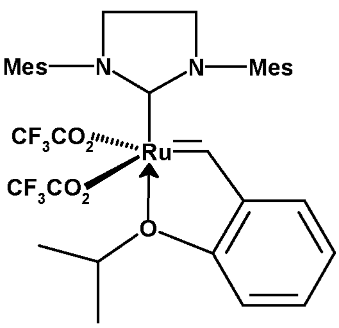

(XII)

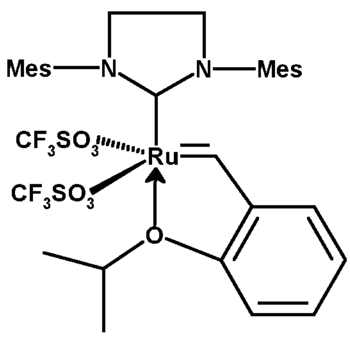

(XIII)

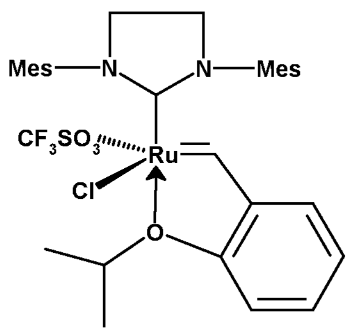

(XIV)

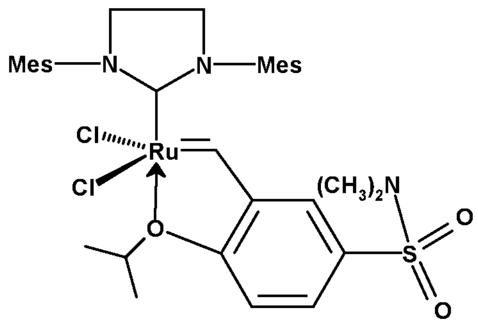

(XV)

Ein weiterer geeigneter Katalysator besitzt die allgemeine Formel (B2),

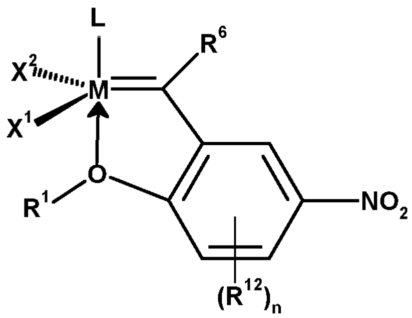

(B2)

worin

| | |
|---|---|
| M, L, $X^1$, $X^2$, $R^1$ und $R^6$ | die für die Formel (B) genannten allgemeinen und bevorzugten Bedeutungen haben, |
| $R^{12}$ | gleich oder verschieden sind und die für die Reste $R^2$, $R^3$, $R^4$ und $R^5$ in der Formel (B) genannten allgemeinen und bevorzugten Bedeutungen, ausgenommen Wasserstoff, besitzen und |
| n | gleich 0, 1, 2 oder 3 ist. |

Die Katalysatoren der allgemeinen Formel (B2) sind beispielsweise aus WO-A-2004/035596 (Grela) prinzipiell bekannt und können nach dort angegebenen Herstellverfahren erhalten werden.

Besonders bevorzugt sind Katalysatoren der allgemeinen Formel (B2), wobei

| | |
|---|---|
| M | Ruthenium darstellt, |
| $X^1$ und $X^2$ | gleichzeitig Halogen, insbesondere gleichzeitig Chlor bedeuten, |
| $R^1$ | für einen geradkettigen oder verzweigten $C_1$-$C_{12}$ Alkylrest steht, |
| $R^{12}$ | die für die allgemeine Formel (B2) genannten Bedeutungen besitzt, |
| n | gleich 0, 1, 2 oder 3 ist, |
| $R^6$ | Wasserstoff bedeutet und |
| L | die für die allgemeine Formel (B) genannten Bedeutungen besitzt, |

Insbesondere bevorzugt sind Katalysatoren der allgemeinen Formel (B2), wobei

| | |
|---|---|
| M | Ruthenium darstellt, |
| $X^1$ und $X^2$ | gleichzeitig Chlor bedeuten, |
| $R^1$ | für einen Isopropyl-Rest steht, |
| n | gleich 0 ist und |
| L | einen gegebenenfalls substituierten Imidazolidin-Rest der Formeln (IIa) oder (IIb) darstellt, worin $R^8$, $R^9$, $R^{10}$, $R^{11}$ gleich oder verschieden sind und die für die insbesondere bevorzugten Katalysatoren der allgemeinen Formel (B1) genannten Bedeutungen besitzen. |

Besonders geeignet ist ein Katalysator der nachfolgenden Struktur (XVI)

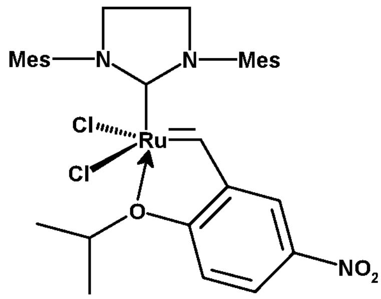

**(XVI)**

Der Katalysator (XVI) wird in der Literatur auch als "Grela-Katalysator" bezeichnet.

Ein weiterer geeigneter Katalysator, der unter die allgemeine Formel (B2) fällt, besitzt folgende Struktur (XVII), wobei Mes jeweils für 2,4,6-Trimethylphenyl steht.

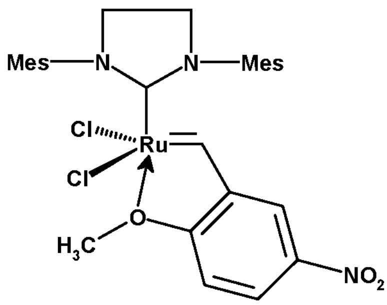

**(XVII)**

Alternativ kann auch dendritisch aufgebauter Katalysator der allgemeinen Formel (B3) eingesetzt werden,

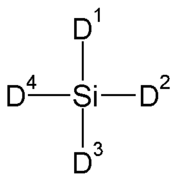

(B3)

worin $D^1$, $D^2$, $D^3$ und $D^4$ jeweils eine Struktur der nachfolgend dargestellten allgemeinen Formel (XVIII) aufweisen, die über die rechts dargestellte Methylengruppe an das Silicium der Formel (B3) angebunden ist und

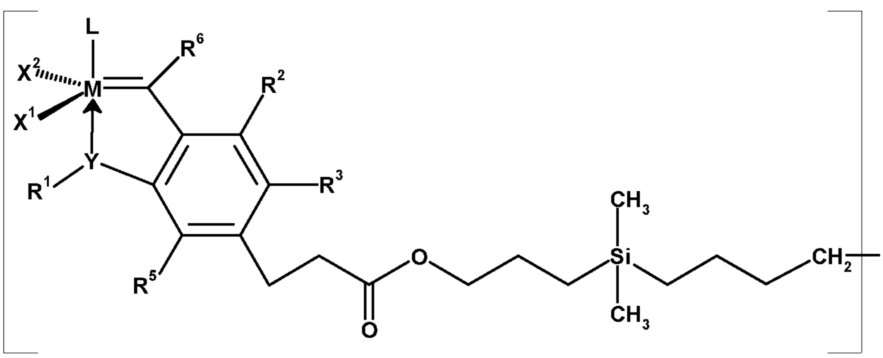

**(XVIII)**

worin

| | |
|---|---|
| M, L, $X^1$, $X^2$, $R^1$, $R^2$, $R^3$, $R^5$ und $R^6$ | die für die allgemeine Formel (B) genannten allgemeinen und bevorzugten Bedeutungen besitzen können. |

Die Katalysatoren gemäß der allgemeinen Formel (B3) sind aus US 2002/0107138 A1 bekannt und gemäß den dort gemachten Angaben herstellbar.

Eine weitere alternative Ausführungsform betrifft einen Katalysator der Formel (B4),

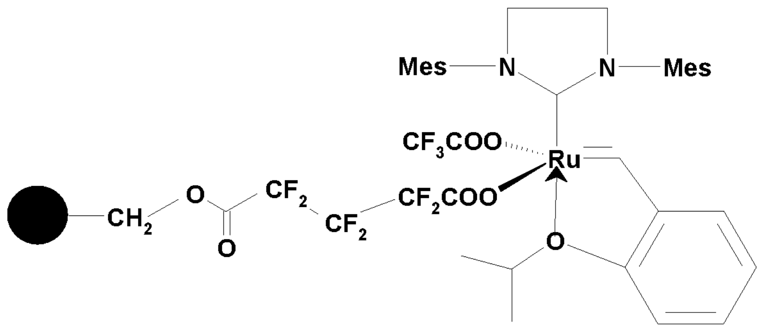

(B4)

worin das Symbol ● für einen Träger steht.

Bevorzugt handelt es sich bei dem Träger um ein Poly(styroldivinylbenzol)-Copolymer (PS-DVB).

Die Katalysatoren gemäß Formel (B4) sind aus **Chem. Eur. J. 2004 10**, **777-784** prinzipiell bekannt und nach dort beschriebenen Herstellmethoden erhältlich.

Alle vorgenannten Katalysatoren des Typs (B) können entweder als solche zu der Mischung des teilhydrierten Nitrilkautschuks und des vinylgruppenhaltigen Silikonkautschuks zugesetzt werden oder aber auch auf einem festen Träger aufgebracht und immobilisiert werden. Als feste Phasen bzw. Träger sind solche Materialien geeignet, die einerseits inert gegenüber dem Reaktionsgemisch der Metathese sind und zum anderen die Aktivität des Katalysators nicht beeinträchtigen. Einsetzbar sind zur Immobilisierung des Katalysators beispielsweise Metalle, Glas, Polymere, Keramik, organische Polymerkügelchen oder auch anorganische Sol-Gele, Ruß, Kieselsäure, Silikate, Calciumcarbonat und Bariumsulfat.

Eine weitere Ausführungsform betrifft einen **Katalysator der allgemeinen Formel (C),**

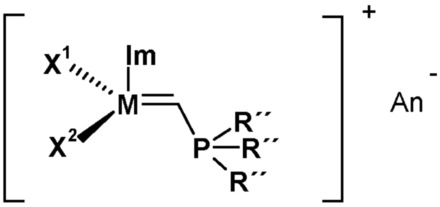

(C)

wobei

| | |
|---|---|
| M | Ruthenium oder Osmium bedeutet, |
| $X^1$ und $X^2$ | gleich oder verschieden sind und anionische Liganden darstellen, |
| R" | gleich oder verschieden sind und organische Reste darstellen, |
| Im | einen gegebenenfalls substituierten Imidazolidinrest darstellt und |
| An | ein Anion darstellt. |

Die Katalysatoren der allgemeinen Formel (C) sind prinzipiell bekannt (siehe z.B. Angew. Chem. Int. Ed. 2004,43, 6161-6165).

$X^1$ und $X^2$ können in der allgemeinen Formel (C) die gleichen allgemeinen, bevorzugten und besonders bevorzugten Bedeutungen besitzen wie in den Formeln (A) und (B).

Der Imidazolidinrest (Im) weist üblicherweise eine Struktur der allgemeinen Formeln (IIa) oder (IIb) auf, die bereits für den Katalysator-Typ der Formeln (A) und (B) genannt wurden und kann auch alle dort als bevorzugt genannten Strukturen, insbesondere die der Formeln (IIIa)-(IIIf) aufweisen.

Die Reste R" sind in der allgemeinen Formel (C) gleich oder verschieden und bedeuten einen geradkettigen oder verzweigten $C_1$-$C_{30}$-Alkyl-, $C_5$-$C_{30}$-Cylcoalkyl- oder Aryl-Rest, wobei die $C_1$-$C_{30}$-Alkylreste gegebenenfalls durch ein oder mehrere Doppel- oder Dreifachbindungen oder auch ein oder mehrere Heteroatome, bevorzugt Sauerstoff oder Stickstoff, unterbrochen sein können.

Aryl umfasst einen aromatischen Rest mit 6 bis 24 Gerüstkohlenstoffatomen. Als bevorzugte mono-, bi- oder tricyclische carbocyclische aromatische Reste mit 6 bis 10 Gerüstkohlenstoffatomen seien beispielsweise Phenyl, Biphenyl, Naphthyl, Phenanthrenyl oder Anthracenyl genannt.

Bevorzugt sind die Reste R" in der allgemeinen Formel (C) gleich und bedeuten Phenyl, Cyclohexyl, Cyclopentyl, Isopropyl, o-Tolyl, o-Xylyl oder Mesityl.

Alternativ kann auch ein **Katalysator der allgemeinen Formel (D)** eingesetzt werden, worin

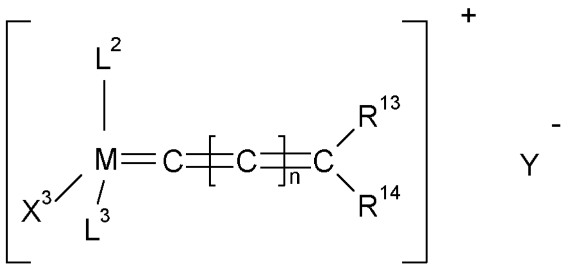

(D)

M Ruthenium oder Osmium bedeutet,
$R^{13}$, $R^{14}$ unabhängig voneinander Wasserstoff, $C_1$-$C_{20}$-Alkyl, $C_2$-$C_{20}$-Alkenyl, $C_2$-$C_{20}$ Alkinyl, $C_6$-$C_{24}$-Aryl, $C_1$-$C_{20}$-Carboxylat, $C_1$-$C_{20}$-Alkoxy, $C_2$-$C_{20}$-Alkenyloxy, $C_2$-$C_{20}$-Alkinyloxy, $C_6$-$C_{24}$-Aryloxy, $C_2$-$C_{20}$-Alkoxycarbonyl, $C_1$-$C_{20}$-Alkylthio, $C_1$-$C_{20}$ -Alkylsulfonyl oder $C_1$-$C_{20}$ Alkylsulfinyl bedeuten,
$X^3$ ein anionischer Ligand ist,
$L^2$ ein neutraler π-gebundener Ligand ist, unabhängig davon, ob mono- oder polycyclisch,
$L^3$ einen Ligand aus der Gruppe der Phosphine, sulfonierten Phosphine, fluorierten Phosphine, funktionalisierten Phosphine mit bis zu drei Aminoalkyl-, Ammoniumalkyl-, Alkoxyalkyl-, Alkoxycarbonylalkyl-, Hydrocarbonylalkyl-, Hydroxyalkyl- oder Ketoalkyl-Gruppen, Phosphite, Phosphinite, Phosphonite, Phosphinamine, Arsine, Stibine, Ether, Amine, Amide, Imine, Sulfoxide, Thioether und Pyridine darstellt,
$Y^-$ ein nicht-koordinierendes Anion ist und
n 0, 1, 2, 3, 4 oder 5 ist.

In einer weiteren Ausführungsform wird ein **Katalysator der allgemeinen Formel (E)** eingesetzt,

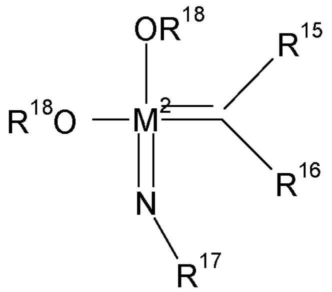

(E)

worin

$M^2$ Molybdän bedeutet,
$R^{15}$ und $R^{16}$ gleich oder verschieden sind und Wasserstoff, $C_1$-$C_{20}$-Alkyl, $C_2$-$C_{20}$-Alkenyl, $C_2$-$C_{20}$-Alkinyl, $C_6$-$C_{24}$-Aryl, $C_1$-$C_{20}$-Carboxylat, $C_1$-$C_{20}$-Alkoxy, $C_2$-$C_{20}$-Alkenyloxy, $C_2$-$C_{20}$-Alkinyloxy, $C_6$-$C_{24}$-Aryloxy, $C_2$-$C_{20}$-Alkoxycarbonyl, $C_1$-$C_{20}$-Alkylthio, $C_1$-$C_{20}$ -Alkylsulfonyl oder $C_1$-$C_{20}$ Alkylsulfinyl bedeuten,
$R^{17}$ and $R^{18}$ gleich oder verschieden sind und einen substituierten oder einen halogen-substituierten $C_1$-$C_{20}$-Alkyl, $C_6$-$C_{24}$-Aryl, $C_6$-$C_{30}$-Aralkyl-Rest oder Silikonenthaltende Analoga davon darstellen.

Alternativ kann auch ein **Katalysator der allgemeinen Formel (F)** eingesetzt werden,

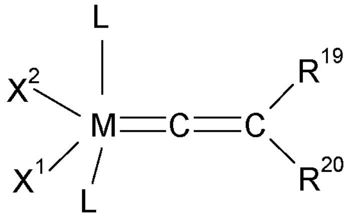

(F)

worin

M Ruthenium oder Osmium bedeutet,
$X^1$ und $X^2$ gleich oder verschieden sind und anionische Liganden darstellen, die alle in den allgemeinen Formeln (A) und (B) genannte Bedeutungen von $X^1$ und $X^2$ annehmen können,
L gleiche oder verschiedene Liganden darstellt, die alle in den allgemeinen Formeln (A) und (B) genannten Bedeutungen von L annehmen können,
$R^{19}$ and $R^{20}$ gleich oder verschieden sind und Wasserstoff oder substituiertes oder unsubstituiertes Alkyl bedeuten.

Alternativ kann auch ein **Katalysator der allgemeinen Formel (G), (H) oder (K)** eingesetzt werden,

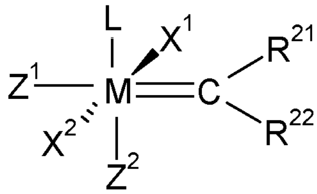

(G)

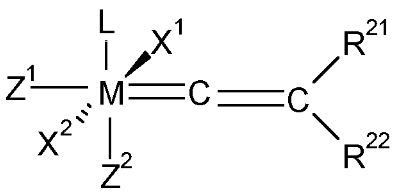

(H)

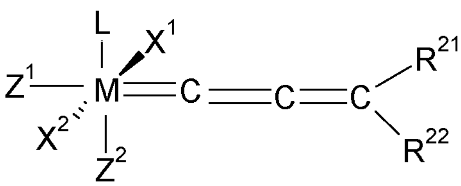

(K)

wobei

M Osmium oder Ruthenium bedeutet,
$X^1$ und $X^2$ gleich oder verschieden sind und zwei Liganden, bevorzugt anionische Liganden, darstellen,
L einen Liganden, bevorzugt einen neutralen Elektronen-Donor darstellt,
$Z^1$ und $Z^2$ gleich oder verschieden sind und neutrale Elektronen-Donoren darstellen,
$R^{21}$ und $R^{22}$ unabhängig voneinander Wasserstoff, Alkyl, Cycloalkyl, Alkenyl, Alkinyl, Aryl, Carboxylat, Alkoxy, Alkenyloxy, Alkinyloxy, Aryloxy, Alkoxycarbonyl, Alkylamino, Alkylthio, Alkylsulfonyl oder Alkylsulfinyl bedeuten, die jeweils durch ein oder mehrere Reste ausgewählt aus Alkyl, Halogen, Alkoxy, Aryl oder Heteroaryl substituiert sind.

Die Katalysatoren der allgemeinen Formeln (G), (H) und (K) sind prinzipiell bekannt, so z.B. aus WO 2003/011455 A1, WO 2003/087167 A2, Organometallics 2001, 20, 5314 und Angew. Chem. Int. Ed. 2002, 41, 4038. Die Katalysatoren sind kommerziell verfügbar oder aber nach den in den vorgenannten Literaturstellen angegebenen Herstellungsmethoden synthetisierbar.

In den erfindungsgemäß einsetzbaren Katalysatoren der allgemeinen Formeln (G), (H) und (K) eingesetzt sind

$Z^1$ und $Z^2$ gleich oder verschieden und stellen neutrale Elektronen-Donoren dar. Diese Liganden sind üblicherweise schwach koordinierend. Typischerweise handelt es sich um optional substituierte heterocyclische Gruppen. Hierbei kann es sich um fünf oder sechsgliedrige monocyclische Gruppen mit 1 bis 4, bevorzugterweise 1 bis 3 und besonders bevorzugt 1 oder 2 Heteroatomen handeln oder um zwei oder polycyclische Strukturen aus 2, 3, 4 oder 5 solcher fünf oder sechsgliedriger monocyclischer Gruppen, wobei alle jeweils vorgenannten Gruppen optional durch ein oder mehrere Alkyl, bevorzugt $C_1$-$C_{10}$-Alkyl, Cycloalkyl, bevorzugt $C_3$-$C_8$-Cycloalkyl, Alkoxy, bevorzugt $C_1$-$C_{10}$-Alkoxy, Halogen, bevorzugt Chlor oder Brom, Aryl, bevorzugt $C_6$-$C_{24}$-Aryl, oder Heteroaryl, bevorzugt $C_5$-$C_{23}$ Heteroaryl-Reste, die jeweils erneut durch ein oder mehrere Gruppen, bevorzugt ausgewählt aus der Gruppe bestehend aus Halogen, inbesondere Chlor oder Brom, $C_1$-$C_5$-Alkyl, $C_1$-$C_5$-Alkoxy und Phenyl substituiert sein können.

Beispiele für $Z^1$ und $Z^2$ umfassen Stickstoff enthaltende Heterocyclen wie Pyridine, Pyridazine, Bipyridine, Pyrimidine, Pyrazine, Pyrazolidine, Pyrrolidine, Piperazine, Indazole, Quinoline, Purine, Acridine, Bisimidazole, Picolylimine, Imidazolidine und Pyrrole.

$Z^1$ und $Z^2$ können auch miteinander verbrückt sein unter Ausbildung einer cyclischen Struktur. In diesem Fall handelt es sich bei $Z^1$ und $Z^2$ um einen einzigen zweizähnigen Liganden.

In den Katalysatoren der allgemeinen Formeln (G), (H) und (K) kann L die gleichen allgemeinen, bevorzugten und besonders bevorzugten Bedeutungen annehmen wie L in den allgemeinen Formeln (A) und (B).

In den Katalysatoren der allgemeinen Formeln (G), (H) und (K) sind $R^{21}$ und $R^{22}$ gleich oder verschieden und bedeuten Alkyl, bevorzugt $C_1$-$C_{30}$-Alkyl, besonders bevorzugt $C_1$-$C_{20}$-Alkyl, Cycloalkyl, bevorzugt $C_3$-$C_{20}$-Cycloalkyl, besonders bevorzugt $C_3$-$C_8$-Cycloalkyl, Alkenyl, bevorzugt $C_2$-$C_{20}$-Alkenyl, besonders bevorzugt $C_2$-$C_{16}$-Alkenyl, Alkinyl, bevorzugt $C_2$-$C_{20}$-Alkinyl, besonders bevorzugt $C_2$-$C_{16}$-Alkinyl, Aryl, bevorzugt $C_6$-$C_{24}$-Aryl, Carboxylat, bevorzugt $C_1$-$C_{20}$-Carboxylat, Alkoxy, bevorzugt $C_1$-$C_{20}$-Alkoxy, Alkenyloxy, bevorzugt $C_2$-$C_{20}$-Alkenyloxy, Alkinyloxy, bevorzugt $C_2$-$C_{20}$-Alkynyloxy, Aryloxy, bevorzugt $C_6$-$C_{24}$-Aryloxy, Alkoxycarbonyl, bevorzugt $C_2$-$C_{20}$-Alkoxycarbonyl, Alkylamino, bevorzugt $C_1$-$C_{30}$-Alkylamino, Alkylthio, bevorzugt $C_1$-$C_{30}$-Alkylthio, Arylthio, bevorzugt $C_6$-$C_{24}$-Arylthio, Alkylsulfonyl, bevorzugt $C_1$-$C_{20}$-Alkylsulphonyl, oder Alkylsulfinyl, bevorzugt $C_1$-$C_{20}$-Alkylsulphinyl, wobei die vorgenannten Substituenten durch einen oder mehrere Alkyl, Halogen, Alkoxy, Aryl oder Heteroaryl Reste substituiert sein können.

In den Katalysatoren der allgemeinen Formeln (G), (H) und (K) sind $X^1$ und $X^2$ gleich oder verschieden und können die gleichen allgemeinen, bevorzugten und besonders bevorzugten Bedeutungen haben wie zuvor für $X^1$ und $X^2$ in der allgemeinen Formel (A) angegeben.

Bevorzugt werden Katalysatoren der allgemeinen Formeln (G), (H) und (K) eingesetzt, wobei

M Ruthenium ist,

$X^1$ und $X^2$ beide Halogen, insbesondere Chlor darstellen,

$R^1$ und $R^2$ gleich oder verschieden sind und fünf- oder sechsgliedrige monocyclische Gruppen mit 1 bis 4, bevorzugterweise 1 bis 3 und besonders bevorzugt 1 oder 2 Heteroatomen darstellen oder zwei- oder polycyclische Strukturen aus 2, 3, 4 oder 5 solcher fünf- oder sechsgliedriger monocyclischer Gruppen, wobei alle jeweils vorgenannten Gruppen durch ein oder mehrere Alkyl, bevorzugt $C_1$-$C_{10}$-Alkyl, Cycloalkyl, bevorzugt $C_3$-$C_8$-Cycloalkyl, Alkoxy, bevorzugt $C_1$-$C_{10}$-Alkoxy, Halogen, bevorzugt Chlor oder Brom, Aryl, bevorzugt $C_6$-$C_{24}$-Aryl, oder Heteroaryl, bevorzugt $C_5$-$C_{23}$ Heteroaryl-Reste substituiert sein können,

$R^{21}$ und $R^{22}$ gleich oder verschieden sind und $C_1$-$C_{30}$-Alkyl $C_3$-$C_{20}$-Cycloalkyl, $C_2$-$C_{20}$-Alkenyl, $C_2$-$C_{20}$-Alkynyl, $C_6$-$C_{24}$-Aryl, $C_1$-$C_{20}$-Carboxylate, $C_1$-$C_{20}$-Alkoxy, $C_2$-$C_{20}$-Alkenyloxy, $C_2$-$C_{20}$-Alkynyloxy, $C_6$-$C_{24}$-Aryloxy, $C_2$-$C_{20}$-Alkoxycarbonyl, $C_1$-$C_{30}$-Alkylamino, $C_1$-$C_{30}$-Alkylthio, $C_6$-$C_{24}$-Arylthio, $C_1$-$C_{20}$-Alkylsulphonyl, $C_1$-$C_{20}$-Alkylsulphinyl darstellen, und

L eine Struktur der bereits zuvor beschriebenen allgemeinen Formeln (IIa) oder (IIb), inbesondere der Formeln (IIIa) bis (IIIf) besitzt.

Ein besonders bevorzugter Katalysator, der unter die allgemeine Formel (G) fällt, besitzt die Struktur (XIX),

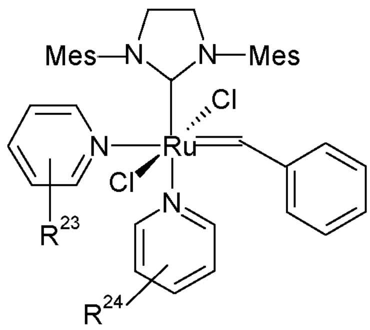

(XIX)

worin

$R^{23}$ und $R^{24}$ gleich oder verschieden sind und Halogen, geradkettiges oder verzweigtes $C_1$-$C_{20}$-Alkyl, $C_1$-$C_{20}$-Heteroalkyl, $C_1$-$C_{10}$-Haloalkyl, $C_1$-$C_{10}$-Alkoxy, $C_6$-$C_{24}$-Aryl, bevorzugt Phenyl, Formyl, Nitro, Stickstoff-Heterocyclen, bevorzugt Pyridin, Piperidin und Pyrazin, Carboxy, Alkylcarbonyl, Halocarbonyl, Carbamoyl, Thiocarbomoyl, Carbamido, Thioformyl, Amino, Dialkylamino, Trialkylsilyl und Trialkoxysilyl bedeuten.

Die genannten Reste $C_1$-$C_{20}$-Alkyl, $C_1$-$C_{20}$-Heteroalkyl, $C_1$-$C_{10}$-Haloalkyl, $C_1$-$C_{10}$-Alkoxy, $C_6$-$C_{24}$-Aryl, bevorzugt Phenyl, Formyl, Nitro, Stickstoff-Heterocyclen, bevorzugt Pyridin, Piperidin und Pyrazin, Carboxy, Alkylcarbonyl, Halocarbonyl, Carbamoyl, Thiocarbomoyl, Carbamido, Thio-formyl, Amino, Trialkylsilyl und Trialkoxysilyl können jeweils wieder durch ein oder mehrere Reste Halogen, bevorzugt Fluor, Chlor oder Brom, $C_1$-$C_5$-Alkyl, $C_1$-$C_5$-Alkoxy oder Phenyl substituiert sein.

Besonders bevorzugte Ausführungsformen des Katalysators der Formel (XIX) besitzen die Strukturen (XIX a) oder (XIX b), wobei $R^{23}$ und $R^{24}$ die gleichen Bedeutungen wie in der Formel (XIX) angegeben.

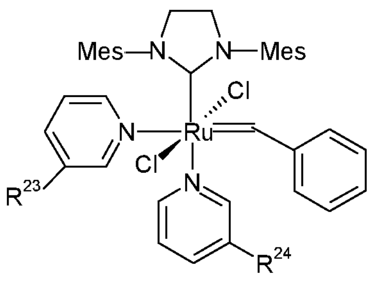

(XIXa)

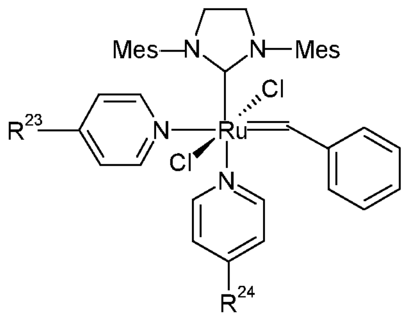

(XIXb)

Weitere geeignete Katalysatoren, die unter die allgemeinen Formeln (G), (H) und (K) fallen, besitzen die nachfolgend genannten Strukturformen (XX)-(XXXI), wobei Mes jeweils für 2,4,6-Trimethylphenyl steht. Verbindung (XX) wird in der Literatur auch als Grubbs-III-Katalysator bezeichnet.

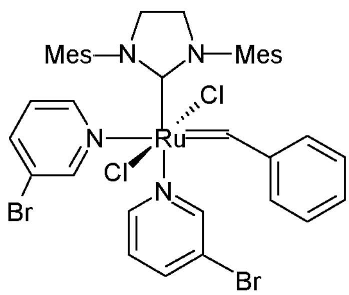

(XX)

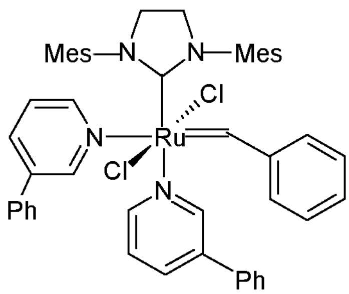

(XXI)

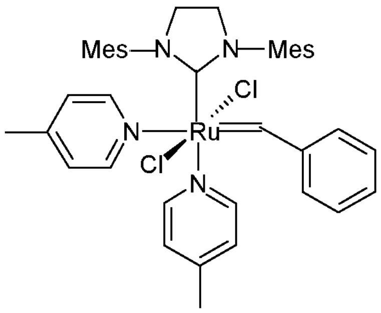

(XXII)

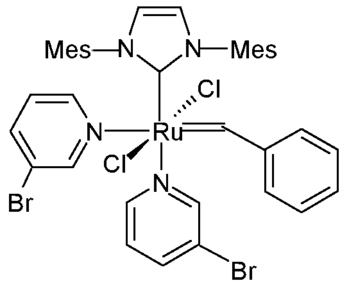

(XXIII)

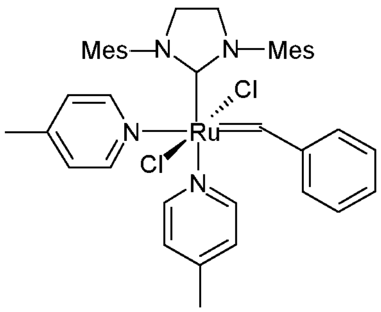

(XXIV)

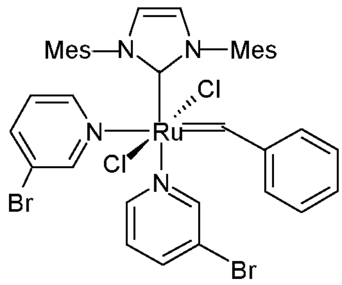

(XXV)

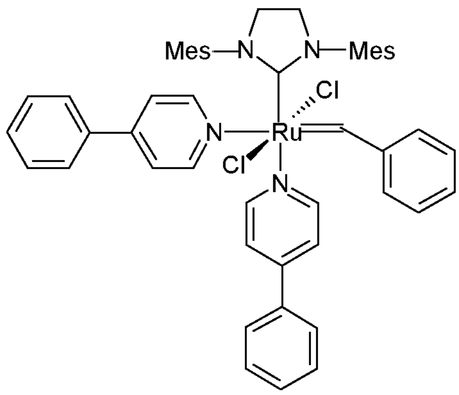

(XXVI)

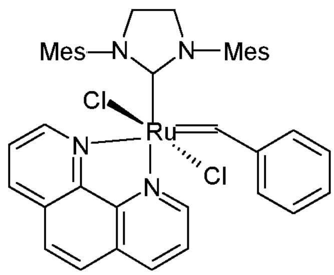

(XXVII)

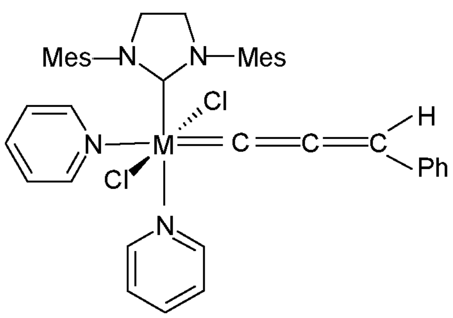

(XXVIII)

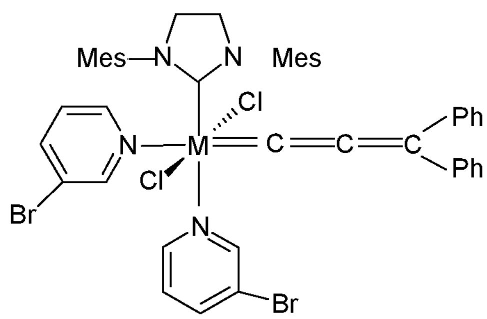

(XXIX)

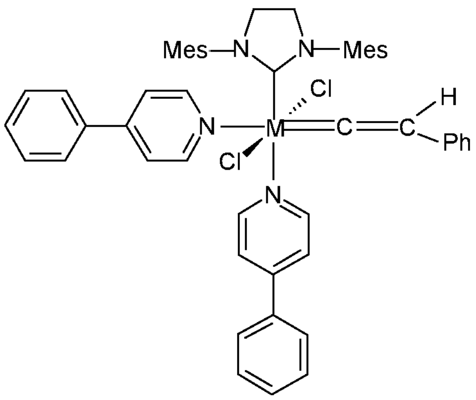

(XXX)

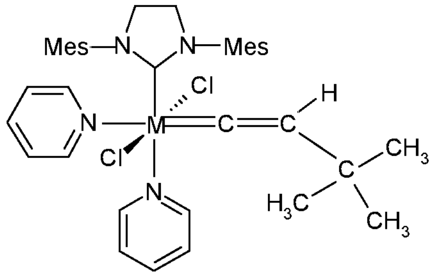

(XXXI)

Alternativ kann auch ein Katalysator (N) eingesetzt werden, der das allgemeine Strukturelement (N1) aufweisen, wobei das mit einem "*" gekennzeichnete Kohlenstoff-Atom über eine oder mehrere Doppelbindungen an das Katalysator-Grundgerüst gebunden ist,

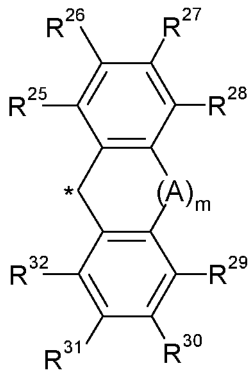

(N1)

und worin

$R^{25}$-$R^{32}$ gleich oder verschieden sind und für Wasserstoff, Halogen, Hydroxyl, Aldehyd, Keto, Thiol, $CF_3$, Nitro, Nitroso, Cyano, Thiocyano, Isocyanato, Carbodiimid, Carbamat, Thiocarbamat, Dithiocarbamat, Amino, Amido, Imino, Silyl, Sulfonat ($-SO_3^-$), $-OSO_3^-$,$-PO_3^-$ oder $OPO_3^-$ bedeuten oder für Alkyl-, Cycloalkyl-, Alkenyl-, Alkinyl-, Aryl-, Carboxylat-, Alkoxy-, Alkenyloxy-, Alkinyloxy-, Aryloxy-, Alkoxycarbonyl-, Alkylamino-, Alkylthio-, Arylthio-, Alkylsulfonyl-, Alkylsulfinyl, Dialkylamino-, Alkylsilyl oder Alkoxysilyl stehen, wobei diese Reste alle jeweils optional durch ein oder mehrere Alkyl-, Halogen-, Alkoxy-, Aryl- oder Heteroaryl-Reste substituiert sein können, oder alternativ jeweils zwei direkt benachbarte Reste aus der Gruppe von $R^{25}$-$R^{32}$ unter Einschluss der Ringkohlenstoff-Atome, an die sie gebunden sind, durch Verbrückung eine cyclische Gruppe, bevorzugt ein aromatisches System, ausbilden, oder alternativ $R^8$ gegebenenfalls mit einem anderen Liganden des Ruthenium- oder Osmium-Carben-Komplexkatalysators verbrückt ist,

m 0 oder 1 ist und

A Sauerstoff, Schwefel, $C(R^{33}R^{34})$, $N-R^{35}$, $-C(R^{36})=C(R^{37})-$, $-C(R^{36})(R^{38})-C(R^{37})(R^{39})-$bedeutet, worin $R^{33}$-$R^{39}$ gleich oder verschieden sind und jeweils die gleichen Bedeutungen besitzen können wie die Reste $R^{25}$-$R^{32}$.

Die erfindungsgemäßen Katalysatoren weisen das Strukturelement der allgemeinen Formel (N1) auf, wobei das mit einem "*" gekennzeichnete Kohlenstoff-Atom über eine oder mehrere Doppelbindungen an das Katalysator-Grundgerüst gebunden ist. Sofern das mit einem "*" gekennzeichnete Kohlenstoff-Atom über zwei oder mehr Doppelbindungen an das Katalysator-Grundgerüst gebunden ist, können diese Doppelbindungen kumuliert oder konjugiert sein. Derartige Katalysatoren (N) sind bereits in der EP-A-2 027 920 beschrieben, auf die hiermit für die Definition der Katalysatoren (N) und deren Herstellung Bezug genommen wird ("incorporated by reference"), soweit die entsprechenden Jurisdiktionen dies zulassen.

Zu den Katalysatoren (N) mit einem Strukturelement der allgemeinen Formel (N1) zählen beispielsweise solche der nachfolgenden **allgemeinen Formeln (N2a) und (N2b),**

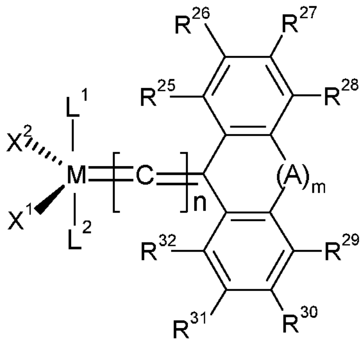

(N2a)

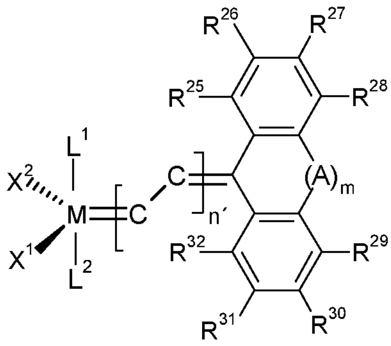

(N2b)

worin

| | |
|---|---|
| M | Ruthenium oder Osmium ist, |
| $X^1$ und $X^2$ | gleich oder verschieden sind und zwei Liganden, bevorzugt anionische Liganden, darstellen, |
| $L^1$ und $L^2$ | gleiche oder verschiedene Liganden, bevorzugt neutrale Elektronen-Donoren darstellen, wobei $L^2$ alternativ auch mit dem Rest $R^8$ verbrückt sein kann, |
| n | 0, 1, 2 oder 3, bevorzugt 0, 1 oder 2, ist, |
| n' | 1 oder 2, bevorzugt 1 ist, und |
| $R^{25}$-$R^{32}$, m und | A die gleichen Bedeutungen besitzen wie in der allgemeinen Formel (N1). |

Bei den Katalysatoren der allgemeinen Formel (N2a) ist das Strukturelement der allgemeinen Formel (N1) über eine Doppelbindung (n = 0) oder über 2, 3 oder 4 kumulierte Doppelbindungen (bei n = 1, 2 oder 3) an das Zentralmetall des Komplexkatalysators gebunden. Bei den erfindungsgemäßen Katalysatoren der allgemeinen Formel (N2b) ist das Strukturelement der allgemeinen Formel (N1) über konjugierte Doppelbindungen an das Metall des Komplexkatalysators gebunden. In beiden Fällen befindet sich an dem mit einem "*" gekennzeichneten C-Atom eine Doppelbindung in Richtung Zentralmetall des Komplexkatalysators.

Die Katalysatoren der allgemeinen Formel (N2a) und (N2b) umfassen somit Katalysatoren, bei denen die folgenden **allgemeinen Strukturelemente (N3)-(N9)**

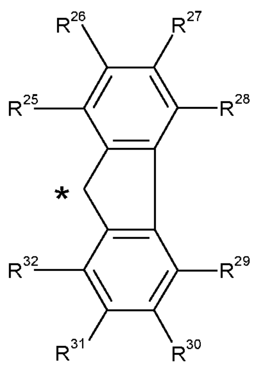

(N3)

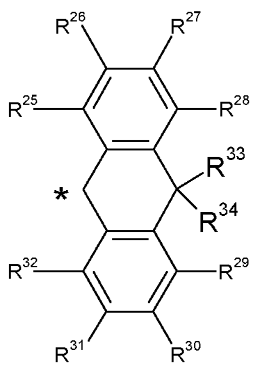

(N4)

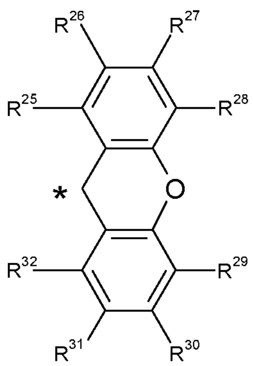

(N5)

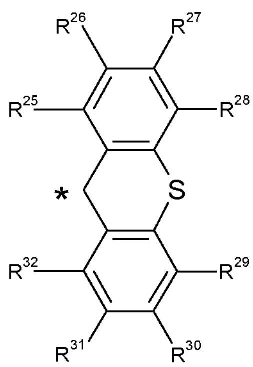

(N6)

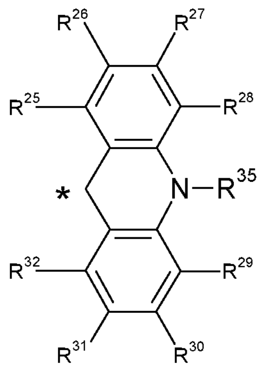

(N7)

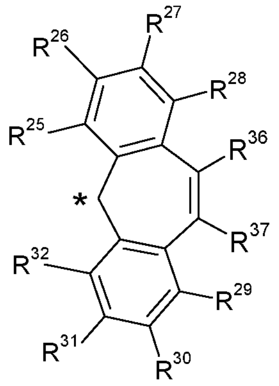

(N8)

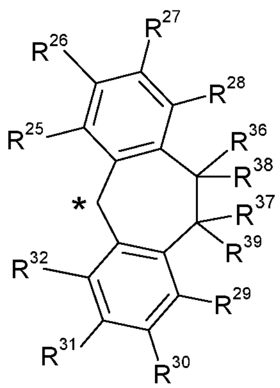

(N9)

über das mit einem "*" gekennzeichnete C-Atom über ein oder mehrere Doppelbindungen an das Katalysator-Grundgerüst der **allgemeinen Formel (N10a) bzw. (N10b)**

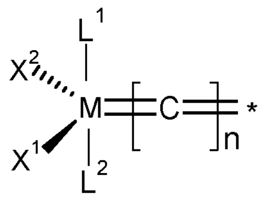

(N10a)

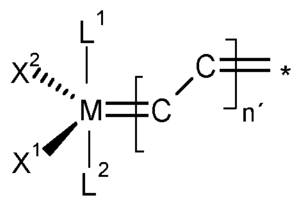

(N10b)

gebunden sind, wobei $X^1$ und $X^2$, $L^1$ und $L^2$, n, n' und $R^{25}$-$R^{39}$ die für die allgemeine Formeln (N2a) und (N2b) genannten Bedeutungen besitzen.

Typischerweise sind die erfindungsgemäßen Ruthenium- oder Osmium Carben-Katalysatoren fünffach koordiniert.

Im **Strukturelement der allgemeinen Formel (N1)** sind $R^{15}$-$R^{32}$ gleich oder verschieden und bedeuten Wasserstoff, Halogen, Hydroxyl, Aldehyd, Keto, Thiol, $CF_3$, Nitro, Nitroso, Cyano, Thiocyano, Isocyanato, Carbodiimid, Carbamat, Thiocarbamat, Dithiocarbamat, Amino, Amido, Imino, Silyl, Sulfonat ($-SO_3^-$), $-OSO_3^-$, $-PO_3^-$ oder $OPO_3^-$ oder stehen für Alkyl, bevorzugt $C_1$-$C_{20}$-Alkyl, insbesondere $C_1$-$C_6$-Alkyl, Cycloalkyl, bevorzugt $C_3$-$C_{20}$-Cycloalkyl, insbesondere $C_3$-$C_8$-Cycloalkyl, Alkenyl, bevorzugt $C_2$-$C_{20}$-Alkenyl, Alkinyl, bevorzugt $C_2$-$C_{20}$-Alkinyl, Aryl, bevorzugt $C_6$-$C_{24}$-Aryl, inbesondere Phenyl, Carboxylat, bevorzugt $C_1$-$C_{20}$-Carboxylat, Alkoxy, bevorzugt $C_1$-$C_{20}$-Alkoxy, Alkenyloxy, bevorzugt $C_2$-$C_{20}$-Alkenyloxy, Alkinyloxy, bevorzugt $C_2$-$C_{20}$-Alkinyloxy, Aryloxy, bevorzugt $C_6$-$C_{24}$-Aryloxy, Alkoxycarbonyl, bevorzugt $C_2$-$C_{20}$-Alkoxycarbonyl, Alkylamino, bevorzugt $C_1$-$C_{30}$-Alkylamino, Alkylthio, bevorzugt $C_1$-$C_{30}$-Alkylthio, Arylthio, bevorzugt $C_6$-$C_{24}$-Arylthio, Alkylsulfonyl, bevorzugt $C_1$-$C_{20}$-Alkylsulfonyl, Alkylsulfinyl, bevorzugt $C_1$-$C_{20}$-Alkylsulfinyl, Dialkylamino-, bevorzugt Di($C_1$-$C_{20}$-alkyl)amino, Alkylsilyl, bevorzugt $C_1$-$C_{20}$-Alkylsilyl, oder Alkoxysilyl, bevorzugt $C_1$-$C_{20}$-Alkoxysilyl-Reste darstellen, wobei diese Reste alle jeweils optional durch ein oder mehrere Alkyl-, Halogen-, Alkoxy-, Aryl- oder Heteroaryl-Reste substituiert sein können, oder alternativ auch jeweils zwei direkt benachbarte Reste aus der Gruppe von $R^{25}$-$R^{32}$ unter Einschluss der Ringkohlenstoff-Atome, an die sie gebunden sind, durch Verbrückung eine cyclische Gruppe, bevorzugt ein aromatisches System, ausbilden können, oder alternativ $R^8$ gegebenenfalls mit einem anderen Liganden des Ruthenium- oder Osmium-Carben-Komplexkatalysators verbrückt ist,

m ist   0 oder 1 und

A   bedeutet Sauerstoff, Schwefel, $C(R^{33})(R^{34})$, $N$-$R^{35}$, $-C(R^{36})$-$C(R^{37})$- oder $-C(R^{36})(R^{38})$-$C(R^{37})(R^{39})$-, worin $R^{33}$-$R^{39}$ gleich oder verschieden sind und jeweils die gleichen bevorzugten Bedeutungen besitzen können wie die Reste $R^1$-$R^8$.

**$C_1$-$C_6$-Alkyl** steht im **Strukturelement der allgemeinen Formel (N1)** beispielsweise für Methyl, Ethyl, n-Propyl, iso-Propyl, n-Butyl, sec.-Butyl, tert.-Butyl, n-Pentyl, 1-Methylbutyl, 2-Methylbutyl, 3-Methylbutyl, neo-Pentyl, 1-Ethylpropyl und n-Hexyl.

**$C_3$-$C_8$-Cycloalkyl** steht im **Strukturelement der allgemeinen Formel (N1)** beispielsweise für Cyclopropyl, Cyclobutyl, Cylopentyl, Cyclohexyl, Cycloheptyl und Cyclooctyl.

**$C_6$-$C_{24}$-Aryl** umfasst im **Strukturelement der allgemeinen Formel (N1)** einen aromatischen Rest mit 6 bis 24 Gerüstkohlenstoffatomen. Als bevorzugte mono-, bi- oder tricyclische carbocyclische aromatische Reste mit 6 bis 10 Gerüstkohlenstoffatomen seien beispielsweise Phenyl, Biphenyl, Naphthyl, Phenanthrenyl oder Anthracenyl genannt.

Die Reste $X^1$ und $X^2$ im Strukturelement der allgemeinen Formel **(N1)** besitzen die gleichen allgemeinen, bevorzugten und besonders bevorzugten Bedeutungen, die für Katalysatoren der allgemeinen Formel A genannt werden.

In den allgemeinen Formeln (N2a) und (N2b) bzw. analog in den allgemeinen Formeln (N10a) und (N10b) stehen die Reste $L^1$ und $L^2$ für gleiche oder verschiedene Liganden, bevorzugt neutrale Elektronen-Donoren und können die gleichen allgemeinen, bevorzugten und besonders bevorzugten Bedeutungen besitzen, die für die Katalysatoren der allgemeinen Formel A genannt sind.

Bevorzugt sind Katalysatoren der allgemeinen Formeln (N2a) oder (N2b) mit einer allgemeinen Struktureinheit (N1), wobei

| | |
|---|---|
| M | Ruthenium darstellt, |
| $X^1$ und $X^2$ | gleichzeitig Halogen bedeuten, |
| n | 0,1 oder 2 ist in der allgemeinen Formel (N2a) bzw. |
| n' | 1 ist in der allgemeinen Formel (N2b) |
| $L^1$ und $L^2$ | gleich oder verschieden sind und die für die allgemeinen Formeln (N2a) und (N2b) genannten allgemeinen oder bevorzugten Bedeutungen besitzen, |
| $R^{25}$-$R^{32}$ | gleich oder verschieden sind und die für die allgemeinen Formeln (N2a) und (N2b) genannten allgemeinen oder bevorzugten Bedeutungen besitzen, |
| m | entweder 0 oder 1 ist, |

und, wenn m = 1 ist

A für Sauerstoff, Schwefel, $C(C_1$-$C_{10}$-Alkyl$)_2$, -$C(C_1$-$C_{10}$-Alkyl$)_2$-$C(C_1$-$C_{10}$-Alkyl$)_2$-, -$C(C_1$-$C_{10}$-Alkyl$)=C(C_1$-$C_{10}$-Alkyl)- oder -$N(C_1$-$C_{10}$-Alkyl) steht.

Ganz besonders bevorzugt sind Katalysatoren der Formeln (N2a) oder (N2b) mit einer allgemeinen Struktureinheit (N1), wobei

| | |
|---|---|
| M | Ruthenium darstellt, |
| $X^1$ und $X^2$ | beide Chlor bedeuten, |
| n | 0,1 oder 2 ist in der allgemeinen Formel (N2a)bzw. |
| n' | 1 ist in der allgemeinen Formel (N2b) |
| $L^1$ | einen Imidazolidin-Rest der Formeln (IIIa) bis (IIIf) darstellt, |
| $L^2$ | einen sulfonierten Phosphin-, Phosphat-, Phosphinit-, Phosphonit-, Arsin-, Stibin-, Ether-, Amin-, Amid-, Sulfoxid-, Carboxyl-, Nitrosyl-, Pyridin-Rest, einen Imidazolidin-Rest der Formeln (XIIa) bis (XIIf) oder einen Phosphin-Liganden, insbesondere $PPh_3$, $P(p\text{-}Tol)_3$, $P(o\text{-}Tol)_3$, $PPh(CH_3)_2$, $P(CF_3)_3$, $P(p\text{-}FC_6H_4)_3$, $P(p\text{-}CF_3C_6H_4)_3$, $P(C_6H_4\text{-}SO_3Na)_3$, $P(CH_2C_6H_4\text{-}SO_3Na)_3$, $P(iso\text{-}Propyl)_3$, $P(CHCH_3(CH_2CH_3))_3$, $P(Cyclopentyl)_3$, $P(Cyclohexyl)_3$, $P(Neopentyl)_3$ und $P(Neophenyl)_3$ darstellt, |
| $R^{25}$-$R^{32}$ | die für die allgemeinen Formeln (N2a) und (N2b) genannten allgemeinen oder bevorzugten Bedeutungen besitzen, |
| m | entweder 0 oder 1 ist, |
| und, wenn m = | 1 ist |
| A | für Sauerstoff, Schwefel, $C(C_1$-$C_{10}$-Alkyl$)_2$, -$C(C_1$-$C_{10}$-Alkyl$)_2$-$C(C_1$-$C_{10}$-Alkyl$)_2$-, -$C(C_1$-$C_{10}$-Alkyl$)=C(C_1$-$C_{10}$-Alkyl)- oder -$N(C_1$-$C_{10}$-Alkyl) steht. |

Für den Fall, dass der Rest $R^{25}$ mit einem anderen Liganden des Katalysators der Formel N verbrückt ist, ergeben sich beispielsweise für die Katalysatoren der allgemeinen Formeln (N2a) und (N2b) die folgenden Strukturen der allgemeinen Formeln (N13a) und (N13b)

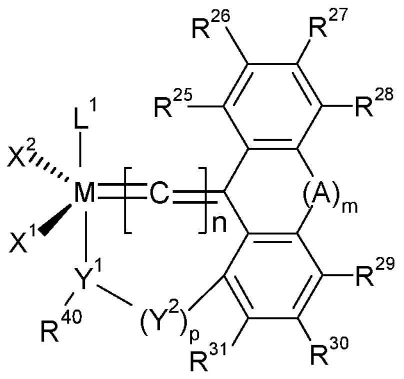

(N13a)

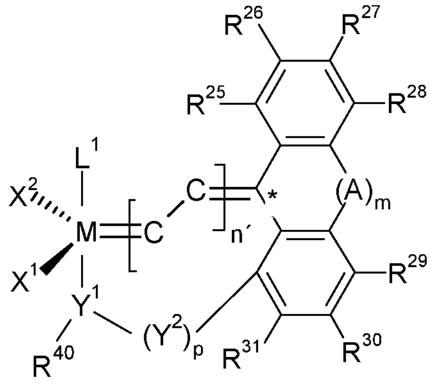

(N13b)

worin

- $Y^1$ Sauerstoff, Schwefel, einen Rest N-$R^{41}$ oder einen Rest P-$R^{41}$ bedeutet, wobei $R^{41}$ die nachfolgend genannten Bedeutungen besitzt,
- $R^{40}$ und $R^{41}$ gleich oder verschieden sind und einen Alkyl-, Cycloalkyl-, Alkenyl-, Alkinyl-, Aryl-, Alkoxy-, Alkenyloxy-, Alkinyloxy-, Aryloxy-, Alkoxycarbonyl-, Alkylamino-, Alkylthio-, Arylthio-, Alkylsulfonyl- oder Alkyl-sulfinyl-Rest darstellen, die alle jeweils optional durch ein oder mehrere Alkyl-, Halogen-, Alkoxy-, Aryl- oder Heteroaryl-Reste substituiert sein können,
- p 0 oder 1 ist und
- $Y^2$ wenn p = 1 ist, für $-(CH_2)_r-$ mit r = 1, 2 oder 3, $-C(=O)-CH_2-$, $-C(=O)-$, $-N=CH-$,$-N(H)-C(=O)-$ oder aber alternativ die gesamte Struktureinheit "$-Y^1(R^{40})-(Y^2)_p-$,, für ($-N(R^{40})=CH-CH_2-$), ($-N(R^{40},R^{41})=CH-CH_2-$), steht und

wobei M, $X^1$, $X^2$, $L^1$, $R^{25}$-$R^{32}$, A, m und n die gleichen Bedeutungen besitzen wie in den allgemeinen Formeln (IIa) und (IIb).

Als **Beispiele für Katalysatoren der Formel (N)** seien die folgenden Strukturen genannt:

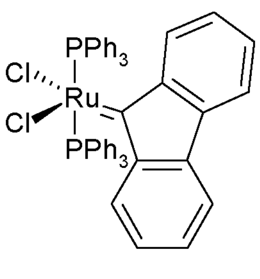

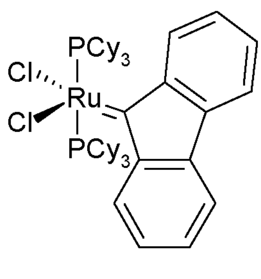

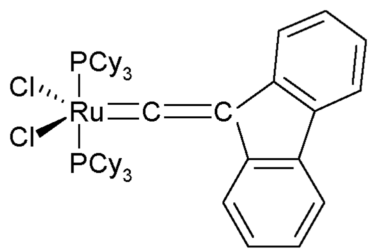

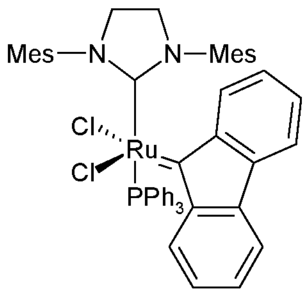

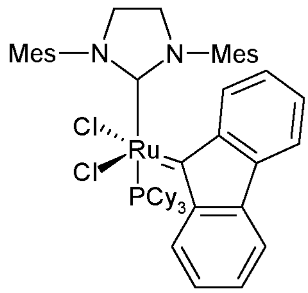

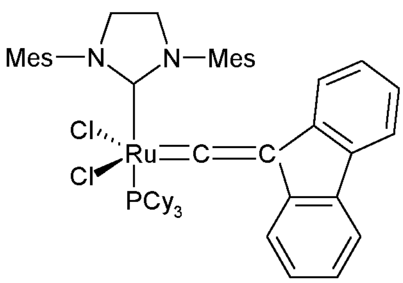

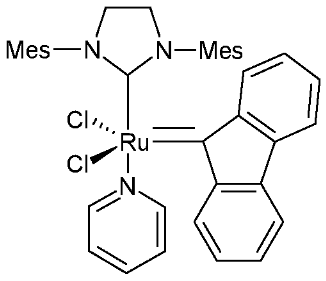
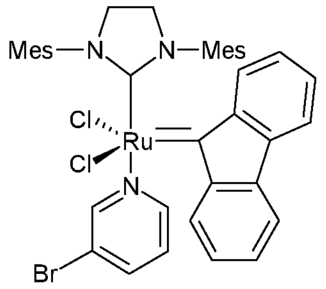
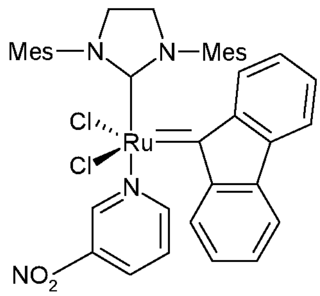

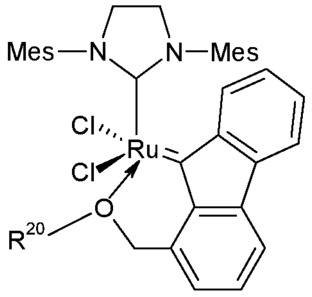
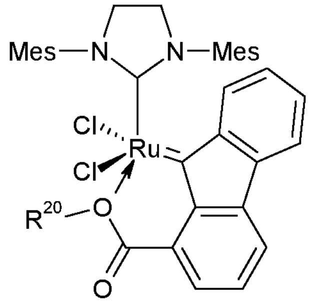
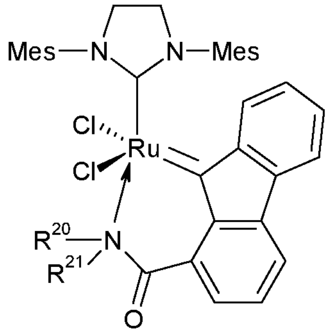

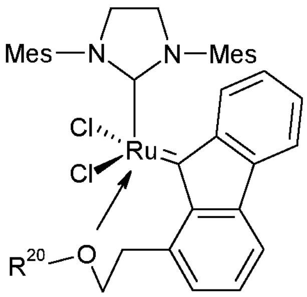
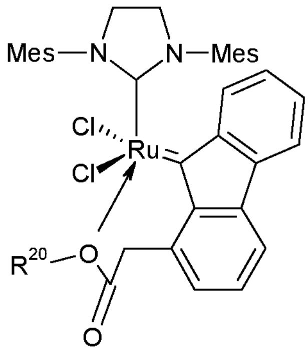
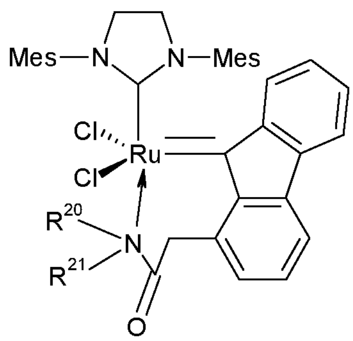

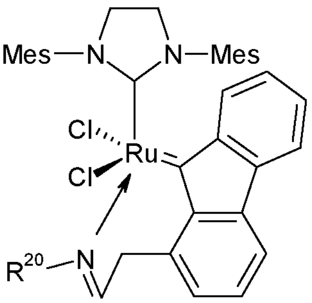
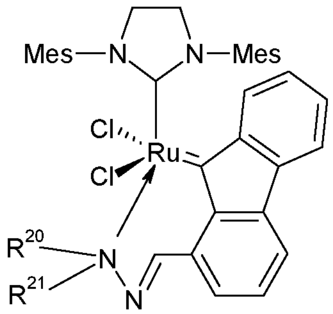
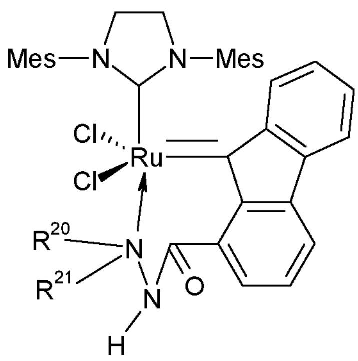

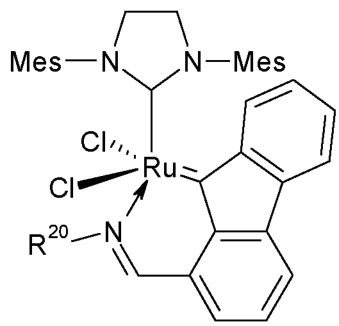

Zur Steigerung der Aktivität der beim Metatheseabbau des teilhydrierten Nitrilkautschuks einsetzbaren vorgenannten Katalysatoren können verschiedene Salze gemäß EP-A-1 825 913, Phosphane entsprechend EP-A-1 894 946, Erdalkalihalogenide entsprechend EP-A-2 027 919, Übergangsmetallalkoxiden gemäß EP-A-2030988, $BF_3$-Addukte nach EP-A-2 145 681 und Borsäureester gemäß EP-A-2 145 680 zugesetzt werden. Auch Kombinationen dieser Zusätze sind möglich.

**Durchführung der Metathese-Reaktion:**

Im erfindungsgemäßen Verfahren hängt die Menge des für die Metathese eingesetzten Katalysators von der Natur sowie katalytischen Aktivität des speziellen Katalysators ab. Die Menge an eingesetztem Katalysator, bezogen auf den eingesetzten teilhydrierten Nitrilkautschuk, beträgt 5 bis 1.000 ppm Edelmetall, bevorzugt von 10 - 500 ppm, insbesondere von 25- 250 ppm.

Die Metathese-Reaktion wird üblicherweise in einem geeigneten Lösungsmittel durchgeführt, welches den eingesetzten Katalyator nicht deaktiviert und die Reaktion auch nicht in irgendeiner anderen Weise negativ beeinflusst. Bevorzugte Lösungsmittel umfassen, sind aber nicht begrenzt auf, Dichlormethan, Benzol, Toluol, Methylethylketon, Aceton, Tetrahydrofuran, Tetrahydropyran, Dioxan und Cyclohexan. Das besonders bevorzugte Lösungsmittel ist Chlorbenzol.

Die Konzentration des eingesetzten teilhydrierten Nitrilkautschuks in der Reaktionsmischung der Metathese ist nicht kritisch, aber es ist natürlich zu beachten, dass die Reaktion nicht durch eine viel zu hohe Viskosität der Reaktionsmischung und die damit verbundenen Mischungsprobleme negativ beeinflusst werden sollte. Bevorzugt liegt die Konzentration des teilhydrierten Nitrilkautschuks in der Reaktionsmischung im Bereich von 1 bis 20 Gew.%, besonders bevorzugt im Bereich von 5 bis 15 Gew.%, bezogen auf die gesamte Reaktionsmischung.

Der Metathese Abbau wird üblicherweise bei einer Temperatur im Bereich von 20 °C bis 150°C durchgeführt, bevorzugt im Bereich von 25 bis 100 °C, insbesondere im Bereich von 30 bis 90 °C.

Besonders bevorzugt wird die Metathese bei einer Temperatur im Bereich von 25 bis 90°C durchgeführt, insbesondere bei einer Temperatur im Bereich von 25 bis 80°C.

Die Reaktionszeit hängt von einer Reihe von Faktoren ab, beispielweise vom Typ des teilhydrierten Nitrilkautschuks, der Art des Katalysators, der verwendeten Katalysator-Konzentration und der Reaktionstemperatur. Typischerweise ist die Reaktion innerhalb von wenigen Stunden, bevorzugt bis zu drei Stunden unter normalen Bedingungen beendet. Der Fortschritt der Metathese kann durch Standard-Analytik überwacht werden, z.B. durch GPC oder Bestimmung der Viskosität.

**Bestimmung von $M_w$ und $M_n$ an den Nitrilkautschuken mittels GPC:**

Die Bestimmung des Gewichtsmittels Mw und des Zahlenmittels Mn des Molekulargewichts erfolgt mittels Gelpermeationschromatographie (GPC). Für die GPC-Analytik werden dem Reaktionsgemisch kleine Proben der Lösungen des teilhydrierten Nitrilkautschuks entnommen, und durch Zusatz einer geeigneten Menge Ethylvinylether abgestoppt und mit N,N'-Dimethylacetamid verdünnt (z.B. durch Zugabe von 3 mL N,N'-Dimethylacetamid (Firma Acros Organics; mit 5 g/L LiBr versetzt) zu 0,2 ml der abgestoppten Nitrilkautschuk Lösung. Vor Durchführung der GPC-Analyse werden diese Lösungen jeweils filtriert, bewährt hat sich ein 0,2 μm-Spritzenfilter aus Teflon (Chromafil PTFE 0,2 μm; Firma Macherey-Nagel). Im Anschluss daran erfolgt die GPC-Analyse mit einem Gerät der Firma Waters, ausgestattet mit einem Waters 717 Autosampler, einer Vorsäule PSS Gram 10μm 8 x 50 mm, einer Säule PSS Gram-30 10μm 8 x 300 mm und zwei Säulen PSS Gram-1000 10μm 8 x 300 mm der Firma Polymer Standards Service, einem Waters 410 RI Detektor und Cirrus Software Multi Version 3.0. Die Kalibrierung der Säulen erfolgt mit linearem Polymethylmethacrylat der Molmassen 600 bis 1,64 · 106 g/mol der Firma Polymer Standards Service. Die Messungen wurden mit einer Flussrate von 1,0 mL/min bei 80°C unter Verwendung von N,N'-Dimethylacetamid (mit 5 g/L LiBr) als Eluent durchgeführt.

**Bestimmung der Lösungsviskosität ("LV")**

Die Bestimmung der Lösungsviskosität erfolgt an einem Kegel-Platte-Rheometer (Brookfield RVDV-III UCP) der Firma Brookfield (Lorch). Zu den gewünschten Reaktionszeitpunkten wird eine geeignete Menge an Reaktionslösung aus dem System entnommen und unmittelbar anschließend die Lösungsviskosität bestimmt. Bewährt hat sich die Entnahme einer Menge von jeweils 2 ml. Die Messung erfolgt mit einem Kegel CPE-41 bei 25°C. Die Feststoffkonzentration des teilhydrierten NBR-Kautschuks bzw. zum Vergleich vermessener NBR Kautschuke im Lösungsmittel Monochlorbenzol beträgt 12 Gew.-%. Die Drehzahl wird so eingestellt, dass bei maximal möglichem Drehmoment gemessen wird. Aus den so bestimmten Werten kann die Kennzahl LV/Mw berechnet werden.

**Vulkanisierbare Mischungen:**

**Gegenstand der Erfindung** sind ferner vulkanisierbare Mischungen enthaltend

(i) mindestens einen teilhydrierten Nitrilkautschuk mit einem Hydriergrad im Bereich von 50 bis 97%, der einen Quotienten aus Lösungsviskosität (LV) dividiert durch das Gewichtsmittel des Molekulargewichts (Mw) im Bereich von 4*10-3 bis 50*10-3 Pa*s*mol/kg aufweist, und
(ii) mindestens einem peroxidischen Vernetzungssystem.

Bereitgestellt werden ferner vulkanisierbare Mischungen enthaltend

(i) mindestens einen teilhydrierten Nitrilkautschuk mit einem Hydriergrad im Bereich von 50 bis 97%, der einen Quotienten aus Lösungsviskosität (LV) dividiert durch das Gewichtsmittel des Molekulargewichts (Mw) im Bereich von $4*10^{-3}$ bis $30*10^{-3}$ Pa*s*mol/kg aufweist, und
(ii) mindestens einem peroxidischen Vernetzungssystem.

Zusätzlich können die vulkanisierbaren Mischungen noch ein oder mehrere weitere übliche Additive enthalten.

Die Herstellung dieser vulkanisierbaren Mischungen erfolgt üblicherweise durch Mischen des zuvor bereits hergestellten Kautschukblends (i) mit mindestens einem peroxidischen Vernetzungssystem (ii) und gegebenenfalls den weiteren Additiven.

Im peroxidischen Vernetzungssystem können als **peroxidische Vernetzer** beispielsweise Bis(2,4-dichlorbenzyl)peroxid, Dibenzoylperoxid, Bis(4-chlorbenzoyl)peroxid, 1,1-Bis-(t-butylperoxy)-3,3,5-trimethylcylohexan, tert-Butylperbenzoat, 2,2 Bis(t-butylperoxy) buten, 4,4-di-tert.Butyl peroxynonylvalerat, Dicumylperoxid, 2,5-Dimethyl-2,5-di(t-butylperoxy)-hexan, tert-Butylcumylperoxid, 1,3-Bis(t-butylperoxy isopropyl)-benzol, Di-t-butylperoxid und 2,5-Dimethyl-2,5-di(t-butylperoxy)-hexyn-3 eingesetzt werden.

Es kann vorteilhaft sein, im peroxidischen Vernetzungssystem neben den peroxidischen Vernetzern noch weitere Zusätze zu verwenden, mit deren Hilfe die Vernetzungsausbeute erhöht werden kann: Hierfür sind beispielsweise Triallylisocyanurat, Triallylcyanurat, Trimethylolpropan-tri(meth)acrylat, Triallyltrimellithat, Ethylenglycoldimethacrylat, Butandioldimethacrylat, Trimetylolpropan-trimethacrylat, Zn-diacrylat, Zn-dimethacrylat, 1,2-Polybutadien oder N,N'-m-phenylen-dimaleinimid geeignet.

Die Gesamtmenge des peroxidischen Vernetzungssystems liegt üblicherweise im Bereich von 0,1 bis 100 Gew.-Teile, bevorzugt im Bereich von 0,5 bis 75 Gew.-Teile und besonders bevorzugt im Bereich von 1 bis 50 Gew.-Teile, bezogen auf 100 Gew.-Teile des teilhydrierten Nitrilkautschuks. Die Menge an peroxidischem Vernetzer, also aktiver Substanz, liegt dabei üblicherweise im Bereich von 0,5 bis 15 Gew.-Teilen, bevorzugt im Bereich von 1 bis 12,5 Gew.-Teilen und besonders bevorzugt im Bereich von 1,5 bis 10 Gew.-Teilen, bezogen auf 100 Gew.-Teilen des teilhydrierten Nitrilkautschuks.

Neben der Zugabe des peroxidischen Vernetzungssystems kann die vulkanisierbare Mischung auch weitere übliche Kautschukadditive enthalten.

Diese schließen beispielsweise die typischen und dem Fachmann gut bekannten Substanzen wie Füllstoffe, Füllstoffaktivatoren, Anvulkanisationsverzögerer, Ozonschutzmittel, Alterungsschutzmittel, Antioxidationsmittel, Verarbeitungshilfsmittel, Extenderöle, Weichmacher, Verstärkungsmaterialien und Formtrennmittel ein.

Als Füllstoffe können beispielsweise Ruß, Kieselsäure, Bariumsulfat, Titandioxid, Zinkoxid, Calciumoxid, Calciumcarbonat, Magnesiumoxid, Aluminiumoxid, Eisenoxid, Aluminiumhydroxid, Magnesiumhydroxid, Aluminiumsilikate, Diatomeenerde, Talkum, Kaoline, Bentonite, Kohlenstoff Nanotubes, Teflon (letzteres bevorzugt in Pulverform), Silikate oder Mikrogele eingesetzt werden.

Als **Füllstoffaktivatoren** kommen insbesondere organische Silane, wie beispielsweise Vinyltrimethyloxysilan,

Vinyldimethoxymethylsilan, Vinyltriethoxysilan, Vinyltris(2-methoxy-ethoxy)silan, N-Cyclohexyl-3-aminopropyltrimethoxysilan, 3-Aminopropyl-trimethoxysilan, Methyltrimethoxysilan, Methyltlriethoxysilan, Dimethyldimethoxysilan, Dimethyldiethoxysilan, Trimethylethoxysilan, Isooctyltrimethoxysilan, Isooctyltriethoxysilan, Hexadecyltrimethoxysilan oder (Octadecyl)methyldimethoxysilan in Betracht. Weitere Füllstoffaktivatoren stellen zum Beispiel grenzflächenaktive Substanzen wie Triethanolamin und Ethylenglykole mit Molekulargewichten von 74 bis 10 000 g/mol dar. Die Menge an Füllstoffaktivatoren beträgt üblicherweise 0 bis 10 phr, bezogen auf die Menge des Füllstoffs. Die Bestimmung der geeigneten Menge an Füllstoffaktivator ist dem Fachmann in Abhängigkeit von der Art und Menge des Füllstoffs geläufig.

Daneben können auch **Anvulkanisationsverzögerer** eingesetzt werden. Hierzu gehören z.B.Verbindungen wie sie in WO-A-97/01597 und US-A-4,857,571 genannt sind. Bevorzugt sind sterisch gehinderte p-Dialkylaminophenole, insbesondere Ethanox 703 (Sartomer)

Als **Alterungsschutzmittel** können den vulkanisierbaren Mischungen beispielsweise die folgenden zugesetzt werden: Polymerisiertes 2,2,4-Trimethyl-1,2-dihydrochinolin (TMQ), 2-Mercaptobenzimidazol (MBI), Methyl-2-Mercaptobenzimidazol (MMBI) oder Zinkmethylmercaptobenzimidazol (ZMMBI).

Alternativ können auch die folgenden, allerdings weniger bevorzugten Alterungsschutzmittel eingesetzt werden: aminische Alterungsschutzmittel z. B. in Form von Mischungen aus Diaryl-p-phenylendiaminen (DTPD), octyliertem Diphenylamin (ODPA), Phenyl-$\alpha$-Naphthylamin (PAN) und/oder Phenyl-$\beta$-Naphthylamin (PBN). Vorzugsweise werden solche auf Phenylendiaminbasis eingesetzt. Beispiele für Phenylendiamine sind N-Isopropyl-N'-phenyl-p-Phenylendiamin, N-1,3-Dimethylbutyl-N'-Phenyl-p-Phenylendiamin (6PPD), N-1,4-Dimethylpentyl-N'-phenyl-p-Phenylendiamin (7PPD) und N,N'-bis-1,4-(1,4-Dimethylpentyl)-p-Phenylendiamin (7PPD).

Die Alterungsschutzmittel werden üblicherweise in Mengen von bis zu 10 Gew.Teilen, bevorzugt bis zu 5 Gew.Teilen, besonders bevorzugt 0,25 bis 3 Gew.Teilen, inbesondere 0,4 bis 1,5 Gew. Teile, bezogen auf 100 Gew.Teile der Summe aus teilhydriertem Nitrilkautschuk und vinylgruppenhaltigem Silikonkautschuk eingesetzt.

Als **Formtrennmittel** kommen beispielsweise in Betracht: Gesättigte und teilweise ungesättigte Fett- und Ölsäuren und deren Derivate (Fettsäureester, Fettsäuresalze, Fettalkohole, Fettsäureamide), die vorzugsweise als Mischungsbestandteil Verwendung finden, weiterhin auf die Formoberfläche applizierbare Produkte, wie beispielsweise Produkte auf Basis von niedermolekularen Silikonverbindungen, Produkte auf Basis von Fluorpolymeren sowie Produkte auf Basis von Phenolharzen.

Die Formtrennmittel werden üblicherweise in Mengen von ca. 0 bis 10 Gew.Teilen, bevorzugt 0,5 bis 5 Gew.Teilen, bezogen auf 100 Gew.Teile der Summe aus teilhydriertem Nitrilkautschuk und vinylgruppenhaltigem Silikonkautschuk eingesetzt.

Auch die Verstärkung mit Festigkeitsträgern (Fasern) aus Glas, nach der Lehre von US-A-4,826,721 ist möglich sowie die Verstärkung durch Corde, Gewebe, Fasern aus aliphatischen und aromatischen Polyamiden (Nylon®, Aramid®), Polyestern und Naturfaserprodukten.

**Gegenstand der Erfindung** ist ferner ein Verfahren zur Herstellung von Vulkanisaten, welches dadurch gekennzeichnet ist, dass man die zuvor beschriebene vulkanisierbare Mischung durch Erhöhung der Temperatur vernetzt, bevorzugt in einem Formgebungsverfahren, besonders bevorzugt unter Anwendung des Spritzgusses.

**Gegenstand der Erfindung** ist somit ebenso das Vulkanisat, bevorzugt als Formteil vorliegend, welches durch das vorgenannte Vulkanisationsverfahren erhältlich ist.

Durch dieses Vulkanisationsverfahren können eine Vielzahl von Formteilen hergestellt werden, so z.B. Dichtungen, Kappen, Schläuche oder Membranen. Insbesondere können O-Ringdichtungen, Flachdichtungen, Wellendichtringe, Dichtmanschetten, Dichtkappen, Staubschutzkappen, Steckerdichtungen, Thermoisolierschläuche, Ölkühlerschläuche, Luftansaugschläuche, Servolenkschläuche oder Pumpenmembranen hergestellt werden.

## Beispiele:

### A Teilhydrierte Nitrilkautschuke, Katalysatoren, sonstige Hilfsstoffe

In den nachfolgenden Beispielen wurden die in **Tabelle 1** aufgeführten Metathesekatalysatoren sowie die in **Tabelle 2** aufgeführten teilhydrierten NBR-Kautschuke sowie ein NBR Kautschuk (für Vergleichsversuche) eingesetzt.

**Tabelle 1: Eingesetzte Metathesekatalysatoren**

| Bezeichnung des Katalysators | Strukturformel | Molekulargewicht [g/mol] | Quelle |
|---|---|---|---|
| Grubbs-II-Katalysator | 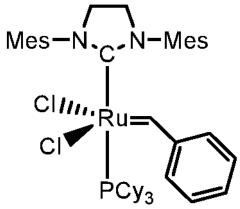 | 848,33 | Firma Materia / Pasadena; USA |
| Grubbs-Hoveyda-Katalysator | 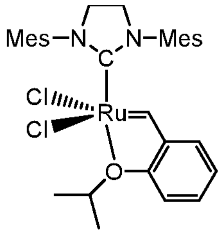 | 626,14 | Aldrich |
| Grela-Katalysator | 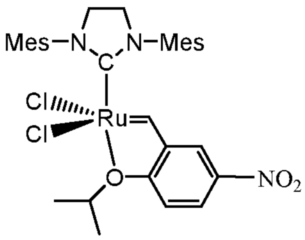 | 671,13 | Herstellung gemäß J. Org. Chem. 2004,69,6894-6896 |
| Grubbs-III-Katalysator | 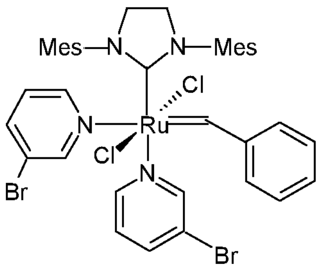 | 884,54 | Aldrich |

**Tabelle 2: Eingesetzter Nitrilkautschuk ("NBR") bzw. teilhydrierter Nitrilkautschuk ("TH-NBR")**

| Eingesetzter Kautschuk [4] | ACN-Gehalt *[5] [Gew.%] | ML 1+4 (100°C) [ME] | Hydriergrad [%] | Vinyl-gehalt [%] | $M_w$ [kg/mol] | $M_n$ [kg/mol] | PDI *[1] | Lösungsviskosität (LV) *[3] [Pa*s] | LV/$M_w$ [Pa*s*mol/kg] | Quelle *[2] |
|---|---|---|---|---|---|---|---|---|---|---|
| Perbunan® NT 3435 | 34 | 35 | 0 | 10 | 223 | 69,4 | 3,2 | 1,3 | $5{,}83*10^{-3}$ | LXS |
| TH-NBR 1 | 34 | nicht bestimmt | 46 | 0 | 265 | 88,4 | 3,0 | 1,81 | $6{,}83*10^{-3}$ | Labor |
| TH-NBR 2 | 34 | 59,1 | 65,4 | 0 | 177 | 56,7 | 3,1 | 5,37 | $30{,}3*10^{-3}$ | Labor |
| TH-NBR 3 | 34 | 64,8 | 74,8 | 0 | 196 | 57,5 | 3,4 | 6,94 | $35{,}3*10^{-3}$ | Labor |
| TH-NBR 4 (Therban® VP KA 8837) | 34 | 55 | 82 | 0 | 194 | 63,3 | 3,0 | 6,03 | $31{,}1*10^{-3}$ | LXS |
| TH-NBR 5 | 34 | 74,5 | 89,8 | 0 | 187 | 62,6 | 2,9 | 10,7 | $57{,}3*10^{-3}$ | Labor |
| TH-NBR 6 (Therban® LT 2157) | 21 | 70 | 94,5 | 0 | 283 | 54,2 | 5,2 | 16,1 | $56{,}9*10^{-3}$ | LXS |

1)

$$PDI = M_w/M_n$$

2) "LXS"bedeutet käuflich erhältlich von Lanxess Deutschland GmbH, "Labor" bedeutet die Herstellung im Labor wie nachfolgend angegeben

3) Die Bestimmung der Lösungsviskosität erfolgte wie unter Punkt C2 der Beispiele angegeben.

4) Bei allen eingesetzten Kautschuk-Typen handelte es sich um Copolymere auf Basis von Butadien und Acrylnitril. Im Fall von Therban® LT 2157 ist n-Butylacrylat als Termonomer zusätzlich zugegen.

5) "ACN" steht für Acrylnitril

Die Labor-Herstellung der teilhydrierten Nitrilkautschuke TH-NBR 1, 2, 3 und 5 erfolgte durch Hydrierung von Perbunan® 3435 unter den in Tabelle 3 aufgeführten Verfahrensbedingungen.

**Tabelle 3: Verfahrensbedingungen der Hydrierungen**

| | TH-NBR1 | TH-NBR2 | TH-NBR3 | TH-NBR 5 |
|---|---|---|---|---|
| NBR-Konzentration | 13 Gew.-% | 13 Gew.-% | 15 Gew.-% | 15 Gew.-% |
| Wasserstoffdruck | 16 bar | 21 bar | 84 bar | 84 bar |
| Rührgeschwindigkeit | 600 $min^{-1}$ | 600 $min^{-1}$ | 600 $min^{-1}$ | 600 $min^{-1}$ |
| Temperatur | 120-138°C | 120-138°C | 120-138°C | 120-138°C |
| Tris-(triphenylphosphan) rhodium(I)-chlorid | 0,020 phr | 0,020 phr | 0,025 phr | 0,030 phr |
| Triphenylphosphan | 1,0 phr | 1,0 phr | 1,0 phr | 1,0 phr |
| Reaktorfüllgrad | 50% | 50% | 50% | 50% |

Zunächst wurde eine Lösung des Perbunan® 3435 in Monochlorbenzol bei Raumtemperatur hergestellt, bis der Nitrilkautschuk vollständig gelöst war. Anschließend wurde diese Lösung bei der in Tabelle 3 angegebenen Rührgeschwindigkeit aufgeheizt, die Lösungen des Katalysators Tris-(triphenylphosphan) rhodium(I)-chlorid bzw. Co-Katalysators Triphenylphosphan in Monochlorbenzol zugegeben und das System bis zu dem in Tabelle 3 angegebenen Druck mit Wasserstoff beaufschlagt. Der Hydrierverlauf wurde sukkzessive durch Entnahme und Analyse von Proben verfolgt. Die Hydrierungen wurden bei den in Tabelle 2 angegebenen Hydriergraden durch Ablassen des Wasserstoffs abgestoppt. Restwasserstoff wurde durch Einleiten von Stickstoff entfernt und das Reaktionsgemisch auf Raumtemperatur abgekühlt. Die erhaltenen Lösungen wurden anschließend mit 0,2 phr Vulkanox® BKF (Antioxidant vom Bisphenol Typ, Lanxess Deutschland GmbH) stabilisiert. Die Isolierung der teilhydrierten Nitrilkautschuke aus der organischen Lösung erfolgte mitttels Wasserdampfdestillation. Die feuchten teilhydrierten Nitrilkautschukkrümel mit Restfeuchten im Bereich von ca. 50-60 Gew.% wurden durch Abtropfen und Abquetschen mechanisch zerkleinert und im Vakuumtrockenschrank bei 50 °C unter reduziertem Druck bis zur Gewichtskonstanz getrocknet.

## B Allgemeine Beschreibung der Metathesereaktionen

Alle Metathesereaktionen der folgenden Beispiele wurden in Lösung unter Verwendung von Monochlorbenzol (Firma Aldrich) ("MCB") als Lösungsmittel durchgeführt. Vor dem Einsatz wurde MCB destilliert und bei Raumtemperatur durch Durchleiten von Argon inertisiert. Die in den folgenden Tabellen genannten Mengen an Nitrilkautschuk wurden während eines Zeitraums von 12 Stunden unter Rühren bei Raumtemperatur in MCB gelöst. Zu der Nitrilkautschukhaltigen Lösung wurden die in den Tabellen vermerkten Zusätze (ohne Verdünnung) hinzugegeben und zur Homogenisierung 30 Minuten gerührt. Die chlorbenzolischen Nitrilkautschuklösungen wurden vor der Katalysatorzugabe auf die in den Tabellen genannten Temperaturen erwärmt. Sämtliche Reaktionsansätze waren so ausgelegt, dass die Nitrilkautschukkonzentration nach Katalysatorzugabe 12 Gew.% betrug.

Soweit in den konkreten Versuchstabellen nicht anders angegeben, wurden die in Tabelle 1 genannten Metathesekatalysatoren jeweils in 10 g inertisiertem MCB unter Argon gelöst, wobei die Zugabe der Katalysatorlösungen zu den NBR-Lösungen sofort nach Herstellung der Katalysatorlösungen erfolgte.

Die Durchführung der Metathese erfolgte mit den in den nachfolgenden Tabellen genannten **Mengen an Einsatzstoffen** und **Temperaturen.** Während der Laufzeit der Reaktionen wurden den Reaktionslösungen nach den in den Tabellen angegebenen Zeiten Proben für analytische Untersuchungen entnommen. Zur Bestimmung der Momassen ($M_w$ und $M_n$) durch GPC wurden den Reaktionsgemischen jeweils ca. 3 ml entnommen und zur Abstoppung unmittelbar mit ca. 0,2 ml Ethylvinylether versetzt.

## C Analytik

### C.1 GPC-Bestimmung von $M_w$ und $M_n$ im Metathese-Verlauf

Für die GPC-Analytik wurden den mit Ethylvinylether abgestoppten Nitrilkautschuk-Lösungen 0,2 ml entnommen und mit 3 ml N,N'-Dimethylacetamid (der Firma Acros Organics mit 5 g/L LiBr versetzt) verdünnt. Vor Durchführung der GPC-Analyse wurden die Lösungen jeweils mittels eines 0,2 μm-Spritzenfilters aus Teflon (Chromafil PTFE 0,2 μm; Firma Macherey-Nagel) filtriert. Im Anschluss daran erfolgte die GPC-Analyse mit einem Gerät der Firma Waters, ausgestattet mit einem Waters 717 Autosampler, einer Vorsäule PSS Gram 10μm 8 x 50 mm, einer Säule PSS Gram-30

10μm 8 x 300 mm und zwei Säulen PSS Gram-1000 10μm 8 x 300 mm der Firma Polymer Standards Service, einem Waters 410 RI Detektor und Cirrus Software Multi Version 3.0. Die Kalibrierung der Säulen erfolgte mit linearem Polymethylmethacrylat der Molmassen 600 bis 1,64 · 106 g/mol der Firma Polymer Standards Service. Die Messungen wurden mit einer Flussrate von 1,0 mL/min bei 80°C unter Verwendung von N,N'-Dimethylacetamid (mit 5 g/L LiBr) als Eluent durchgeführt.

**C.2 Bestimmung der Lösungsviskosität ("LV")**

Die Bestimmung der Lösungsviskosität erfolgte an einem Kegel-Platte-Rheometer (Brookfield RVDV-III UCP) der Firma Brookfield (Lorch). Nach den in den nachfolgenden Tabellen angegebenen Reaktionszeiten wurden von den Reaktionslösungen jeweils 2 ml entnommen und unmittelbar anschließend die Lösungsviskosität bestimmt. Die Messung erfolgte mit einem Kegel CPE-41 bei 25°C. Die Feststoffkonzentration des teilhydrierten NBR-Kautschuks bzw. des zum Vergleich eingesetzten NBR Kautschuks im Lösungsmittel Monochlorbenzol betrug 12 Gew.-%. Die Drehzahl wurde so eingestellt, dass bei maximal möglichem Drehmoment gemessen wurde.

**D Versuchsserien 1 und 2**

Versuchsserie 1 umfasst die nicht erfindungsgemäßen **(Tabelle 4),** Versuchsserie 2 die erfindungsgemäßen Beispiele **(Tabelle 5).** Alle Beispiele der Versuchsserie 2 wurden ohne Zusatz eines Co-Olefins durchgeführt.

**Tabelle 4: Versuchsserie 1 (Nicht erfindungsgemäße Beispiele)**

| **Beispiel** | **Nitrilkautschuk** | | | | **Grubbs II Katalysator** | **Olefin-Zusatz** | **Temperatur** | **LV/$M_w$ (Nitril-**kautschuk nach Metathese) *1) |
|---|---|---|---|---|---|---|---|---|
| | Typ | ACN-Gehalt [Gew%] | Hydriergrad [%] | **LV/$M_w$** (Nitril-kautschuk vor Metathese) *1) | Menge Ru bezogen auf Menge an Kautschuk [ppm] | Art und Menge | [°C] | |
| **1.01** | Perbunan® NT 3435 | 34 | 0 | 5,83*$10^{-3}$ | 59,6 | - | 25 | 2,29*$10^{-3}$ |
| **1.02** | Perbunan® NT 3435 | 34 | 0 | 5,83*$10^{-3}$ | 59,6 | 1-Hexen; 2 phr | 25 | 0,80*$10^{-3}$ |
| **1.03** | Perbunan® NT 3435 | 34 | 0 | 5,83*$10^{-3}$ | 119,1 | - | 80 | 0,59$^{*}{}_{10}{}^{-3}$ |
| **1.04** | TH-NBR 1 | 34 | 46 | 6,83*$10^{-3}$ | 59,6 | - | 25 | 3,19*$10^{-3}$ |
| **1.05** | TH-NBR 4 Therban® VP KA 8837 | 34 | 82 | 31,1*$10^{-3}$ | 59,6 | 1-Hexen; 2 phr | 25 | 1,68*$10^{-3}$ |

*1) angegeben in [Pa*s*mol/kg]

Die in der 1. Versuchsserie unter nicht erfindungsgemäßen Bedingungen erhaltenen Nitrilkautschuke (Beispiele 1.01 - 1.03) bzw. teilhydrierten Nitrilkautschuke (Beispiele 1.04 und 1.05) besitzen LV/Mw-Kennzahlen im Bereich von $0{,}59*10^{-3}$ bis $3{,}19*10^{-3}$Pa*s*mol/kg.

In **Beispiel 1.01** und **Beispiel 1.03** wurde ausgehend von Perbunan® NT 3435 als nicht teilhydriertem Nitrilkautschuk mit einem LV/Mw-Verhältnis von $5{,}83*10^{-3}$ Pa*s*mol/kg ein Metathese-Abbau ohne Zusatz eines Olefins durchgeführt und ein nicht hydrierter Nitrilkautschuk mit einem LV/Mw-Verhältnis von $2{,}29*10^{-3}$Pa*s*mol/kg (Beispiel 1.01) bzw. $0{,}59*10^{-3}$ Pa*s*mol/kg erhalten (Beispiel 1.03). Beispiel 1.03 wurde mit der doppelten Menge an Katalysator und bei einer Temperatur von 80°C durchgeführt.

In **Beispiel 1.02** wurde ebenfalls ausgehend von Perbunan® NT 3435 durch Metathese unter Zusatz von 1-Hexen ein nicht teilhydrierter Nitrilkautschuk mit einem LV/Mw-Verhältnis von $0{,}80*10^{-3}$Pa*s*mol/kg erhalten.

In **Beispiel 1.04** wurde bei Einsatz eines teilhydrierten Nitrilkautschuks mit einem Hydriergrad von 46 % ("TH-NBR 1") ohne Zusatz von 1-Olefin ein teilhydrierter Nitrilkautschuk mit einem $LV/M_w$-Verhältnis von $3{,}19*10^{-3}$ Pa*s*mol/kg erhalten.

In **Beispiel 1.05** wurde bei Einsatz eines teilhydrierten Nitrilkautschuks TH-NBR 4 (Therban® VP KA 8837) mit einem Hydriergrad von 82 % bei der Metathese mit Grubbs II Katalysator unter Zusatz von 1-Hexen ein teilhydrierter Nitrilkautschuk mit einem $LV/M_w$-Verhältnis von 1,68 $*10^{-3}$ Pa*s*mol/kg erhalten.

In **Versuchsserie 2** (siehe nachfolgende Tabelle 5) wurden bei der erfindungsgemäßen Metathese unter Einsatz eines entsprechend teilhydrierten Nitrilkautschuks ohne Zusatz eines Olefins teilhydrierte Nitrilkautschuke mit einem Lösungsviskosität/Molmassengewichtsmittel ($LV/M_w$)-Verhältnis im Bereich $6{,}9*10^{-3}$ bis $26{,}8*10^{-3}$ Pa*s*mol/kg erhalten. Die Erreichung dieser ($LV/M_w$)-Verhältnisse ist unabhängig von der Art des verwendeten Katalysators (Grubbs-II-Katalysator, Grubbs-III-Katalysator, Grela-Katalysator bzw. Grubbs-Hoveyda-Katalysator) und von einem eventuellen Zusatz von Salzen wie $CaCl_2*2H_2O$ bzw. $Ti(OiPr)_4$.

**Tabelle 5: Versuchsserie 2 (Erfindungsgemäße Beispiele)**

| **Beispiel** | **Teilhydrierter Nitrilkautschuk** | | | | **Metathese-Katalysator** | | **Salz-Zusatz** | | **Temperatur** | **$LV/M_w$ (teilhydrierter Nitrilkautschuk nach Metathese) *1)** |
|---|---|---|---|---|---|---|---|---|---|---|
| | Typ | ACN-Gehalt [Gew.%] | Hydriergrad [%] | **$LV/M_w$** (teilhydrierter Nitril kautschuk) *1) | Art | Menge Ruthenium bezogen auf Menge Kautschukan [ppm] | Art | Menge bezogen auf Menge an Kataly-sator [eq] | [°C] | |
| 2.01 | TH-NBR 4 | 34 | 82 | $31,1*10^{-3}$ | Grubbs II | 59,6 | - | - | 25 | $17,9*10^{-3}$ |
| 2.02 | TH-NBR 3 | 34 | 74,8 | $35,3*10^{-3}$ | Grubbs II | 59,6 | - | - | 25 | $12,5*10^{-3}$ |
| 2.03 | TH-NBR 2 | 34 | 65,4 | $30,3*10^{-3}$ | Grubbs II | 59,6 | - | - | 25 | $9,22*10^{-3}$ |
| 2.04 | TH-NBR 4 | 34 | 82 | $31,1*10^{-3}$ | Grubbs III | 59,5 | - | - | 25 | $17,7*10^{-3}$ |
| 2.05 | TH-NBR 4 | 34 | 82 | $31,1*10^{-3}$ | Grela | 59,7 | - | - | 25 | $16,6*10^{-3}$ |
| 2.06 | TH-NBR 4 | 34 | 82 | $31,1*10^{-3}$ | Hoveyda | 59,7 | - | - | 25 | $22,5*10^{-3}$ |
| 2.07 | TH-NBR 4 | 34 | 82 | $31,1*10^{-3}$ | Grubbs II | 178,7 | - | - | 25 | $142*10^{-3}$ |
| 2.08 | TH-NBR 4 | 34 | 82 | $31,1*10^{-3}$ | Grubbs II | 59,6 | - | - | 40 | $13,9*10^{-3}$ |
| 2.09 | TH-NBR 4 | 34 | 82 | $31,1*10^{-3}$ | Grubbs II | 59,6 | - | - | 60 | $14,3*10^{-1}$ |
| 2.10 | TH-NBR 4 | 34 | 82 | $31,1*10^{-3}$ | Grubbs II | 59,6 | - | - | 80 | $12,0*10^{-3}$ |
| 2.11 | TH-NBR 4 | 34 | 82 | $31,1*10^{-3}$ | Grubbs II | 119,1 | - | - | 80 | $10,0*10^{-3}$ |
| 2.12 | TH-NBR 4 | 34 | 82 | $31,1*10^{-3}$ | Grubbs II | 178,7 | - | - | 80 | $6,93*10^{-3}$ |

(fortgesetzt)

| Beispiel | Teilhydrierter Nitrilkautschuk | | | | Metathese-Katalysator | | Salz-Zusatz | | Temperatur | **LV/$M_w$** (**teil**hydrierter Nitrilkautschuk nach Metathese) *1) |
|---|---|---|---|---|---|---|---|---|---|---|
| | Typ | ACN-Gehalt [Gew.%] | Hydriergrad [%] | **LV/$M_w$** (teilhydrierter Nitril kautschuk) *1) | Art | Menge Ruthenium bezogen auf Menge Kautschukan [ppm] | Art | Menge bezogen auf Menge an Kataly-sator [eq] | [°C] | |
| 2.13 | TH-NBR 4 | 34 | 82 | $31,1*10^{-3}$ | Grubbs II | 59,6 | $CaCl_2*2H_2O$ | 100 | 25 | $17,5*10^{-3}$ |
| 2.14 | TH-NBR 4 | 34 | 82 | $31,1*10^{-3}$ | Grubbs II | 59,6 | $Ti(OiPr)_4$ | 100 | 25 | $17,3*10^{-3}$ |
| 2.15 | TH-NBR 5 | 34 | 89,8 | $57,3*10^{-3}$ | Grubbs II | 59,6 | - | - | 25 | $26,8*10^{-3}$ |
| 2.16 | TH-NBR 6 | 21 | 94,5 | $56,9*10^{-3}$ | Grubbs II | 59,6 | - | - | 25 | $15,1*10^{-3}$ |
| 2.17 | TH-NBR 6 | 21 | 94,5 | $56,9*10^{-3}$ | Grubbs II | 178,7 | - | - | 80 | $8,70*10^{-3}$ |

* 1) angegeben in [Pa*s*mol/kg]

**Versuchsserie 1: (nicht erfindungsgemäße Beispiele)**

**1.01. Umsetzung von Perbunan® NT 3435 (NBR nicht hydriert) mit Grubbs-II-Katalysator**

| Kautschuk: | ACN-Gehalt [Gew.%] | Hydriergrad [%] | Menge [g] |
|---|---|---|---|
| Perbunan® NT 3435 | 34 | 0 | 40 |

| Katalysator | | | Olefin | | Temperatur |
|---|---|---|---|---|---|
| Grubbs-II | Menge [mg] | Menge Ruthenium bezogen auf Menge an Kautschuk [ppm] | Art | Menge [phr] | [°C] |
| | 20 | 59,6 | - | - | 25 |

| Analytische Daten | Reaktionszeit / min | | | | | |
|---|---|---|---|---|---|---|
| | **0** | **15** | **60** | **180** | **420** | **1440** |
| **$M_w$ [kg/mol]** | 223 | 218 | 202 | 151 | 149 | 145 |
| **$M_n$ [kg/mol]** | 69,4 | 78,5 | 75,4 | 67,2 | 65,5 | 64,3 |
| **PDI** | 3,2 | 2,8 | 2,7 | 2,3 | 2,3 | 2,3 |
| **LV [Pa s]** | 1,30 | 1,06 | 0,805 | 0,495 | 0,367 | 0,332 |
| **$LV/M_W$ [Pa*s*mol/kg]** | $5{,}83 \cdot 10^{-3}$ | $4{,}84 \cdot 10^{-3}$ | $3{,}97 \cdot 10^{-3}$ | $3{,}26 \cdot 10^{-3}$ | $2{,}47 \cdot 10^{-3}$ | $2{,}29 \cdot 10^{-3}$ |

**1.02. Umsetzung von Perbunan® NT 3435 (NBR nicht hydriert) mit Grubbs-II-Katalysator**

| Kautschuk: | ACN-Gehalt [Gew.%] | Hydriergrad [%] | Menge [g] |
|---|---|---|---|
| Perbunan® NT 3435 | 34 | 0 | 30 |

| Katalysator | | | Olefin | | Temperatur |
|---|---|---|---|---|---|
| Grubbs-II | Menge [mg] | Menge Ruthenium bezogen auf Menge an Kautschuk [ppm] | Art | Menge [phr] | [°C] |
| | 15 | 59,6 | 1-Hexen | 2 | 25 |

| Analytische Daten | Reaktionszeit / min | | | | |
|---|---|---|---|---|---|
| | **0** | **30** | **60** | **180** | **420** |
| **$M_w$ [kg/mol]** | 223 | 166 | 120 | 79,4 | 62,4 |
| **$M_n$ [kg/mol]** | 69,4 | 66,0 | 55,8 | 44,5 | 35,5 |
| **PDI** | 3,2 | 2,5 | 2,2 | 1,8 | 1,8 |
| **LV [Pa s]** | 1,30 | 0,61 | 0,20 | 0,08 | 0,05 |
| **$LV/M_W$ [Pa*s*mol/kg]** | $5{,}83 \cdot 10^{-3}$ | $3{,}67 \cdot 10^{-3}$ | $1{,}67 \cdot 10^{-3}$ | $1{,}01 \cdot 10^{-3}$ | $0{,}80 \cdot 10^{-3}$ |

1.03 **Umsetzung von Perbunan® NT 3435 (NBR nicht hydriert) mit Grubbs-II-Katalysator**

| Kautschuk: | ACN-Gehalt [Gew.%] | Hydriergrad [%] | Menge [g] |
|---|---|---|---|
| Perbunan® NT 3435 | 34 | 0 | 30 |

| Katalysator | | | Olefin | | Temperatur |
|---|---|---|---|---|---|
| Grubbs-II | Menge [mg] | Menge Ruthenium bezogen auf Menge an Kautschuk [ppm] | Art | Menge [phr] | [°C] |
| | 30 | 119,1 | - | - | 80 |

| Analytische Daten | Reaktionszeit / min | | | | |
|---|---|---|---|---|---|
| | **0** | **30** | **60** | **180** | **420** |
| **$M_w$ [kg/mol]** | 223 | 50,5 | 49,7 | 49,2 | 49,2 |
| **$M_n$ [kg/mol]** | 69,4 | 31,9 | 31,3 | 30,2 | 29,7 |
| **PDI** | 3,2 | 1,6 | 1,6 | 1,6 | 1,6 |
| **LV [Pa s]** | 1,30 | 0,03 | 0,03 | 0,03 | 0,03 |
| **$LV/M_W$ [Pa*s*mol/kg]** | $5,83 \cdot 10^{-3}$ | $0,60 \cdot 10^{-3}$ | $0,60 \cdot 10^{-3}$ | $0,59 \cdot 10^{-3}$ | $0,59 \cdot 10^{-3}$ |

**1.04 Umsetzung von TH-NBR1 mit Grubbs-II-Katalysator**

| Kautschuk: | ACN-Gehalt [Gew.%] | Hydriergrad [%] | Menge [g] |
|---|---|---|---|
| TH-NBR 1 | 34 | 46 | 40 |

| Katalysator | | | Olefin | | Temperatur |
|---|---|---|---|---|---|
| Grubbs-II | Menge [mg] | Menge Ruthenium bezogen auf Menge an Kautschuk [ppm] | Art | Menge [phr] | [°C] |
| | 20 | 59,6 | - | - | 25 |

| Analytische Daten | Reaktionszeit / min | | | | | |
|---|---|---|---|---|---|---|
| | **0** | **15** | **60** | **180** | **420** | **1440** |
| **$M_w$ [kg/mol]** | 265 | 233 | 219 | 193 | 187 | 173 |
| **$M_n$ [kg/mol]** | 88,4 | 97,3 | 96,7 | 92,6 | 82,7 | 80,1 |
| **PDI** | 3,0 | 2,4 | 2,3 | 2,1 | 2,3 | 2,2 |
| **LV [Pa s]** | 1,81 | 1,56 | 1,27 | 0,803 | 0,605 | 0,552 |
| **$LV/M_w$ [Pa*s*mol/kg]** | $6,83 \cdot 10^{-3}$ | $6,69 \cdot 10^{-3}$ | $5,80 \cdot 10^{-3}$ | $4,16 \cdot 10^{-3}$ | $3,24 \cdot 10^{-3}$ | $3,19 \cdot 10^{-3}$ |

1.05 Umsetzung von TH-NBR 4 mit Grubbs-II-Katalysator

| Kautschuk: TH-NBR 4 | ACN-Gehalt [Gew.%] | Hydriergrad [%] | Menge [g] |
|---|---|---|---|
| Therban® VP KA 8837 | 34 | 82 | 30 |

| Katalysator | | | Olefin | | Temperatur |
|---|---|---|---|---|---|
| Grubbs-**II** | Menge [mg] | Menge Ruthenium bezogen auf Menge an Kautschuk [ppm] | Art | Menge [phr] | [°C] |
| | 15 | 59,6 | 1-Hexen | 2 | 25 |

| Analytische Daten | Reaktionszeit / min | | | | |
|---|---|---|---|---|---|
| | **0** | **30** | **60** | **180** | **420** |
| **$M_w$ [kg/mol]** | 194 | 155 | 107 | 61,2 | 47,5 |
| **$M_n$ [kg/mol]** | 63,3 | 63,2 | 52,1 | 33,9 | 29,4 |
| **PDI** | 3,0 | 2,5 | 2,1 | 1,8 | 1,6 |
| **LV [Pa s]** | 6,03 | 2,38 | 0,71 | 0,14 | 0,08 |
| **LV/$M_w$ [Pa*s*mol/kg]** | $31{,}1 \cdot 10^{-3}$ | $15{,}4 \cdot 10^{-3}$ | $6{,}64 \cdot 10^{-3}$ | $2{,}29 \cdot 10^{-3}$ | $1{,}68 \cdot 10^{-3}$ |

Versuchsserie 2 (erfindungsgemäße Beispiele)

2.01 Umsetzung von TH-NBR 4 mit Grubbs-II-Katalysator

| Kautschuk: TH-NBR 4 | ACN-Gehalt [Gew.%] | Hydriergrad [%] | Menge [g] |
|---|---|---|---|
| Therban® VP KA 8837 | 34 | 82 | 30 |

| Katalysator | | | Zusatz | | Temperatur |
|---|---|---|---|---|---|
| Grubbs-**II** | Menge [mg] | Menge Ruthenium bezogen auf Menge an Kautschuk [ppm] | Art | Menge [phr] | [°C] |
| | 15 | 59,6 | - | - | 25 |

| Analytische Daten | Reaktionszeit / min | | | | |
|---|---|---|---|---|---|
| | **0** | **30** | **60** | **180** | **420** |
| **$M_w$ [kg/mol]** | 194 | 176 | 169 | 163 | 156 |
| **$M_n$ [kg/mol]** | 63,3 | 62,6 | 61,7 | 64,6 | 65,7 |
| **PDI** | 3,0 | 2,8 | 2,7 | 2,5 | 2,4 |
| **LV [Pa s]** | 6,03 | 5,67 | 4,97 | 3,69 | 2,80 |
| **LV/$M_w$ [Pa*s*mol/kg]** | $31{,}1 \cdot 10^{-3}$ | $31{,}2 \cdot 10^{-3}$ | $29{,}4 \cdot 10^{-3}$ | $22{,}6 \cdot 10^{-3}$ | $17{,}9 \cdot 10^{-3}$ |

2.02 Umsetzung von TH-NBR 3 mit Grubbs-II-Katalysator

| Kautschuk: TH-NBR 3 | ACN-Gehalt [Gew.%] | Hydriergrad [%] | Menge [g] |
|---|---|---|---|
| Teilhydrier. NBR | 34 | 74,8 | 30 |

| Katalysator | | | Zusatz | | Temperatur |
|---|---|---|---|---|---|
| Grubbs-II | Menge [mg] | Menge Ruthenium bezogen auf Menge an Kautschuk [ppm] | Art | Menge [phr] | [°C] |
| | 15 | 59,6 | - | - | 25 |

| Analytische Daten | Reaktionszeit / min | | | | |
|---|---|---|---|---|---|
| | **0** | **30** | **60** | **180** | **420** |
| **$M_w$ [kg/mol]** | 196 | 192 | 174 | 150 | 142 |
| **$M_n$ [kg/mol]** | 57,5 | 59,8 | 60,0 | 61,2 | 56,6 |
| **PDI** | 3,4 | 3,2 | 2,9 | 2,4 | 2,5 |
| **LV [Pa s]** | 6,94 | 5,39 | 4,04 | 2,31 | 1,77 |
| **$LV/M_w$ [Pa*s*mol/kg]** | $35{,}3\cdot10^{-3}$ | $28{,}1\cdot10^{-3}$ | $23{,}3\cdot10^{-3}$ | $15{,}4\cdot10^{-3}$ | $12{,}5\cdot10^{-3}$ |

2.03 Umsetzung von TH-NBR 2 mit Grubbs-II-Katalysator

| Kautschuk: TH-NBR 2 | ACN-Gehalt [Gew.%] | Hydriergrad [%] | Menge [g] |
|---|---|---|---|
| Teilhydrier. NBR | 34 | 65,4 | 30 |

| Katalysator | | | Zusatz | | Temperatur |
|---|---|---|---|---|---|
| Grubbs-II | Menge [mg] | Menge Ruthenium bezogen auf Menge an Kautschuk [ppm] | Art | Menge [phr] | [°C] |
| | 15 | 59,6 | - | - | 25 |

| Analytische Daten | Reaktionszeit / min | | | | |
|---|---|---|---|---|---|
| | **0** | **30** | **60** | **180** | **420** |
| **$M_w$ [kg/mol]** | 177 | 177 | 167 | 148 | 131 |
| **$M_n$ [kg/mol]** | 56,7 | 58,8 | 53,5 | 58,0 | 58,1 |
| **PDI** | 3,1 | 3,0 | 3,1 | 2,6 | 2,3 |
| **LV [Pa s]** | 5,37 | 4,45 | 3,39 | 1,73 | 1,21 |
| **$LV/M_w$ [Pa*s*mol/kg]** | $30{,}3\cdot10^{-3}$ | $25{,}1\cdot10^{-3}$ | $20{,}3\cdot10^{-3}$ | $11{,}7\cdot10^{-3}$ | $9{,}22\cdot10^{-3}$ |

2.04 Umsetzung von TH-NBR 4 mit Grubbs-III-Katalysator

| Kautschuk: TH-NBR 4 | ACN-Gehalt [Gew.%] | Hydriergrad [%] | Menge [g] |
|---|---|---|---|
| Therban® VP KA 8837 | 34 | 82 | 30 |

| Katalysator | | | Zusatz | | Temperatur |
|---|---|---|---|---|---|
| Grubbs-III | Menge [mg] | Menge Ruthenium bezogen auf Menge an Kautschuk [ppm] | Art | Menge [phr] | [°C] |
| | 15,6 | 59,5 | - | - | 25 |

| Analytische Daten | Reaktionszeit / min | | | | |
|---|---|---|---|---|---|
| | 0 | 30 | 60 | 180 | 420 |
| $M_w$ [kg/mol] | 194 | 209 | 194 | 170 | 167 |
| $M_n$ [kg/mol] | 63,3 | 70,3 | 71,8 | 65,6 | 68,4 |
| PDI | 3,0 | 3,0 | 2,7 | 2,6 | 2,4 |
| LV [Pa s] | 6,03 | 4,96 | 3,77 | 3,40 | 2,95 |
| LV/$M_w$ [Pa*s*mol/kg] | $31,1\cdot10^{-3}$ | $23,7\cdot10^{-3}$ | $19,4\cdot10^{-3}$ | $20,0\cdot10^{-3}$ | $17,7\cdot10^{-3}$ |

2.05 Umsetzung von TH-NBR 4 mit Grela-Katalysator

| Kautschuk: TH-NBR 4 | ACN-Gehalt [Gew.%] | Hydriergrad [%] | Menge [g] |
|---|---|---|---|
| Therban® VP KA 8837 | 34 | 82 | 30 |

| Katalysator | | | Zusatz | | |
|---|---|---|---|---|---|
| Grela | Menge [mg] | Menge Ruthenium bezogen auf Menge an Kautschuk [ppm] | Art | Menge [phr] | Temperatur [°C] |
| | 11,9 | 59,7 | - | - | 25 |

| Analytische Daten | Reaktionszeit / min | | | | |
|---|---|---|---|---|---|
| | 0 | 30 | 60 | 180 | 420 |
| $M_w$ [kg/mol] | 194 | 192 | 188 | 160 | 163 |
| $M_n$ [kg/mol] | 63,3 | 65,4 | 65,4 | 64,0 | 71,3 |
| PDI | 3,0 | 3,1 | 2,9 | 2,5 | 2,3 |
| LV [Pa s] | 6,03 | 5,84 | 4,81 | 3,12 | 2,70 |
| LV/$M_w$ [Pa*s*mol/kg] | $31,1\cdot10^{-3}$ | $30,4\cdot10^{-3}$ | $25,6\cdot10^{-3}$ | $19,5\cdot10^{-3}$ | $16,6\cdot10^{-3}$ |

**2.06 Umsetzung von TH-NBR 4 mit Grubbs-Hoveyda Katalysator**

| Kautschuk: TH-NBR 4 | ACN-Gehalt [Gew.%] | Hydriergrad [%] | Menge [g] |
|---|---|---|---|
| Therban® VP KA 8837 | 34 | 82 | 30 |

| Katalysator | | | Zusatz | | Temperatur |
|---|---|---|---|---|---|
| Grubbs-Hoveyda | Menge [mg] | Menge Ruthenium bezogen auf Menge an Kautschuk [ppm] | Art | Menge [phr] | [°C] |
| | 11,1 | 59,7 | - | - | 25 |

| Analytische Daten | Reaktionszeit / min | | | | |
|---|---|---|---|---|---|
| | **0** | **30** | **60** | **180** | **420** |
| **$M_w$ [kg/mol]** | 194 | 187 | 194 | 189 | 163 |
| **$M_n$ [kg/mol]** | 63,3 | 67,2 | 71,3 | 69,0 | 69,5 |
| **PDI** | 3,0 | 2,8 | 2,7 | 2,7 | 2,6 |
| **LV [Pa s]** | 6,03 | 5,34 | 5,21 | 4,62 | 3,67 |
| **$LV/M_w$ [Pa*s*mol/kg]** | $31{,}1\cdot10^{-3}$ | $28{,}6\cdot10^{-3}$ | $26{,}9\cdot10^{-3}$ | $24{,}4\cdot10^{-3}$ | $22{,}5\cdot10^{-3}$ |

**2.07 Umsetzung von TH-NBR 4 mit Grubbs-II-Katalysator**

| Kautschuk: TH-NBR 4 | ACN-Gehalt [Gew.%] | Hydriergrad [%] | Menge [g] |
|---|---|---|---|
| Therban® VP KA 8837 | 34 | 82 | 30 |

| Katalysator | | | Zusatz | | Temperatur |
|---|---|---|---|---|---|
| Grubbs-**II** | Menge [mg] | Menge Ruthenium bezogen auf Menge an Kautschuk [ppm] | Art | Menge [phr] | [°C] |
| | 45 | 178,7 | - | - | 25 |

| Analytische Daten | Reaktionszeit / min | | | | |
|---|---|---|---|---|---|
| | **0** | **30** | **60** | **180** | **420** |
| **$M_w$ [kg/mol]** | 194 | 197 | 185 | 160 | 122 |
| **$M_n$ [kg/mol]** | 63,3 | 70,5 | 67,7 | 68,4 | 64,4 |
| **PDI** | 3,0 | 2,80 | 2,74 | 2,34 | 1,90 |
| **LV [Pa s]** | 6,03 | 5,25 | 4,56 | 2,49 | 1,73 |
| **$LV/M_w$ [Pa*s*mol/kg]** | $31{,}1\cdot10^{-3}$ | $26{,}6\cdot10^{-3}$ | $24{,}6\cdot10^{-3}$ | $15{,}6\cdot10^{-3}$ | $14{,}2\cdot10^{-3}$ |

2.08 Umsetzung von TH-NBR 4 mit Grubbs-II-Katalysator

| Kautschuk: TH-NBR 4 | ACN-Gehalt [Gew.%] | Hydriergrad [%] | Menge [g] |
|---|---|---|---|
| Therban® VP KA 8837 | 34 | 82 | 30 |

| Katalysator | | | Zusatz | | Temperatur |
|---|---|---|---|---|---|
| Grubbs-II | Menge [mg] | Menge Ruthenium bezogen auf Menge an Kautschuk [ppm] | Art | Menge [phr] | [°C] |
| | 15 | 59,6 | - | - | 40 |

| Analytische Daten | Reaktionszeit / min | | | | |
|---|---|---|---|---|---|
| | 0 | 30 | 60 | 180 | 420 |
| $M_w$ [kg/mol] | 194 | 175 | 164 | 154 | 153 |
| $M_n$ [kg/mol] | 63,3 | 71,7 | 77,1 | 75,5 | 75,1 |
| PDI | 3,0 | 2,4 | 2,1 | 2,0 | 2,0 |
| LV [Pa s] | 6,03 | 3,81 | 2,67 | 2,23 | 2,13 |
| LV/$M_w$ [Pa*s*mol/kg] | $31,1 \cdot 10^{-3}$ | $21,7 \cdot 10^{-3}$ | $16,3 \cdot 10^{-3}$ | $14,5 \cdot 10^{-3}$ | $13,9 \cdot 10^{-3}$ |

2.09 Umsetzung von TH-NBR 4 mit Grubbs-II-Katalysator

| Kautschuk: TH-NBR 4 | ACN-Gehalt [Gew.%] | Hydriergrad [%] | Menge [g] |
|---|---|---|---|
| Therban® VP KA 8837 | 34 | 82 | 30 |

| Katalysator | | | Zusatz | | Temperatur |
|---|---|---|---|---|---|
| Grubbs-II | Menge [mg] | Menge Ruthenium bezogen auf Menge an Kautschuk [ppm] | Art | Menge [phr] | [°C] |
| | 15 | 59,6 | - | - | 60 |

| Analytische Daten | Reaktionszeit / min | | | | |
|---|---|---|---|---|---|
| | 0 | 30 | 60 | 180 | 420 |
| $M_w$ [kg/mol] | 194 | 154 | 152 | 146 | 146 |
| $M_n$ [kg/mol] | 63,3 | 70,5 | 71,5 | 70,9 | 70,5 |
| PDI | 3,0 | 2,2 | 2,1 | 2,1 | 2,1 |
| LV [Pa s] | 6,03 | 2,43 | 2,20 | 2,14 | 2,10 |
| LV/$M_w$ [Pa*s*mol/kg] | $31,1 \cdot 10^{-3}$ | $15,8 \cdot 10^{-3}$ | $14,5 \cdot 10^{-3}$ | $14,6 \cdot 10^{-3}$ | $14,3 \cdot 10^{-3}$ |

2.10 Umsetzung von TH-NBR 4 mit Grubbs-II-Katalysator

| Kautschuk: TH-NBR 4 | ACN-Gehalt [Gew.%] | Hydriergrad [%] | Menge [g] |
|---|---|---|---|
| Therban® VP KA 8837 | 34 | 82 | 30 |

| Katalysator | | | Zusatz | | Temperatur |
|---|---|---|---|---|---|
| Grubbs-II | Menge [mg] | Menge Ruthenium bezogen auf Menge an Kautschuk [ppm] | Art | Menge [phr] | [°C] |
| | 15 | 59,6 | - | - | 80 |

| Analytische Daten | Reaktionszeit / min | | | | |
|---|---|---|---|---|---|
| | **0** | **30** | **60** | **180** | **420** |
| **$M_w$ [kg/mol]** | 194 | 148 | 141 | 142 | 134 |
| **$M_n$ [kg/mol]** | 63,3 | 70,1 | 68,7 | 68,6 | 68,4 |
| **PDI** | 3,0 | 2,1 | 2,1 | 2,1 | 2,0 |
| **LV [Pa s]** | 6,03 | 1,77 | 1,70 | 1,64 | 1,61 |
| **$LV/M_w$ [Pa*s*mol/kg]** | $31{,}1\cdot10^{-3}$ | $12{,}0\cdot10^{-3}$ | $12{,}1\cdot10^{-3}$ | $11{,}5\cdot10^{-3}$ | $12{,}0\cdot10^{-3}$ |

2.11 Umsetzung von TH-NBR 4 mit Grubbs-II-Katalysator

| Kautschuk: TH-NBR 4 | ACN-Gehalt [Gew.%] | Hydriergrad [%] | Menge [g] |
|---|---|---|---|
| Therban® VP KA 8837 | 34 | 82 | 30 |

| Katalysator | | | Zusatz | | Temperatur |
|---|---|---|---|---|---|
| Grubbs-II | Menge [mg] | Menge Ruthenium bezogen auf Menge an Kautschuk [ppm] | Art | Menge [phr] | [°C] |
| | 30 | 119,1 | - | - | 80 |

| Analytische Daten | Reaktionszeit / min | | | | |
|---|---|---|---|---|---|
| | **0** | **30** | **60** | **180** | **420** |
| **$M_w$ [kg/mol]** | 194 | 122 | 117 | 118 | 116 |
| **$M_n$ [kg/mol]** | 63,3 | 49,8 | 49,4 | 52,7 | 51,6 |
| **PDI** | 3,0 | 2,4 | 2,4 | 2,2 | 2,2 |
| **LV [Pa s]** | 6,03 | 1,36 | 1,18 | 1,17 | 1,16 |
| **$LV/M_w$ [Pa*s*mol/kg]** | $31{,}1\cdot10^{-3}$ | $11{,}2\cdot10^{-3}$ | $10{,}0\cdot10^{-3}$ | $9{,}90\cdot10^{-3}$ | $10{,}0\cdot10^{-3}$ |

### 2.12 Umsetzung von TH-NBR 4 mit Grubbs-II-Katalysator

| Kautschuk: TH-NBR 4 | ACN-Gehalt [Gew.%] | Hydriergrad [%] | Menge [g] |
|---|---|---|---|
| Therban® VP KA 8837 | 34 | 82 | 30 |

| Katalysator | | | Zusatz | | Temperatur |
|---|---|---|---|---|---|
| Grubbs-II | Menge [mg] | Menge Ruthenium bezogen auf Menge an Kautschuk [ppm] | Art | Menge [phr] | [°C] |
| | 45 | 178,7 | - | - | 80 |

| Analytische Daten | Reaktionszeit / min | | | | |
|---|---|---|---|---|---|
| | 0 | 30 | 60 | 180 | 420 |
| $M_w$ [kg/mol] | 194 | 132 | 128 | 122 | 127 |
| $M_n$ [kg/mol] | 63,3 | 71,8 | 69,9 | 70,0 | 69,1 |
| PDI | 3,0 | 1,8 | 1,8 | 1,7 | 1,8 |
| LV [Pa s] | 6,03 | 1,02 | 0,99 | 0,93 | 0,88 |
| LV/$M_w$ [Pa*s*mol/kg] | $31{,}1 \cdot 10^{-3}$ | $7{,}73 \cdot 10^{-3}$ | $7{,}73 \cdot 10^{-3}$ | $7{,}62 \cdot 10^{-3}$ | $6{,}93 \cdot 10^{-3}$ |

### 2.13 Umsetzung von TH-NBR 4 mit Grubbs-II-Katalysator

| Kautschuk: TH-NBR 4 | ACN-Gehalt [Gew.%] | Hydriergrad [%] | Menge [g] |
|---|---|---|---|
| Therban® VP KA 8837 | 34 | 82 | 30 |

| Katalysator | | | Salz-Zusatz | | |
|---|---|---|---|---|---|
| Grubbs -II | Menge [mg] | Menge Ruthenium bezogen auf Menge an Kautschuk [ppm] | Art | Menge [eq. bzgl. Kat.] | **Temperatur [°C]** |
| | 15 | 59,6 | $CaCl_2 \cdot 2\ H_2O$ | 100 | 25 |

| Analytische Daten | Reaktionszeit / min | | | | |
|---|---|---|---|---|---|
| | 0 | 30 | 60 | 180 | 420 |
| $M_w$ [kg/mol] | 194 | 189 | 183 | 171 | 160 |
| $M_n$ [kg/mol] | 63,3 | 69,8 | 72,4 | 72,0 | 71,0 |
| PDI | 3,0 | 2,7 | 2,5 | 2,4 | 2,3 |
| LV [Pa s] | 6,03 | 5,67 | 4,97 | 3,69 | 2,80 |
| LV/$M_w$ [Pa*s*mol/kg] | $31{,}1 \cdot 10^{-3}$ | $30{,}0 \cdot 10^{-3}$ | $27{,}1 \cdot 10^{-3}$ | $21{,}5 \cdot 10^{-3}$ | $17{,}5 \cdot 10^{-3}$ |

### 2.14 Umsetzung von TH-NBR 4 mit Grubbs-II-Katalysator

| Kautschuk: TH-NBR 4 | ACN-Gehalt [Gew.%] | Hydriergrad [%] | Menge [g] |
|---|---|---|---|
| Therban® VP KA 8837 | 34 | 82 | 30 |

| Katalysator | | | Salz-Zusatz | | Temperatur |
|---|---|---|---|---|---|
| Grubbs-II | Menge [mg] | Menge Ruthenium bezogen auf Menge an Kautschuk [ppm] | Art | Menge [eq. bzgl. Kat.] | [°C] |
| | 15 | 59,6 | $Ti(OiPr)_4$ | 100 | 25 |

| Analytische Daten | Reaktionszeit / min | | | | |
|---|---|---|---|---|---|
| | 0 | 30 | 60 | 180 | 420 |
| $M_w$ [kg/mol] | 194 | 174 | 167 | 157 | 146 |
| $M_n$ [kg/mol] | 63,3 | 61,9 | 63,2 | 70,8 | 70,7 |
| PDI | 3,0 | 2,8 | 2,6 | 2,2 | 2,1 |
| LV [Pa s] | 6,03 | 6,00 | 5,52 | 3,69 | 2,53 |
| LV/$M_w$ [Pa*s*mol/kg] | $31,1\cdot10^{-3}$ | $34,4\cdot10^{-3}$ | $33,0\cdot10^{-3}$ | $23,4\cdot10^{-3}$ | $17,3\cdot10^{-3}$ |

### 2.15 Umsetzung von TH-NBR 5 mit Grubbs-II-Katalysator

| Kautschuk: TH-NBR 5 | ACN-Gehalt [Gew.%] | Hydriergrad [%] | Menge [g] |
|---|---|---|---|
| Teilhydrier. NBR | 34 | 89,8 | 30 |

| Katalysator | | | Zusatz | | Temperatur |
|---|---|---|---|---|---|
| Grubbs-II | Menge [mg] | Menge Ruthenium bezogen auf Menge an Kautschuk [ppm] | Art | Menge [phr] | [°C] |
| | 15 | 59,6 | - | - | 25 |

| Analytische Daten | Reaktionszeit / min | | | | |
|---|---|---|---|---|---|
| | 0 | 30 | 60 | 180 | 420 |
| $M_w$ [kg/mol] | 187 | 181 | 172 | 153 | 150 |
| $M_n$ [kg/mol] | 62,6 | 52,5 | 51,9 | 58,8 | 57,8 |
| PDI | 3,0 | 3,4 | 3,3 | 2,6 | 2,6 |
| LV [Pa s] | 10,7 | 9,63 | 8,35 | 4,85 | 4,02 |
| LV/$M_w$ [Pa*s*mol/kg] | $57,3\cdot10^{-3}$ | $53,3\cdot10^{-3}$ | $48,6\cdot10^{-3}$ | $31,7\cdot10^{-3}$ | $26,8\cdot10^{-3}$ |

2.16 Umsetzung von TH-NBR 6 mit Grubbs-II-Katalysator

| Kautschuk: TH-NBR 6 | ACN-Gehalt [Gew.%] | Hydriergrad [%] | Menge [g] |
|---|---|---|---|
| Therban® LT 2157 | 21 | 94,5 | 30 |

| Katalysator | | | Zusatz | | Temperatur |
|---|---|---|---|---|---|
| Grubbs-II | Menge [mg] | Menge Ruthenium bezogen auf Menge an Kautschuk [ppm] | Art | Menge [phr] | [°C] |
| | 15 | 59,6 | - | - | 25 |

| Analytische Daten | Reaktionszeit / min | | | | |
|---|---|---|---|---|---|
| | 0 | 30 | 60 | 180 | 420 |
| $M_w$ [kg/mol] | 283 | 280 | 259 | 227 | 202 |
| $M_n$ [kg/mol] | 54,2 | 51,2 | 46,9 | 46,6 | 46,6 |
| PDI | 5,2 | 5,4 | 5,5 | 4,8 | 4,3 |
| LV [Pa s] | 16,1 | 14,9 | 12,9 | 7,04 | 3,06 |
| LV/$M_w$ [Pa*s*mol/kg] | $56,9\cdot10^{-3}$ | $53,1\cdot10^{-3}$ | $49,9\cdot10^{-3}$ | $30,9\cdot10^{-3}$ | $15,1\cdot10^{-3}$ |

2.17 Umsetzung von TH-NBR68 mit Grubbs-II-Katalysator

| Kautschuk: TH-NBR 6 | ACN-Gehalt [Gew.%] | Hydriergrad [%] | Menge [g] |
|---|---|---|---|
| Therban® LT 2157 | 21 | 94,5 | 1213 |

| Katalysator | | | Zusatz | | Temperatur |
|---|---|---|---|---|---|
| Grubbs-II | Menge [mg] | Menge Ruthenium bezogen auf Menge an Kautschuk [ppm] | Art | Menge [phr] | [°C] |
| | 1819 | 178,7 | - | - | 80 |

Der Katalysator wurde in diesem Beispiel in 50 ml MCB gelöst und direkt nach Herstellung der Lösung eingesetzt.

Nach einer Reaktionszeit von 7 Stunden wurde der Ansatz auf 45°C abgekühlt und mit 20 ml Ethylvinylether versetzt. Es wurden folgende Werte bestimmt:

| Analytische Daten | Reaktionszeit / min | |
|---|---|---|
| | 0 | 420 |
| $M_w$ [kg/mol] | 283 | 131 |
| $M_n$ [kg/mol] | 54,2 | 44,5 |
| PDI | 5,2 | 2,9 |
| LV [Pa s] | 16,1 | 1,14 |

(fortgesetzt)

| Analytische Daten | Reaktionszeit / min | |
|---|---|---|
| **LV/$M_w$ [Pa*s*mol/kg]** | $56{,}9 \cdot 10^{-3}$ | $8{,}70 \cdot 10^{-3}$ |

Der im **erfindungsgemäßen Beispiel 2.17** erhaltene teilhydrierte Nitrilkautschuk wurde mittels Wasserdampfdestillation aus der chlorbenzolischen Lösung isoliert. Nach Trocknung bei 55°C unter Vakuum wurde dieser teilhydrierte Nitrilkautschuk (der sogenannte "Rohkautschuk") durch die Mooney-Viskositäten nach 1 min. (ML1+1 at 100°C) und nach 4 min. (ML1+4 at 100°C) sowie durch die Mooney Relaxation nach 10 und 30 sec entsprechend ASTM D1646 charakterisiert **(Tabelle 6).**

**Tabelle 6: Rohkautschukeigenschaften**

| Beispiel | **Therban® LT 2157 (TH-NBR 6) ohne Metathese** | **Therban® LT 2157 (TH-NBR 6) nach Metathese (erfindungsgemäßes Beispiel 2.17)** |
|---|---|---|
| ML 1+1 at 100°C [ME] | 85,2 | 37,2 |
| ML 1+4 at 100°C [ME] | 70,8 | 29,2 |
| Mooney Relaxation /10 sec. [%] | 26,7 | 12,0 |
| Mooney Relaxation /30 sec. [%] | 19,1 | 6,1 |
| Mooney Relaxation /100 sec. [%] | 12,3 | 2,5 |

Aus **Tabelle 6** ist zu entnehmen, dass durch Metathesebehandlung von Therban® LT 2157 ohne Olefinzusatz die Mooneyviskosität nach 1 min. (ML1+1 at 100°C) und nach 4 min. (ML1+4 at 100°C) sowie die Mooney Relaxationen nach 10 sec., 30 sec. und 100 sec. abnehmen. Dies sind wesentliche Kriterien für eine Verbesserung des Verarbeitungsverhaltens des erfindungsgemäß hergestellten Kautschuks.

Auf der Basis der og. Kautschuke Therban® LT 2157 sowie des in Beispiel 2.17 erhaltenen Kautschuks wurden vulkanisierbare Mischungen A und B sowie Vulkanisate hergestellt.

Die Zusammensetzungen der Kautschukmischungen sind in **Tabelle 7** zusammengefasst.

**Tabelle 7: Zusammensetzung der Kautschukmischungen**

| **Mischungsbestandteil** | **A (Vergleich)** | **B (erfinduhgsgemäß)** |
|---|---|---|
| Therban® LT 2157 (TH-NBR 6) | 100 | - |
| Therban LT 2157 (TH-NBR 6) nach Metathese (Beispiel 2.17) | - | 100 |
| Ruß [1)] | 45 | 45 |
| Octyliertes Diphenylamin [2)] | 1,43 | 1,43 |
| Zinksalz von Methyl-2-mercaptobenzimidazol [3)] | 0,4 | 0,4 |
| Magnesiumoxid [4)] | 2 | 2 |
| Zinkoxid [5)] | 2 | 2 |
| Triallylisocyanurat [6)] | 3 | 3 |

(fortgesetzt)

| Mischungsbestandteil | A (Vergleich) | B (erfinduhgsgemäß) |
|---|---|---|
| Di-(tertbutylperoxyisopropyl) benzol (40%ig) 7) | 7 | 7 |
| 1) Corax® N550 (Evonik - Degussa GmbH)<br>2) Rhenofiit® DDA-70 (70%ig; RheinChemie)<br>3) Vulkanox® ZMB2/C5 (Lanxess Deutschland GmbH)<br>4) Maglite® DE (Merck & Co. Inc. USA)<br>5) Zinkoxid<br>6) TAIC - 70 (Kettlitz Chemie GmbH & Co.)<br>7) Perkadox® 14-40 (40%ig geträgert auf hellem Füllstoff) (Akzo Nobel Chemicals GmbH) | | |

Bei den Angaben in **Tabelle 7** handelt es sich um Gew.-Teile bezogen auf 100 Gew.-Teile Kautschuk. Für die Herstellung der Kautschukmischungen wurde ein zweistufiges Mischverfahren eingesetzt. Die 1. Mischstufe wurde in einem Innenmischer mit 1,5 L Innenvolumen (GK 1,5 der Firma Werner & Pfleiderer, Stuttgart, mit ineinandergreifenden Knetelementen (PS 5A - Schaufelgeometrie) durchgeführt. In den Innenmischer wurden alle Mischungsbestandteile außer Triallylisocyanurat und Peroxid bei einer Drehzahl von 40 $min^{-1}$, einem Stempeldruck von 6 bar bei 50°C gemischt. Der Kautschuk wurde im Innenmischer vorgelegt. Nach 60 sec. wurden 2/3 der Rußmenge mit den anderen Mischungsbestandteilen (außer Triallylisocyanurat und Di-(tertbutylperoxyisopropyl) benzol) zugegeben. Nach 90 sec. wurde die Restmenge des Rußes (1/3) zugegeben und weitere 90 sec. gemischt.

Der Zusatz von Triallylisocyanurat und Di-(tertbutylperoxyisopropyl) benzol (40%ig) erfolgte in der 2. Mischstufe, die auf einer Walze bei einer Temperatur 40°C durchgeführt wurde.

Zur Beurteilung des Verarbeitungsverhaltens der unvulkanisierten Kautschukmischungen wurden die Mooney-Viskositäten nach 1 min. (ML1+1/100°C) und nach 4 min. (ML1+4/100°C) sowie die Mooney Relaxationen nach 10 sec., 30 sec. und 100 sec. entsprechend ASTM D1646 bestimmt **(Tabelle 8).**

**Tabelle 8: Mischungseigenschaften**

| Beispiel | Einsatz von Therban® LT 2157 (TH-NBR 6) (ohne Metathese) (Vergleich) | Einsatz von Therban LT 2157 (TH-NBR 6) nach Metathese (erfindungsgemäßes Beispiel 2.17) |
|---|---|---|
| ML 1+1/100°C [ME] | 110,0 | 77,9 |
| ML 1+4/100°C [ME] | 96,1 | 66,3 |
| Mooney Relaxation /10 sec. [%] | 12,57 | 4,62 |
| Mooney Relaxation /30 sec. [%] | 12,6 | 4,6 |
| Mooney Relaxation /100 sec. [%] | 8,45 | 2,18 |

**Tabelle 8** ist zu entnehmen, dass die unvulkanisierte Kautschukmischung des erfindungsgemäß hergestellten Beispiels signifikant niedrigere Mischungsviskositäten nach 1 min (ML 1+1/100°C) und nach 4 min (ML 1+4/100°C) aufweist sowie reduzierte Mooneyrelaxationen nach 10, 30 und 100 sec. Aufgrund dieser Kennwerte ist das Verarbeitungsverhalten der Kautschukmischung auf Basis des erfindungsgemäß hergestellten Kautschuks 2.17 signifikant verbessert.

Das **Vulkanisationsverhalten** der Kautschukmischungen wurde bei 180°C nach DIN 53 529, Teil 3 mit Hilfe des Monsanto-Disk-Rheometers MDR 2000E bei 1,7 Hz und 1° Deformation bestimmt. Auf diese Weise wurden charakteristische Daten wie $F_a$, $F_{max}$, $F_{max.}$-$F_a$, $t_{10}$, $t_{50}$, $t_{90}$ und $t_{95}$ bestimmt.

**Nach DIN 53 529, Teil 3** bedeuten:

$F_{min}$: Vulkameteranzeige im Minimum der Vernetzungsisotherme
$F_{max}$: Vulkameteranzeige im Maximum der Vernetzungsisotherme
$F_{max}$ - $F_{min}$: Differenz der Vulkameteranzeigen zwischen Maximum und Minimum

$t_{10}$: Zeit, bei der 10% von $F_{max}$ - $F_{min}$ erreicht sind
$t_{50}$: Zeit, bei der 50% von $F_{max}$ - $F_{min}$ erreicht sind
$t_{90}$: Zeit, bei der 90% von $F_{max}$ - $F_{min}$ erreicht sind
$t_{95}$: Zeit, bei der 95% von $F_{max}$ - $F_{min}$ erreicht sind

Die Ergebnisse der Vulkameterprüfung sind in **Tabelle 9** zusammengefasst.

**Tabelle 9: Vulkanisationsverhalten der Kautschukmischungen**

| Beispiel | Therban LT 2157 (TH-NBR 6) ohne Metathese | Therban LT 2157 (TH-NBR 6) nach Metathese (erfindungsgemäßes Beispiel 2.17) |
|---|---|---|
| $F_{min}$ [dNm] | 2,16 | 0,89 |
| $F_{max}$ [dNm] | 23,78 | 21,4 |
| $F_{max}$ - Fmin [dNm] | 21,62 | 20,51 |
| $t_{10}$ [sec] | 39 | 48 |
| $t_{50}$ [sec] | 122 | 140 |
| $t_{90}$ [sec | 348 | 372 |
| $t_{95}$ [sec] | 454 | 481 |
| $t_{90}$-$t_{10}$ [sec] | 309 | 324 |

Aus **Tabelle 9** geht hervor, dass das Vulkanisationsverhalten der auf Basis des erfindungsgemäßen Kautschuks 2.17 hergestellten Kautschukmischung vergleichbar mit den Referenzmischungen ist. Die für die Charakterisierung der Vulkanisate notwendigen Prüfkörper wurden durch Vulkanisation der Kautschukmischungen bei 180°C/23 min. und einem Hydraulikdruck von 120 bar erhalten.

An den Vulkanisaten wurden folgende Eigenschaften auf der Basis der nachfolgenden Normen bestimmt:

DIN 53505: Shore A-Härte bei 23°C und 70°C:
DIN 53512: Rückprallelastizität bei 23°C ("R23") und 70°C ("R70")
DIN 53504: Spannungswerte bei 10%, 25%, 50% und 100% Dehnung ($\sigma_{10}$, $\sigma_{25}$, $\sigma_{50}$ und $\sigma_{100}$), Zugfestigkeit sowie Bruchdehnung
DIN 53516: Abrieb

Die Vulkanisateigenschaften des Vergleichsbeispiels (Therban LT 2157 ohne Metathese) und der erfindungsgemäßen Mischung 2.17 (Therban LT 2157 nach Metathese) sind in der folgenden **Tabelle 10** zusammengefasst.

**Tabelle 10: Vulkanisateigenschaften**

| Beispiel | Therban LT 2157 (TH-NBR 6) ohne Metathese | Therban LT 2157 (TH-NBR 6) nach Metathese (erfindungsgemäßes Beispiel 2.17) |
|---|---|---|
| Shore A-Härte bei 23°C | 69,9 | 69,6 |
| Shore A Härte bei 70°C | 69,0 | 67,0 |
| Rückprallelastizität/23°C ("R23") [%] | 43,1 | 42,8 |
| Rückprallelastizität/70°C ("R70") [%] | 59,8 | 59,1 |
| $\sigma_{10}$ [MPa] | 0,7 | 0,7 |
| $\sigma_{25}$ [MPa] | 1,3 | 1,3 |
| $\sigma_{30}$ [MPa] | 2,4 | 2,5 |
| $\sigma_{100}$ [MPa] | 6,6 | 6,7 |
| Zugfestigkeit [MPa] | 21,0 | 20,6 |

(fortgesetzt)

| Beispiel | Therban LT 2157 (TH-NBR 6) ohne Metathese | Therban LT 2157 (TH-NBR 6) nach Metathese (erfindungsgemäßes Beispiel 2.17) |
|---|---|---|
| Bruchdehnung [MPa] | 212 | 239 |
| Abrieb [$mm^3$] | 77 | 79 |

**Tabelle 10** zeigt, dass die Vulkanisateigenschaften des erfindungsgemäßen Kautschuks 2.17 innerhalb der Fehlergrenzen der jew. Messmethode vergleichbar mit denen des nicht erfindungsgemäßen Vergleichsbeispiels sind. Es ist ein überraschendes Ergebnis, dass trotz verringerter Viskosität Vulkanisate mit genauso exzellenten mechanischen Eigenschaften erhalten werden.

**Dynamische Beanspruchung im Goodrich Flexometer:**

Zur Beurteilung des dynamischen Verhaltens dickwandiger Artikel wurden die Vulkanisate im **Goodrich-Flexometer** nach **DIN 53533** bei einer Vorspannung von 1,0 MPa und einem Hub von 4,00 mm nach einer Beanspruchungszeit von 25 min./100°C untersucht. Hierbei wurden die Temperaturerhöhung sowie die bleibende Verformung bestimmt **(Tabelle 11).**

**Tabelle 11: Goodrich-Flexometer**

| Beispiel | Therban LT 2157 ohne Metathese | Therban LT 2157 nach Metathese |
|---|---|---|
| Temperaturerhöhung [°C] | 29,8 | 30,9 |
| Bleibende Verformung [%] | 0,8 | 0,8 |

Im Goodrich-Flexometer-Test weist das Vulkanisat auf Basis des erfindungsgemäß hergestellten Kautschuks 2.17 innerhalb der Fehlergrenzen des Goodrich-Flexometertests vergleichbare Eigenschaften wie das nicht errfindungsgemäße Vergleichsbeispiel auf. Dies sind Hinweise auf eine vergleichbare Lebensdauer der beiden Vulkanisate bei dynamischer Belastung.

**Patentansprüche**

1. Teilhydrierte Nitrilkautschuke mit einem Hydriergrad im Bereich von 50 bis 97%, die einen Quotienten aus Lösungsviskosität (LV) dividiert durch das Gewichtsmittel des Molekulargewichts (Mw) im Bereich von $4*10^{-3}$ bis $30*10^{-3}$ Pa*s*mol/kg aufweisen, wobei das Molekulargewicht und die Lösungsviskosität mittels der in der Beschreibung angegebenen Verfahren bestimmt werden.

2. Teilhydrierte Nitrilkautschuke nach Anspruch 1, die einen Hydriergrad im Bereich von 52,5 bis 96,5%, besonders bevorzugt 55 bis 96%, ganz besonders bevorzugt 57,7 bis 95.5 % und insbesondere 60 bis 95 % besitzen.

3. Teilhydrierte Nitrilkautschuke nach Anspruch 1, die einen Quotienten aus Lösungsviskosität (LV) dividiert durch das Gewichtsmittel des Molekulargewichts (Mw) im Bereich von $5*10^{-3}$ bis $30*10^{-3}$ Pa*s*mol/kg, und bevorzugt $6,5*10^{-3}$ bis $30*10^{-3}$ Pa*s*mol/kg aufweisen.

4. Teilhydrierte Nitrilkautschuke nach Anspruch 1, 2 oder 3 enthaltend Wiederholungseinheiten, die sich von mindestens einem konjugierten Dien und mindestens einem $\alpha,\beta$-ungesättigten Nitril ableiten, wobei die C=C Doppelbindungen der einpolymerisierten Dien-Wiederholungseinheiten zu mindestens 50% bis zu maximal 97 %, bevorzugt zu mindestens 52,5 bis zu 96,6 %, besonders bevorzugt zu mindestens 55 bis zu 96 %, ganz besonders bevorzugt zu mindestens 57,5 % bis zu 96,5 % und insbesondere zu mindestens 60 bis zu 95% hydriert sind.

5. Verfahren zur Herstellung teilhydrierter Nitrilkautschuke mit einem Hydriergrad im Bereich von 50 bis 97%, die einen Quotienten aus Lösungsviskosität (LV) dividiert durch das Gewichtsmittel des Molekulargewichts (Mw) im Bereich von $4*10^{-3}$ bis $30*10^{-3}$ Pa*s*mol/kg aufweisen, wobei das Molekulargewicht und die Lösungsviskosität mittels der in der Beschreibung angegebenen Verfahren bestimmt werden, **dadurch gekennzeichnet, dass** teilhydrierte Nitrilkautschuke mit Hydriergraden im Bereich von 50 bis 97% in Gegenwart eines Komplexkatalysators auf Basis

eines Metalls der 6. oder 8. Nebengruppe des Periodensystems, bevorzugt Molybdän, Osmium oder Ruthenium, der mindestens einen carbenartig an das Metall gebundenen Liganden aufweist, einer Metathese-Reaktion unterzogen werden, wobei teilhydrierten Nitrilkautschuks $C_2$-$C_{16}$-Olefine maximal in einer Menge von in Summe 2 phr zugegeben sind.

6. Verfahren nach Anspruch 4, **dadurch gekennzeichnet, dass** als Komplex-Katalysator ein Katalysator eingesetzt wird ausgewählt aus der Gruppe umfassend

(i) Katalysatoren der allgemeinen Formel (A)

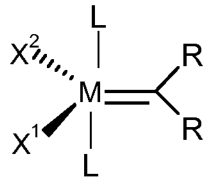

(A)

worin

M Osmium oder Ruthenium bedeutet,
$X^1$, $X^2$ gleich oder verschieden sind und zwei Liganden, bevorzugt anionische Liganden, darstellen,
L gleiche oder verschiedene Liganden, bevorzugt neutrale Elektronen-Donoren darstellen, und
R gleich oder verschieden sind und Wasserstoff, Alkyl, bevorzugt $C_1$-$C_{30}$-Alkyl, Cycloalkyl, bevorzugt $C_3$-$C_{20}$-Cycloalkyl, Alkenyl, bevorzugt $C_2$-$C_{20}$-Alkenyl, Alkinyl, bevorzugt $C_2$-$C_{20}$-Alkinyl, Aryl, bevorzugt $C_6$-$C_{24}$-Aryl, Carboxylat, bevorzugt $C_1$-$C_{20}$-Carboxylat, Alkoxy, bevorzugt $C_1$-$C_{20}$-Alkoxy, Alkenyloxy, bevorzugt $C_2$-$C_{20}$-Alkenyloxy, Alkinyloxy, bevorzugt $C_2$-$C_{20}$-Alkinyloxy, Aryloxy, bevorzugt $C_6$-$C_{24}$-Aryloxy, Alkoxycarbonyl, bevorzugt $C_2$-$C_{20}$-Alkoxycarbonyl, Alkylamino, bevorzugt $C_1$-$C_{30}$-Alkylamino, Alkylthio, bevorzugt $C_1$-$C_{30}$-Alkylthio, Arylthio, bevorzugt $C_6$-$C_{24}$-Arylthio, Alkylsulfonyl, bevorzugt $C_1$-$C_{20}$-Alkylsulfonyl, oder Alkylsulfinyl, bevorzugt $C_1$-$C_{20}$-Alkylsulfinyl darstellen, wobei diese Reste alle jeweils optional durch ein oder mehrere Alkyl-, Halogen-, Alkoxy-, Aryl- oder Heteroaryl-Reste substituiert sein können, oder alternativ beide Reste R unter Einbindung des gemeinsamen C-Atoms, an das sie gebunden sind, zu einer cyclischen Gruppe verbrückt sind, die aliphatischer oder aromatischer Natur sein kann, gegebenenfalls substituiert ist und ein oder mehrere Heteroatome enthalten kann,

(ii) einen Katalysator, der die Struktur (IV) (Grubbs (I)-Katalysator) oder (V) (Grubbs (II)-Katalysator), wobei Cy für Cyclohexyl steht, besitzt,

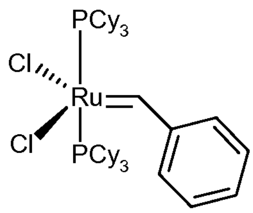

(IV)

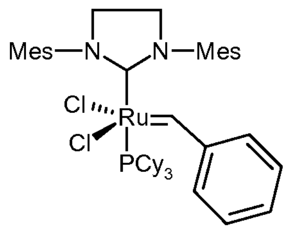

(V)

(iii) Katalysatoren der allgemeinen Formel (B)

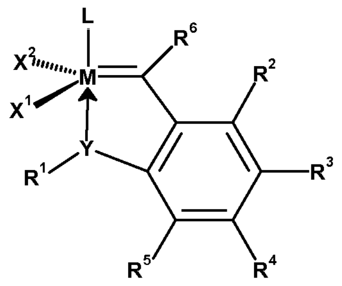

(B)

worin

M Ruthenium oder Osmium bedeutet,
$X^1$ und $X^2$ gleiche oder verschiedene Liganden, bevorzugt anionische Liganden sind,
Y Sauerstoff (O), Schwefel (S), einen Rest N-$R^1$ oder einen Rest P-$R^1$ bedeutet, wobei $R^1$ die nachfolgend genannten Bedeutungen besitzt,
$R^1$ einen Alkyl-, Cycloalkyl-, Alkenyl-, Alkinyl-, Aryl-, Alkoxy-, Alkenyloxy-, Alkinyloxy-, Aryloxy-, Alkoxycarbonyl-, Alkylamino-, Alkylthio-, Arylthio-, Alkylsulfonyl- oder Alkylsulfinyl-Rest darstellt, die alle jeweils optional durch ein oder mehrere Alkyl-, Halogen-, Alkoxy-, Aryl- oder Heteroaryl-Reste substituiert sein können,
$R^2$, $R^3$, $R^4$, $R^5$ gleich oder verschieden sind und Wasserstoff, organische oder anorganische Reste darstellen,
$R^6$ H, einen Alkyl-, Alkenyl-, Alkinyl- oder einen Aryl-Rest bedeutet und
L ein Ligand mit den gleichen Bedeutungen wie für die Formel (A) genannt,

(iv) einen Katalysator der Formel (VII) - (XVII), wobei Mes jeweils für 2,4,6-Trimethylphenyl steht

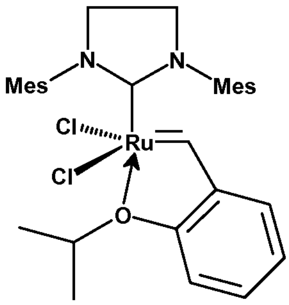

(VII)

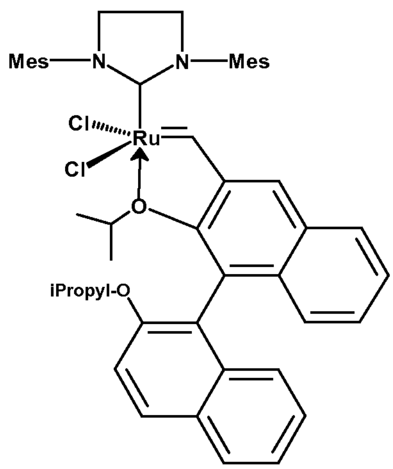

**(VIII)**

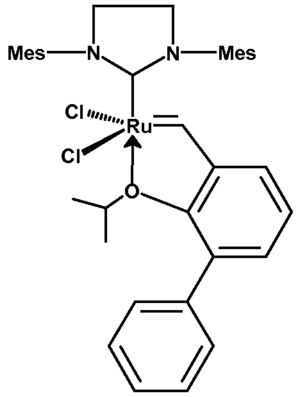

(IX)

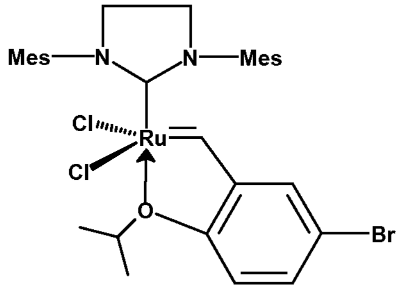

(X)

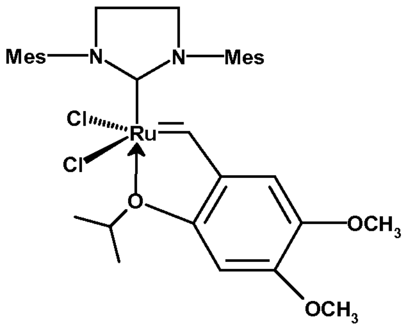

(XI)

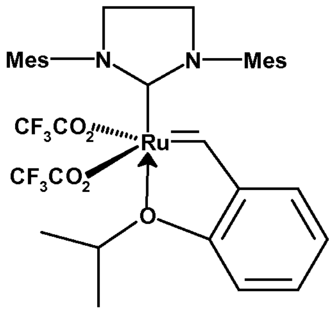

(XII)

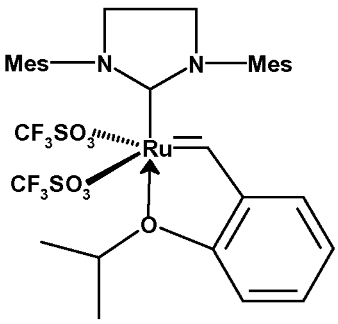

(XIII)

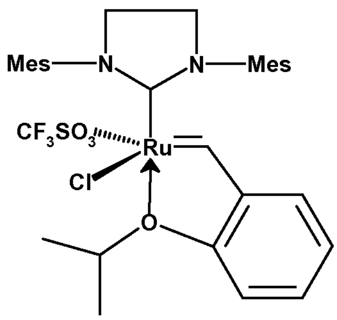

(XIV)

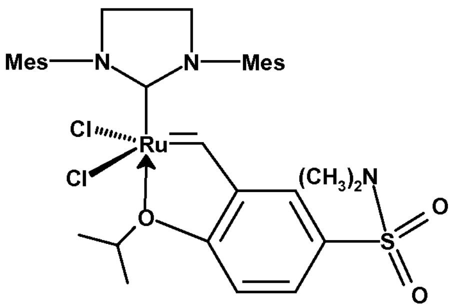

(XV)

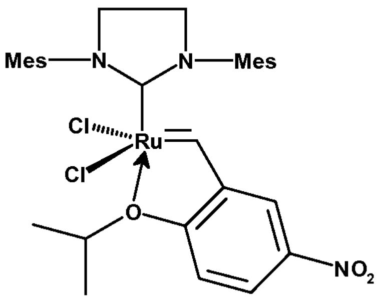

(XVI)

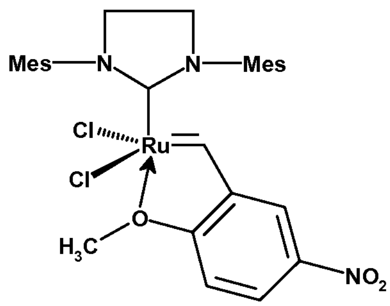

(XVII)

(v) Katalysatoren der allgemeinen Formel (G), (H) oder (K),

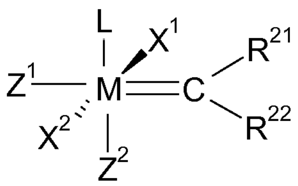

(G)

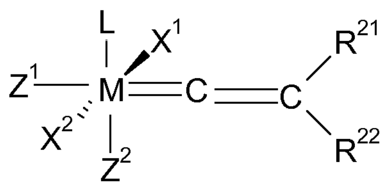

(H)

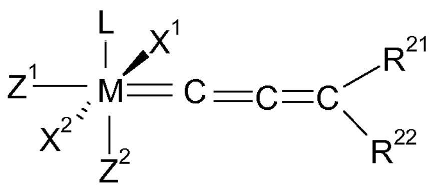

(K)

worin

M Osmium oder Ruthenium bedeutet,
$X^1$ und $X^2$ gleich oder verschieden sind und zwei Liganden, bevorzugt anionische Liganden, darstellen,
L einen Liganden, bevorzugt einen neutralen Elektronen-Donor darstellt,
$Z^1$ und $Z^2$ gleich oder verschieden sind und neutrale Elektronen-Donoren darstellen,
$R^{21}$ und $R^{22}$ unabhängig voneinander Wasserstoff, Alkyl, Cycloalkyl, Alkenyl, Alkinyl, Aryl, Carboxylat, Alkoxy, Alkenyloxy, Alkinyloxy, Aryloxy, Alkoxycarbonyl, Alkylamino, Alkylthio, Alkylsulfonyl oder Alkylsulfinyl bedeuten, die jeweils durch ein oder mehrere Reste ausgewählt aus Alkyl, Halogen, Alkoxy, Aryl oder Heteroaryl substituiert sind, und

(vi) einen Katalysator der folgenden Formel, wobei Mes jeweils für 2,4,6-Trimethylphenyl steht.

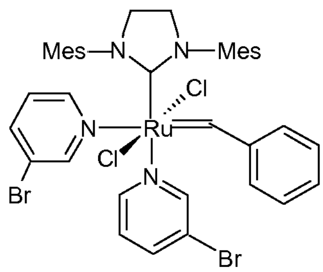

7. Verfahren nach Anspruch 5 oder 6, **dadurch gekennzeichnet, dass** die Menge an eingesetztem Katalysator, bezogen auf den eingesetzten teilhydrierten Nitrilkautschuk, 5 bis 1.000 ppm Edelmetall, bevorzugt 10 bis 500 ppm und insbesondere 25 bis 250 ppm beträgt.

8. Verfahren nach Anspruch 5 oder 6, **dadurch gekennzeichnet, dass** die Konzentration des teilhydrierten Nitrilkautschuks in der Reaktionsmischung im Bereich von 1 bis 20 Gew.%, bevorzugt im Bereich von 5 bis 15 Gew.%, liegt

9. Verfahren nach Anspruch 5 oder 6, **dadurch gekennzeichnet, dass** die Metathese Reaktion bei einer Temperatur im Bereich von 20 °C bis 150°C, bevorzugt im Bereich von 25 bis 100 °C und insbesondere im Bereich von 30 bis 90 °C durchgeführt wird.

10. Vulkanisierbare Mischungen enthaltend

(i) mindestens einen teilhydrierten Nitrilkautschuk mit einem Hydriergrad im Bereich von 50 bis 97%, der einen Quotienten aus Lösungsviskosität (LV) dividiert durch das Gewichtsmittel des Molekulargewichts (Mw) im Bereich von $4*10^{-3}$ bis $30*10^{-3}$ Pa*s*mol/kg aufweisen, wobei das Molekulargewicht und die Lösungsviskosität mittels der in der Beschreibung angegebenen Verfahren bestimmt werden, und
(ii) mindestens ein peroxidisches Vernetzungssystem.

**11.** Vulkanisierbare Mischungen nach Anspruch 10, **dadurch gekennzeichnet, dass** sie zusätzlich (iii) mindestens einen Füllstoff und/oder (iv) ein oder mehrere weitere andere Additive enthalten.

**12.** Verfahren zur Herstellung der vulkanisierbaren Mischungen nach Anspruch 10 oder 11, indem man den teilhydrierten Nitrilkautschuk (i) mit mindestens einem peroxidischen Vernetzungssystem (ii), optional mindestens einem Füllstoff (iii) und/oder ein oder mehreren weiteren anderen Additiven (iv) mischt.

**13.** Verfahren zur Herstellung von Vulkanisaten, welches **dadurch gekennzeichnet ist, dass** man die vulkanisierbare Mischung nach Anspruch 10 oder 11 durch Erhöhung der Temperatur vernetzt, bevorzugt in einem Formgebungsverfahren, besonders bevorzugt unter Anwendung des Spritzgusses.

**14.** Vulkanisat erhältlich nach dem Verfahren gemäß Anspruch 13.

## Claims

**1.** Partially hydrogenated nitrile rubbers having a degree of hydrogenation in the range from 50% to 97%, which have a ratio of solution viscosity (SV) divided by the weight average of the molecular weight (Mw) in the range from $4*10^{-3}$ to $30*10^{-3}$ Pa*s*mol/kg, where the molecular weight and the solution viscosity are determined by means of the methods stated in the description.

**2.** Partially hydrogenated nitrile rubbers according to Claim 1, which possess a degree of hydrogenation in the range from 52.5% to 96.5%, more preferably 55% to 96%, very preferably 57.7% to 95.5% and more particularly 60% to 95%.

**3.** Partially hydrogenated nitrile rubbers according to Claim 1, which have a ratio of solution viscosity (SV) divided by the weight average of the molecular weight (Mw) in the range from $5*10^{-3}$ to $30*10^{-3}$ Pa*s*mol/kg, and preferably $6.5*10^{-3}$ to $30*10^{-3}$ Pa*s*mol/kg.

**4.** Partially hydrogenated nitrile rubbers according to Claim 1, 2 or 3, comprising repeating units deriving from at least one conjugated diene and at least one $\alpha,\beta$-unsaturated nitrile, the C=C double bonds of the copolymerized diene repeating units being hydrogenated to an extent of at least 50% up to a maximum of 97%, preferably at least 52.5% up to 96.6%, more preferably at least 55% up to 96%, very preferably at least 57.5% up to 96.5% and more particularly at least 60% up to 95%.

**5.** Process for preparing partially hydrogenated nitrile rubbers having a degree of hydrogenation in the range from 50% to 97%, which have a ratio of solution viscosity (SV) divided by the weight average of the moleclar weight (Mw) in the range from $4*10^{-3}$ to $30*10^{-3}$ Pa*s*mol/kg, where the molecular weight and the solution viscosity are determined by means of the methods stated in the description, **characterized in that** partially hydrogenated nitrile rubbers having degrees of hydrogenation in the range from 50% to 97% are subjected in the presence of a complex catalyst based on a metal from transition group 6 or 8 of the Periodic Table, preferably molybdenum, osmium or ruthenium, which has at least one ligand attached carbenically to the metal, to a metathesis reaction, wherein, during the metathesis reaction of the partially hydrogenated nitrile rubber, $C_2$-$C_{16}$ olefins are added at most in an amount of in total 2 phr.

**6.** Process according to Claim 4, **characterized in that** use is made as complex catalyst of a catalyst selected from the group encompassing

(i) catalysts of the general formula (A)

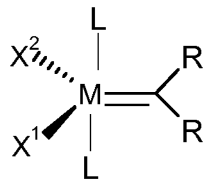

(A)

in which

M is osmium or ruthenium,
$X^1$ and $X^2$ are identical or different and represent two ligands, preferably anionic ligands,
L represents identical or different ligands, preferably neutral electron donors, and
R is identical or different at each occurrence and represents hydrogen, alkyl, preferably $C_1$-$C_{30}$ alkyl, cycloalkyl, preferably $C_3$-$C_{20}$ cycloalkyl, alkenyl, preferably $C_2$-$C_{20}$ alkenyl, alkynyl, preferably $C_2$-$C_{20}$ alkynyl, aryl, preferably $C_6$-$C_{24}$ aryl, carboxylate, preferably $C_1$-$C_{20}$ carboxylate, alkoxy, preferably $C_1$-$C_{20}$ alkoxy, alkenyloxy, preferably $C_2$-$C_{20}$ alkenyloxy, alkynyloxy, preferably $C_2$-$C_{20}$ alkynyloxy, aryloxy, preferably $C_6$-$C_{24}$ aryloxy, alkoxycarbonyl, preferably $C_2$-$C_{20}$ alkoxycarbonyl, alkylamino, preferably $C_1$-$C_{30}$ alkylamino, alkylthio, preferably $C_1$-$C_{30}$ alkylthio, arylthio, preferably $C_6$-$C_{24}$ arylthio, alkylsulphonyl, preferably $C_1$-$C_{20}$ alkylsulphonyl, or alkylsulphinyl, preferably $C_1$-$C_{20}$ alkylsulphinyl, it being possible for all of these radicals to be substituted in each case optionally by one or more alkyl, halogen, alkoxy, aryl or heteroaryl radicals, or alternatively both radicals R are bridged with incorporation of the common C atom to which they are attached, to form a cyclic group, which may be aliphatic or aromatic in nature, is optionally substituted and may contain one or more heteroatoms,

(ii) a catalyst which possesses the structure (IV) (Grubbs (I) catalyst) or (V) (Grubbs (II) catalyst), where Cy stands for cyclohexyl,

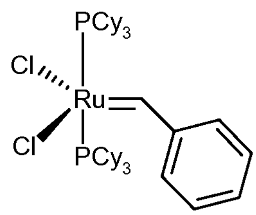

(IV)

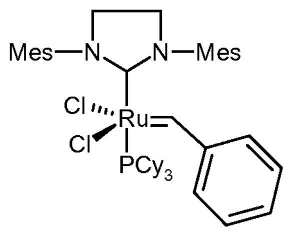

(V)

(iii) catalysts of the general formula (B)

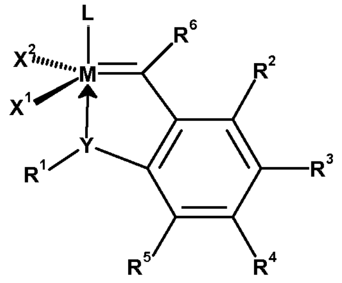

(B)

in which

M is ruthenium or osmium,
$X^1$ and $X^2$ are identical or different ligands, preferably anionic ligands,
Y is oxygen (O), sulphur (S), a radical N-$R^1$ or a radical P-$R^1$, where $R^1$ possesses the definitions identified below,
$R^1$ is an alkyl, cycloalkyl, alkenyl, alkynyl, aryl, alkoxy, alkenyloxy, alkynyloxy, aryloxy, alkoxycarbonyl, alkylamino, alkylthio, arylthio, alkylsulphonyl or alkylsulphinyl radical, which may all be substituted in each case optionally by one or more alkyl, halogen, alkoxy, aryl or heteroaryl radicals,
$R^2$, $R^3$, $R^4$ and $R^5$ are identical or different and are hydrogen or organic or inorganic radicals,
$R^6$ is H or an alkyl, alkenyl, alkynyl or aryl radical, and
L is a ligand having the same definitions as stated for formula (A),

(iv) a catalyst of the formula (VII) - (XVII), where Mes in each case stands for 2,4,6-trimethylphenyl,

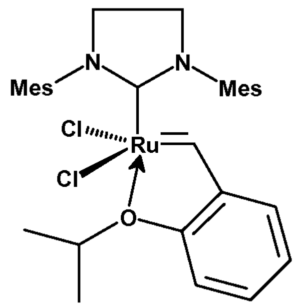

(VII)

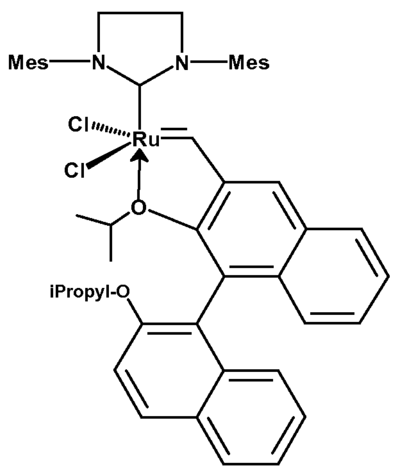

(VIII)

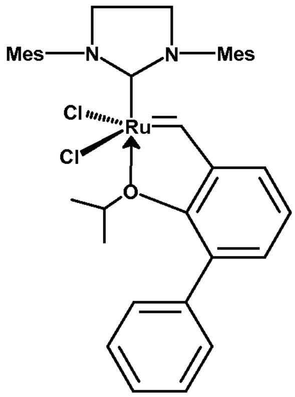

(IX)

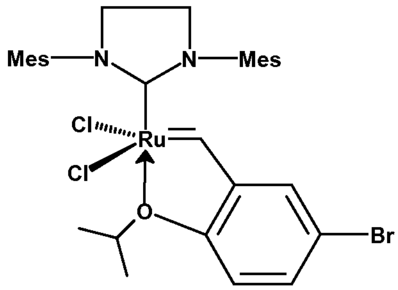

(X)

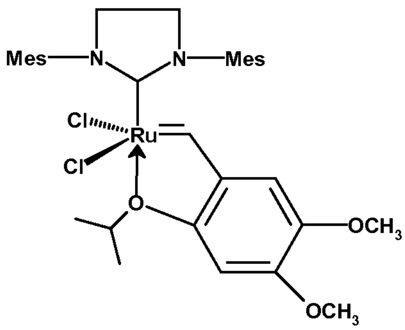

(XI)

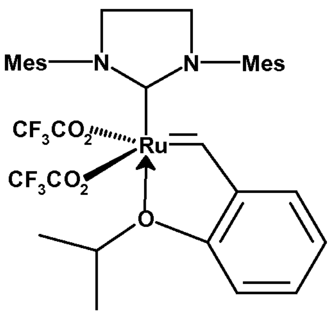

(XII)

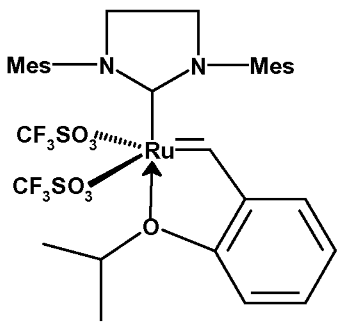

(XIII)

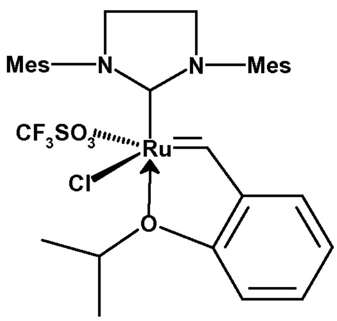

(XIV)

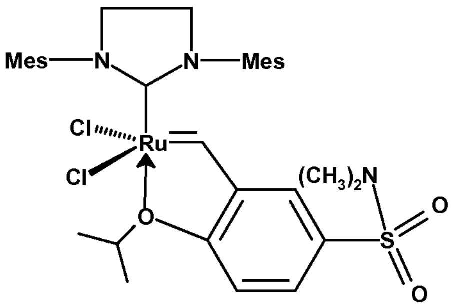

(XV)

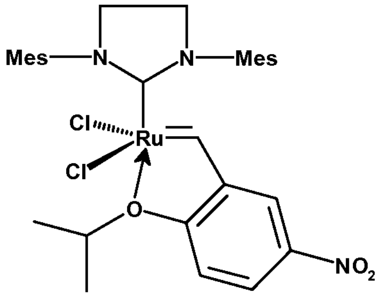

(XVI)

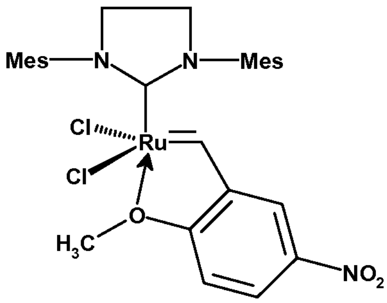

(XVII)

(v) catalysts of the general formula **(G), (H) or (K),**

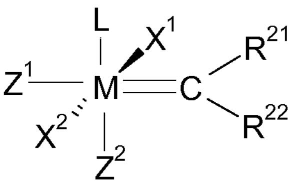

(G)

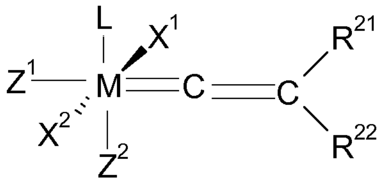

(H)

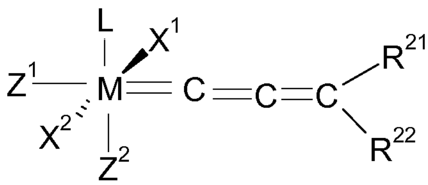

(K)

in which

M is osmium or ruthenium,
$X^1$ and $X^2$ are identical or different and represent two ligands, preferably anionic ligands,
L represents a ligand, preferably a neutral electron donor,
$Z^1$ and $Z^2$ are identical or different and represent neutral electron donors,
$R^{21}$ and $R^{22}$ independently of one another are hydrogen, alkyl, cycloalkyl, alkenyl, alkynyl, aryl, carboxylate, alkoxy, alkenyloxy, alkynyloxy, aryloxy, alkoxycarbonyl, alkylamino, alkylthio, alkylsulphonyl or alkylsulphinyl, which in each case are substituted by one or more radicals selected from alkyl, halogen, alkoxy, aryl or heteroaryl, and

(vi) a catalyst of the following formula, where Mes in each case stands for 2,4,6-trimethylphenyl.

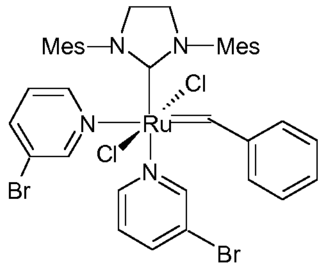

7. Process according to Claim 5 or 6, **characterized in that** the amount of catalyst used, based on the partially hydrogenated nitrile rubber used, is 5 to 1000 ppm of noble metal, preferably 10 to 500 ppm and more particularly 25 to 250 ppm.

8. Process according to Claim 5 or 6, **characterized in that** the concentration of the partially hydrogenated nitrile rubber in the reaction mixture is in the range from 1% to 20% by weight, preferably in the range from 5% to 15% by weight.

9. Process according to Claim 5 or 6, **characterized in that** the metathesis reaction is carried out at a temperature in the range from 20°C to 150°C, preferably in the range from 25 to 100°C and more particularly in the range from 30 to 90°C.

10. Vulcanizable mixtures comprising

(i) at least one partially hydrogenated nitrile rubber having a degree of hydrogenation in the range from 50% to 97%, which has a ratio of solution viscosity (SV) divided by the weight average of the molecular weight (Mw) in the range from $4*10^{-3}$ to $30*10^{-3}$ Pa*s*mol/kg, where the molecular weight and the solution viscosity are determined by means of the methods stated in the description, and
(ii)at least one peroxidic crosslinking system.

11. Vulcanizable mixtures according to Claim 10, **characterized in that** they further comprise (iii) at least one filler and/or (iv) one or more further, different additives.

12. Process for preparing the vulcanizable mixtures according to Claim 10 or 11, by mixing the partially hydrogenated nitrile rubber (i) with at least one peroxidic crosslinking system (ii), optionally at least one filler (iii) and/or one or more further, different additives (iv).

13. Process for producing vulcanizates, **characterized in that** the vulcanizable mixture according to Claim 10 or 11 is crosslinked by temperature increase, preferably in a shaping process, more preferably employing injection moulding.

14. Vulcanizate obtainable by the process according to Claim 13.

**Revendications**

1. Caoutchoucs de nitrile partiellement hydrogénés ayant un degré d'hydrogénation dans la plage allant de 50 à 97 %, qui présentent un quotient entre la viscosité en solution (LV) divisée par la moyenne en poids du poids moléculaire (Mw) dans la plage allant de $4*10^{-3}$ à $30*10^{-3}$ Pa*s*mol/kg, le poids moléculaire et la viscosité en solution étant déterminés par les procédés indiqués dans la description.

2. Caoutchoucs de nitrile partiellement hydrogénés selon la revendication 1, qui présentent un degré d'hydrogénation dans la plage allant de 52,5 à 96,5 %, de manière particulièrement préférée de 55 à 96 %, de manière tout particulièrement préférée de 57,7 à 95,5 % et notamment de 60 à 95 %.

3. Caoutchoucs de nitrile partiellement hydrogénés selon la revendication 1, qui présentent un quotient entre la viscosité en solution (LV) divisée par la moyenne en poids du poids moléculaire (Mw) dans la plage allant de $5*10^{-3}$ à $30*10^{-3}$ Pa*s*mol/kg et de préférence de $6,5*10^{-3}$ à $30*10^{-3}$ Pa*s*mol/kg.

**4.** Caoutchoucs de nitrile partiellement hydrogénés selon la revendication 1, 2 ou 3, contenant des unités de répétition qui dérivent d'au moins un diène conjugué et d'au moins un nitrile $\alpha,\beta$-insaturé, les doubles liaisons C=C des unités de répétition diènes copolymérisées étant hydrogénées à hauteur d'au moins 50 % à au plus 97 %, de préférence d'au moins 52,5 à 96,6 %, de manière particulièrement préférée d'au moins 55 à 96 %, de manière tout particulièrement préférée d'au moins 57,5 % à 96,5 %, et notamment d'au moins 60 à 95 %.

**5.** Procédé de fabrication de caoutchoucs de nitrile partiellement hydrogénés ayant un degré d'hydrogénation dans la plage allant de 50 à 97 %, qui présentent un quotient entre la viscosité en solution (LV) divisée par la moyenne en poids du poids moléculaire (Mw) dans la plage allant de $4*10^{-3}$ à $30*10^{-3}$ Pa*s*mol/kg, le poids moléculaire et la viscosité en solution étant déterminés par les procédés indiqués dans la description, **caractérisé en ce que** des caoutchoucs de nitrile partiellement hydrogénés ayant des degrés d'hydrogénation dans la plage allant de 50 à 97 % sont soumis à une réaction de métathèse en présence d'un catalyseur complexe à base d'un métal du groupe de transition 6 ou 8 du tableau périodique, de préférence le molybdène, l'osmium ou le ruthénium, qui comprend au moins un ligand relié au métal sous la forme d'un carbène, des oléfines en $C_2$-$C_{16}$ étant ajoutées au plus en une quantité totale de 2 pce pendant la réaction de métathèse du caoutchouc de nitrile partiellement hydrogéné.

**6.** Procédé selon la revendication 4, **caractérisé en ce qu'**un catalyseur choisi dans le groupe comprenant

(i) les catalyseurs de formule générale (A)

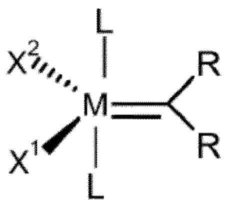

(A)

dans laquelle

M signifie osmium ou ruthénium,
$X^1$, $X^2$ sont identiques ou différents, et représentent deux ligands, de préférence des ligands anioniques,
les L représentent des ligands identiques ou différents, de préférence des donneurs d'électrons neutres, et
les R sont identiques ou différents, et représentent hydrogène, alkyle, de préférence alkyle en $C_1$-$C_{30}$, cycloalkyle, de préférence cycloalkyle en $C_3$-$C_{20}$, alcényle, de préférence alcényle en $C_2$-$C_{20}$, alcynyle, de préférence alcynyle en $C_2$-$C_{20}$, aryle, de préférence aryle en $C_6$-$C_{24}$, carboxylate, de préférence carboxylate en $C_1$-$C_{20}$, alcoxy, de préférence alcoxy en $C_1$-$C_{20}$, alcényloxy, de préférence alcényloxy en $C_2$-$C_{20}$, alcynyloxy, de préférence alcynyloxy en $C_2$-$C_{20}$, aryloxy, de préférence aryloxy en $C_6$-$C_{24}$, alcoxycarbonyle, de préférence alcoxycarbonyle en $C_2$-$C_{20}$, alkylamino, de préférence alkylamino en $C_1$-$C_{30}$, alkylthio, de préférence alkylthio en $C_1$-$C_{30}$, arylthio, de préférence arylthio en $C_6$-$C_{24}$, alkylsulfonyle, de préférence alkylsulfonyle en $C_1$-$C_{20}$, ou alkylsulfinyle, de préférence alkylsulfinyle en $C_1$-$C_{20}$, ces radicaux pouvant tous à chaque fois éventuellement être substitués par un ou plusieurs radicaux alkyle, halogène, alcoxy, aryle ou hétéroaryle, ou en variante les deux radicaux R sont pontés en incluant l'atome C commun auquel ils sont reliés en un groupe cyclique, qui peut être de nature aliphatique ou aromatique, est éventuellement substitué et peut contenir un ou plusieurs hétéroatomes,

(ii) un catalyseur qui présente la structure (IV) (catalyseur Grubbs (I)) ou (V) (catalyseur Grubbs (II)), Cy représentant cyclohexyle,

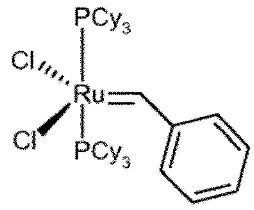

(IV)

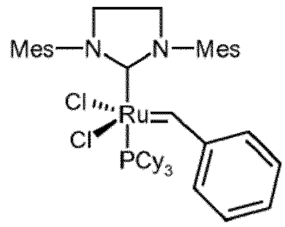

(V)

(iii) les catalyseurs de formule générale (B)

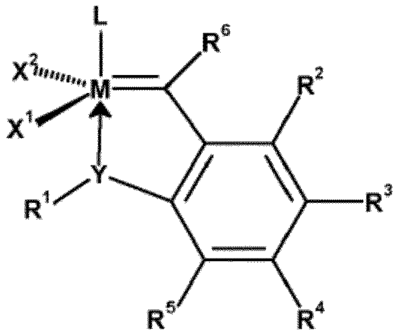

(B)

dans laquelle

M signifie ruthénium ou osmium,

$X^1$ et $X^2$ ont des ligands identiques ou différents, de préférence des ligands anioniques,

Y signifie l'oxygène (O), le soufre (S), un radical N-$R^1$ ou un radical P-$R^1$, $R^1$ ayant les significations indiquées ci-après,

$R^1$ représente un radical alkyle, cycloalkyle, alcényle, alcynyle, aryle, alcoxy, alcényloxy, alcynyloxy, aryloxy, alcoxycarbonyle, alkylamino, alkylthio, arylthio, alkylsulfonyle ou alkylsulfinyle, qui peuvent tous à chaque fois éventuellement être substitués par un ou plusieurs radicaux alkyle, halogène, alcoxy, aryle ou hétéroaryle,

$R^2$, $R^3$, $R^4$, $R^5$ sont identiques ou différents, et représentent l'hydrogène, des radicaux organiques ou inorganiques,

$R^6$ signifie H, un radical alkyle, alcényle, alcynyle ou aryle, et

L représente un ligand avec les mêmes significations que pour la formule (A),

(iv) un catalyseur de formule (VII) à (XVII), Mes représentant à chaque fois 2,4,6-triméthylphényle,

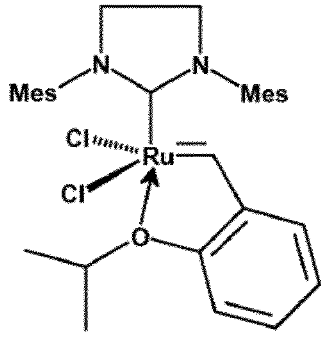

(VII)

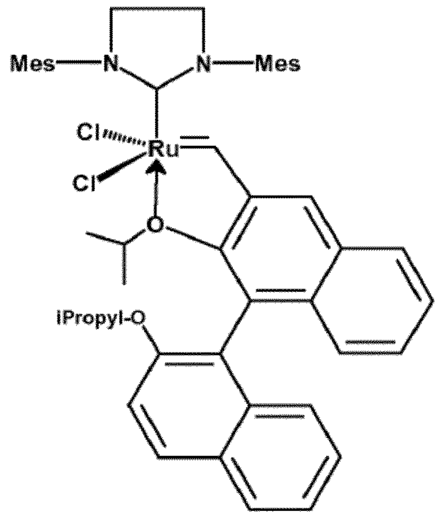

(VIII)

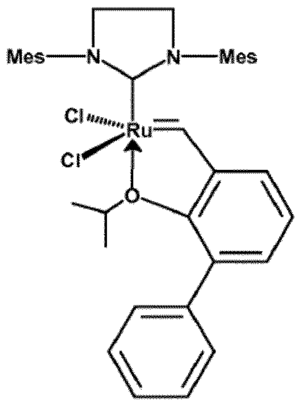

(IX)

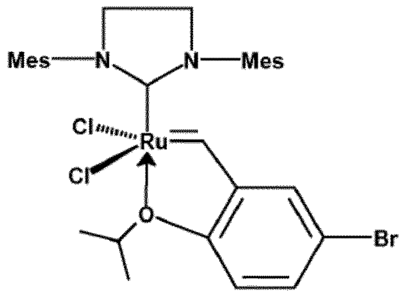

(X)

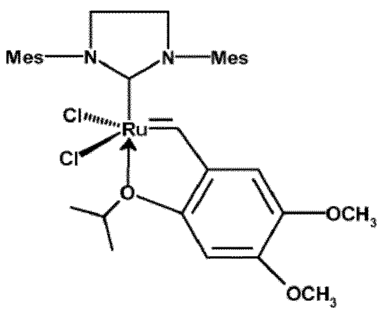

(XI)

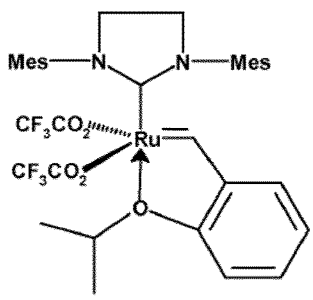

(XII)

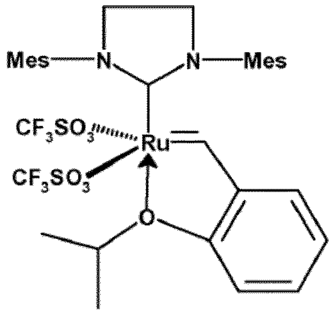

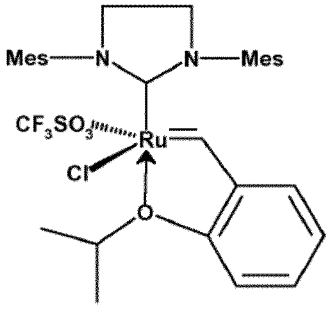

(XIII) (XIV)

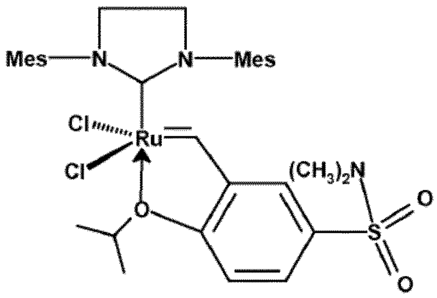

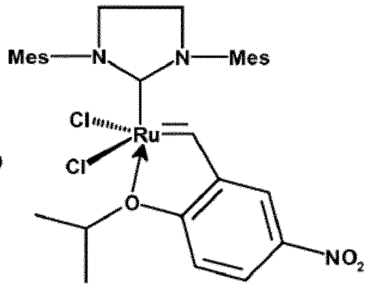

(XV) (XVI)

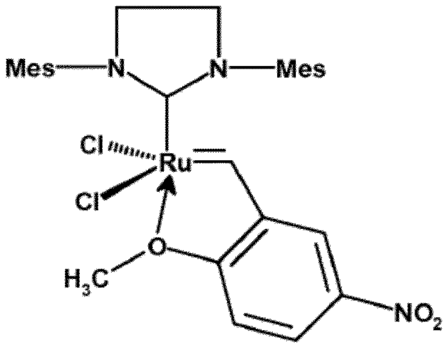

(XVII)

(v) les catalyseurs de formule générale (G), (H) ou (K)

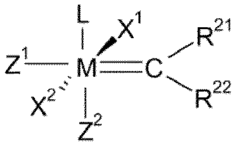

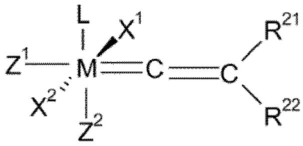

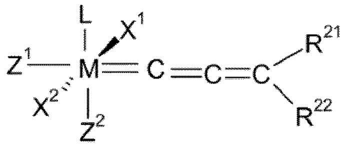

(G) (H) (K)

dans lesquelles

M signifie osmium ou ruthénium,

$X^1$ et $X^2$ sont identiques ou différents, et représentent deux ligands, de préférence des ligands anioniques,

L représente un ligand, de préférence un donneur d'électrons neutre,

$Z^1$ et $Z^2$ sont identiques ou différents, et représentent des donneurs d'électrons neutres,

$R^{21}$ et $R^{22}$ signifient indépendamment l'un de l'autre hydrogène, alkyle, cycloalkyle, alcényle, alcynyle, aryle, carboxylate, alcoxy, alcényloxy, alcynyloxy, aryloxy, alcoxycarbonyle, alkylamino, alkylthio, alkylsulfonyle ou alkylsulfinyle, qui sont chacun substitués par un ou plusieurs radicaux choisis parmi alkyle, halogène, alcoxy, aryle ou hétéroaryle, et

(vi) un catalyseur de la formule suivante, dans laquelle Mes représente à chaque fois 2,4,6-triméthylphényle,

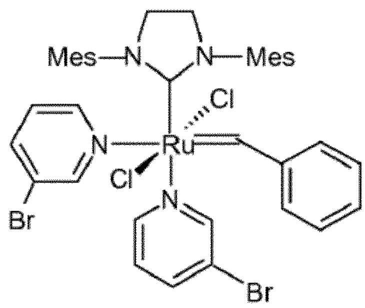

est utilisé en tant que catalyseur complexe.

**7.** Procédé selon la revendication 5 ou 6, **caractérisé en ce que** la quantité de catalyseur utilisé, par rapport au caoutchouc de nitrile partiellement hydrogéné utilisé, est de 5 à 1 000 ppm de métal noble, de préférence de 10 à 500 ppm et notamment de 25 à 250 ppm.

**8.** Procédé selon la revendication 5 ou 6, **caractérisé en ce que** la concentration du caoutchouc de nitrile partiellement hydrogéné dans le mélange réactionnel se situe dans la plage allant de 1 à 20 % en poids, de préférence dans la plage allant de 5 à 15 % en poids.

**9.** Procédé selon la revendication 5 ou 6, **caractérisé en ce que** la réaction de métathèse est réalisée à une température dans la plage allant de 20 °C à 150 °C, de préférence dans la plage allant de 25 à 100 °C et notamment dans la plage allant de 30 à 90 °C.

**10.** Mélanges vulcanisables, contenant

(i) au moins un caoutchouc de nitrile partiellement hydrogéné ayant un degré d'hydrogénation dans la plage allant de 50 à 97 %, qui présentent un quotient entre la viscosité en solution (LV) divisée par la moyenne en poids du poids moléculaire (Mw) dans la plage allant de $4*10^{-3}$ à $30*10^{-3}$ Pa*s*mol/kg, le poids moléculaire et la viscosité en solution étant déterminés par les procédés indiqués dans la description, et
(ii) au moins un système de réticulation peroxydique.

**11.** Mélanges vulcanisables selon la revendication 10, **caractérisés en ce qu'**ils contiennent en outre (iii) au moins une charge et/ou (iv) un ou plusieurs autres additifs supplémentaires.

**12.** Procédé de fabrication des mélanges vulcanisables selon la revendication 10 ou 11, selon lequel le caoutchouc de nitrile partiellement hydrogéné (i) est mélangé avec au moins un système de réticulation peroxydique (ii), éventuellement au moins une charge (iii) et/ou un ou plusieurs autres additifs supplémentaires (iv).

**13.** Procédé de fabrication de vulcanisats, qui est **caractérisé en ce que** le mélange vulcanisable selon la revendication 10 ou 11 est réticulé par élévation de la température, de préférence par un procédé de façonnage, de manière particulièrement préférée en utilisant le moulage par injection.

**14.** Vulcanisat pouvant être obtenu par le procédé selon la revendication 13.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 9706185 A
- WO 2006127483 A
- WO 02100905 A
- WO 02100941 A
- WO 03002613 A
- WO 9604289 A
- EP 1760093 A
- EP 1826220 A
- EP 2028194 A
- EP 2027920 A
- EP 1825913 A
- EP 1894946 A
- EP 2027919 A
- EP 2030988 A
- EP 2145681 A
- EP 2145680 A
- WO 0071554 A
- EP 1426383 A
- US 3700637 A
- DE 2539132 A
- EP 0134023 A
- DE OS3541689 A
- DE OS3540918 A
- EP 0298386 A
- DE OS3529252 A
- DE OS3433392 A
- US 4464515 A
- US 4503196 A
- EP 0471250 A
- US 4631315 A
- US 6683136 A
- WO 03011455 A
- WO 2004112951 A
- US 20020107138 A1
- WO 2004035596 A
- WO 2003011455 A1
- WO 2003087167 A2
- WO 9701597 A
- US 4857571 A
- US 4826721 A


### In der Beschreibung aufgeführte Nicht-Patentliteratur


- *Platinum Metals Rev.,* 2005, vol. 49 (3), 123-137
- **R. PARG ; C. WRANA ; D. ACHTEN ; NOVEMBER 2004.** Therban® Advanced Technology - The new low molecular weight NBR. *Vortrag beim Kautschuk-Herbst-Kolloquium in Hannover*
- **J. ISMEIER.** Therban® AT - Ein neues Polymer für Dichtungen im Motorraum. *Vortrag bei der DKG-Tagung der Bezirksgruppe Süd- und Südwestdeutschland,* 02. Juni 2005
- *Kautschuke + Gummi Kunststoffe,* 1989, vol. 42 (2), 107-110
- *Kautschuke + Gummi Kunststoffe,* 1989, vol. 42 (3), 194-197
- *Angew. Chem. Int. Ed.,* 2003, vol. 42, 4592
- *Eur. J. Org. Chem,* 2003, 963-966
- *Angew. Chem. Int. Ed.,* 2002, vol. 41, 4038
- *J. Org. Chem.,* 2004, vol. 69, 6894-96
- *Chem. Eur. J,* 2004, vol. 10, 777-784
- *Angew. Chem. Int. Ed.,* 2004, vol. 43, 6161-6165
- *Organometallics,* 2001, vol. 20, 5314
- *J. Org. Chem.,* 2004, vol. 69, 6894-6896